# EUROPÄISCHE PATENTSCHRIFT

(11) **EP 3 349 963 B1**
(45) Veröffentlichungstag und Bekanntmachung des Hinweises auf die Patenterteilung: **13.11.2019**
(21) Anmeldenummer: 16774855.7
(22) Anmeldetag: 12.09.2016
(51) Int. Cl.: B29C 51/16, B29C 51/42

(54) **VERFAHREN UND VORRICHTUNG ZUR HERSTELLUNG EINES MIT EINEM SCHICHTSTOFF KASCHIERTEN 3D-SUBSTRATES**
METHOD AND DEVICE FOR PRODUCING A 3-D SUBSTRATE LAMINATED WITH A LAYER MATERIAL
PROCÉDÉ ET DISPOSITIF POUR LA PRODUCTION D'UN SUBSTRAT 3D CONTRECOLLÉ PAR UN STRATIFIÉ

(30) Priorität: 18.09.2015 DE 102015012242
(43) Veröffentlichungstag der Anmeldung: 25.07.2018
(73) Patentinhaber: LEONHARD KURZ Stiftung & Co. KG, 90763 Fürth (DE)
(72) Erfinder: DREXLER, Christian, 82467 Garmisch-Partenkirchen (DE); NIEBLING, Curt, 82377 Penzberg (DE)
(74) Vertreter: Zinsinger, Norbert
(86) Internationale Anmeldenummer: PCT/EP2016/001536
(87) Internationale Veröffentlichungsnummer: WO 2017/045752

(56) Entgegenhaltungen:
- EP-A1- 1 524 094
- EP-A1- 2 732 952
- JP-A- 2006 225 229

## Beschreibung

### TECHNISCHES GEBIET

Die vorliegende Erfindung betrifft ein Verfahren zur Herstellung eines, mit einem Schichtstoff kaschierten 3D-Substrates. Ferner bezieht sich die Erfindung auf eine Vorrichtung zur Durchführung dieses Verfahrens.

"3D-Substrat" bezeichnet hier einen Körper mit einer dreidimensional gestalteten Oberflächenkontur. Der Schichtstoff kann einlagig oder mehrlagig ausgebildet sein. Ein typischer bevorzugter Schichtstoff enthält wenigstens eine Kunststofffolie, die beispielsweise bestehen kann aus Polycarbonat (PC), Acrylnitril-Butadien-Styrol-Terpolymeren (ABS), PC/ABS-Blends, Poly(meth)acrylat (PMMA), Polyester (PE), Polyamid (PA), Polypropylen (PP), Polyarylsulfon (PSU) oder Polyvinylchlorid (PVC).

Die Kaschierung mit einem solchen Schichtstoff verleiht dem 3D-Substrat ein dekoratives Aussehen und erhöht dessen Gebrauchswert. Produkte des erfindungsgemäßen Verfahrens sind beispielsweise Innenausstattungsteile für Kraftfahrzeuge, Bestandteile der Kfz-Karosserie, wie etwa Spoiler und Stoßfänger, Applikationen und sonstige Bestandteile von Möbeln sowie Gehäuse und/oder Bestandteile sonstiger dekorativer hochwertiger Gebrauchsgegenstände.

Mehr im Einzelnen betrifft die Erfindung ein Verfahren nach dem Oberbegriff von Anspruch 1.

### ZUM STAND DER TECHNIK

Von Takayuki MIURA wird in NIHON GAZO GAKKAISHI (Journal of the Imaging Society of Japan), Band 48 (2009), Nr. 4, Seiten 277 - 284 beschrieben "The Development and Progress of the Three-Dimensional Overlay Method (TOM)". In der Fachwelt wird dieses Verfahren auch als TOM-Prozess bezeichnet.

In diesem Artikel wird unter anderem ausgeführt:

### 4. Aufbringung einer dekorativen Beschichtung

### 4.1 Dreidimensionales Beschichtungs- bzw. Überzugs-Verfahren (Three dimension Overlay Method = TOM method)

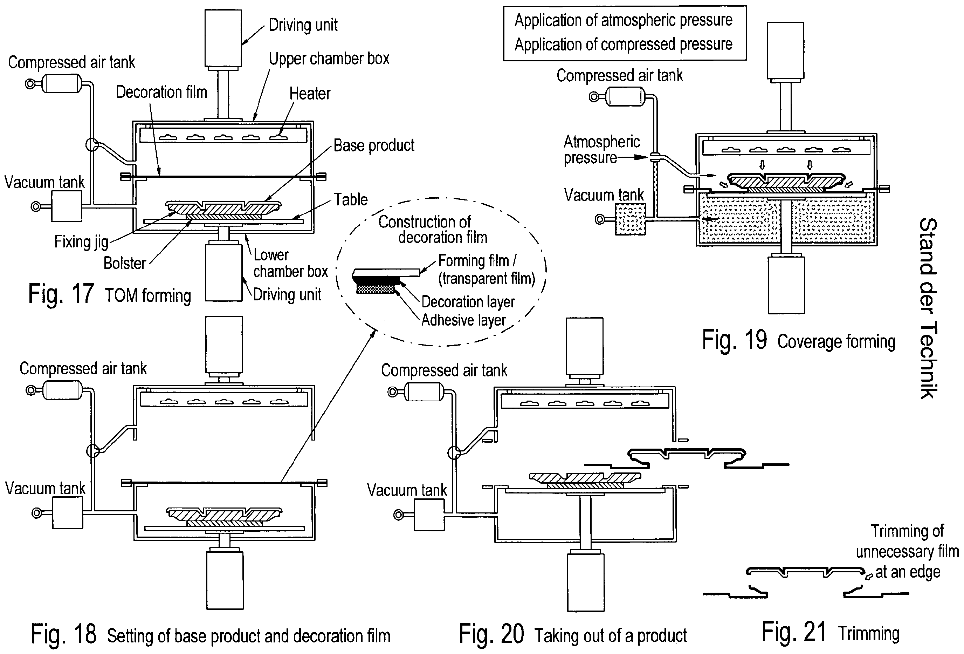

Vorstehend ist eine allgemeine Einführung in das Thermoformen beschrieben. Wird beim Thermoformen das Formwerkzeug (" the mold") durch das zu dekorierende Objekt bzw. "Substrat" ersetzt, dann kommt man zum "TOM-Prozess", nämlich zu einem Oberflächendekorierungsverfahren mit Hilfe eines Schichtstoffes;
TOM-Prozess resultiert aus dem Umformungsverfahren, "NGF" ("NGF" steht für Next Generation Forming"). TOM-Prozess und seine Durchführung werden nachstehend erläutert:
Zuerst wird auf dem Tisch in der unteren Werkzeughälfte eines "NGF"-Formwerkzeugs eine Halterung zur Aufnahme des Substrates eingesetzt; das Substrat wird in diese Halterung eingesetzt (vgl. Fig. 17).

Der Schichtstoff wird über dem Substrat in einer Schichtstoff-Umformungsposition angebracht. Der hier verwendete Schichtstoff hat einen bestimmten dreischichtigen Aufbau, nämlich eine Haut aus einer thermoplastischen Folie, eine Zwischenschicht aus einer dekorativen Lage, etwa einer bedruckten Folie oder einem sonstigen Beschichtungsmaterial, und einer rückwärtigen Lage aus einer Klebemittel-Schicht (vgl. Fig. 18).

An diesem Schichtstoff wird die übliche "NGF"-Umformung durchgeführt; hierzu wird die obere Werkzeughälfte abgesenkt; sowohl im Innenraum der oberen Werkzeughälfte, wie im Innenraum der unteren Werkzeughälfte wird der Druck abgesenkt ("decompression"); die in der oberen Werkzeughälfte befindlichen Heizstrahler werden aktiviert ("heating"); der in der unteren Werkzeughälfte befindliche Tisch mit dem darauf befestigten Substrat wird angehoben ("thrusting up the mold"); lediglich in den in der oberen Werkzeughälfte befindlichen Innenraum (Druckglocke) wird Luft von Atmosphärendruck oder Druckluft eingeführt, um den Schichtstoff an das Substrat anzulegen (vgl. Fig. 19); und das Produkt wird in einem Zustand entnommen, wo die Haut (des Schichtstoffes) an das Substrat angeklebt worden ist (vgl. Fig. 20).

Anschließend werden die unnötigen Teile des Schichtstoffes entfernt (vgl. Fig. 21).

Mit diesem Verfahren können auch Hinterschneidungen am Substrat beschichtet sowie Einschnitte und Taschen (Vertiefungen) in der Substratoberfläche ausgekleidet werden, was mit den bislang üblichen Dekorierungsverfahren nicht möglich war.

Obige Ausführungen finden sich auch im Japanischen Patent JP 03937231 B.

Das Dokument JP 2006 225229 A offenbart ein Verfahren und eine Vorrichtung zur Herstellung eines transparenten Elements.

Das ungeprüfte, veröffentlichte Dokument JP 2006225229 A betrifft ein Verfahren und eine Vorrichtung zur Herstellung eines transparenten Gegenstandes. Eine Platte aus transparentem Kunststoff soll einfach und leicht über einen transparenten Kunstharzkleber an eine mineralische Glasplatte angebracht werden. Mehr im Einzelnen wird hier offenbart die Warmumformung einer transparenten Kunststoffplatte, beispielsweise einer 5 mm starken Polycarbonatplatte, und die Anbindung der erwärmten Platte an eine, mit aktiviertem Kleber versehene Oberfläche einer gebogenen, aus mineralischem Glas bestehenden, beispielsweise 2 mm starken Glasplatte zur Erzeugung einer Frontscheibe für ein Kraftfahrzeug; bei dieser Anbindung liegt die Glasplatte an einer, eine gleiche Kontur aufweisenden Form an, die aus Metall bestehen kann. Die Erwärmung der innerhalb eines Gehäuses eingespannten und vertikal ausgerichteten Kunststoffplatte erfolgt zwischen zwei mobilen, vertikal ausgerichteten und mit IR-Heizstrahlern bestückten Heizstrahler-Anordnungen, die je aus einem unterhalb des Gehäuses angeordneten und vertikal ausgerichteten Rückzugsraum angehoben werden, bis sie eine, mit der vertikal ausgerichteten Kunststoffplatte deckungsgleiche Anordnung eingenommen haben. Anschließend werden die beiden Heizstrahler-Anordnungen wieder in ihre, parallel nebeneinander angeordneten Rückzugsräume abgesenkt, und die erwärmte Kunststoffplatte wird mit Hilfe einer Luftdruckdifferenz an die, von der Form gehaltene und mit Kleber versehene, Glasplatte angeformt und angepresst.

Das Dokument DE 10 2010 021 892 B4 betrifft ein Verfahren und eine Vorrichtung zur Kaschierung eines 3D-Trägerteils mit einem Schichtstoff; dort wird auch weiterer, einschlägiger Stand der Technik referiert.

In der Zwischenzeit werden Anlagen zur Durchführung von TOM-Prozess handelsüblich angeboten, beispielsweise von
Fu-Se Vacuum Forming Ltd., 2-103 Komagatani, Habikino-shi, JAPAN.

Das aktuelle Modell NGF-0512-S ist hier im Frühjahr 2015 geprüft worden. Dieses Modell verwirklicht Labor- bis Technikumsstandard. Es ist eine erhebliche Mitwirkung einer Bedienungsperson erforderlich, beispielsweise zum Anbringen des Schichtstoffes am Formwerkzeug, zur Aktivierung einer Heizung in der geschlossenen Druckglocke und zur Aktivierung weiterer Maschinenfunktionen. Ein Kaschierungszyklus dauert wenigstens etwa 300 sec oder länger.

### AUFGABE DER VORLIEGENDEN ERFINDUNG

Davon ausgehend besteht die Aufgabe der vorliegenden Erfindung darin, ein für den gewerblichen oder industriellen Einsatz geeignetes Verfahren zur Kaschierung eines 3D-Substrates mit einem Schichtstoff bereit zu stellen, das eine Zykluszeit kleiner 120 sec, weiter bevorzugt kleiner 60 sec ermöglicht. Weiterhin soll eine kompakte und effiziente Vorrichtung zur Durchführung eines solchen Verfahrens bereitgestellt werden.

### DIE ERFINDUNGSGEMÄSSE LÖSUNG

Ein erster Gesichtspunkt der vorliegenden Erfindung betrifft ein Verfahren nach Anspruch 1.

Eine Abstrahlung nach oben sowie eine Abstrahlung nach unten erfolgt je in vertikaler Richtung. Folglich befinden sich bei bestimmungsgemäßem Gebrauch die aktivierbaren und nach oben abstrahlenden Heizstrahler, sowie die aktivierbaren und nach unten abstrahlenden Heizstrahler an wenigstens einer, horizontal oder weitgehend horizontal ausgerichteten Heizstrahler-Anordnung, die aus wenigstens einem, an der Werkzeugwanne angebrachten und horizontal oder weitgehend horizontal ausgerichteten Rückzugsraum in den Zwischenraum zwischen Schichtstoff und dem zu kaschierenden 3D-Substrat verfahren wird. "Weitgehend horizontal ausgerichtet" meint hier eine Ausrichtung, die weniger als 12° von der horizontalen Ausrichtung abweicht.

Die zeitweilige Einbringung einer, mit nach oben abstrahlenden Heizstrahlern sowie mit nach unten abstrahlenden Heizstrahlern bestückten Heizstrahler-Anordnung in den Zwischenraum zwischen Schichtstoff und 3D-Substrat schafft optimale Bedingungen zur Erwärmung von Schichtstoff und 3D-Substrat. Die nach oben abstrahlenden Heizstrahler können unabhängig von den nach unten abstrahlenden Heizstrahlern betrieben werden und können optimal nach den Bedürfnissen von Schichtstoff und Kleber betrieben werden. Die nach unten abstrahlenden Heizstrahler ermöglichen eine gezielte Erwärmung der Oberfläche des 3D-Substrates, was die Reaktion und Haftung zwischen 3D-Substrat-Oberfläche und Kleber verbessert. Der gesamte Erwärmungsvorgang kann erheblich beschleunigt werden, was wiederum eine Verringerung der Zykluszeiten ermöglicht.

Vorzugsweise ist dabei vorgesehen, dass als Heizstrahler IR-Flächenstrahler eingesetzt werden, die als Heizelement eine Metallfolie enthalten, die bei Stromdurchgangzum Glühen bringbar ist. Derartige Metallfolien erreichen innerhalb von 8 bis 10 sec ihre Nennleistung und Betriebstemperatur von angenähert 800 °C ; innerhalb einer Zeitspanne kleiner 5 sec kann eine Abkühlung auf eine Temperatur von etwa 200 °C erreicht werden. Derartige IR-Flächenstrahler liefern hohe Strahlungsintensität bei kurzen Reaktionszeiten. Solche IR-Flächenstrahler sind hervorragend geeignet als Heizstrahler für eine Heizstrahler-Anordnung, die mit desaktivierten Heizstrahlern in einem Rückzugsraum gehalten wird, daraufhin zeitweilig in den Zwischenraum zwischen Schichtstoff und 3D-Substrat verfahren wird, wo die Heizstrahler aktiviert werden und Schichtstoff und 3D-Substrat außerordentlich rasch erwärmen. Es kann eine ausreichende Erwärmung des Schichtstoffes und Aktivierung des Klebers innerhalb einer Aufheizdauer kleiner 30 sec, vorzugsweise kleiner 20 sec realisiert werden, was wiederum Zykluszeiten kleiner 120 sec, vorzugsweise kleiner 60 sec ermöglicht.

Sofern UV-härtende Klebstoffe eingesetzt werden, sind an der Heizstrahler-Anordnung zusätzlich aktivierbare, nach oben abstrahlende UV-Strahler oder UV-Lampen angebracht. Je nach Dicke der strahlungshärtenden Kleberschicht und Intensität der UV-Strahlung kann hier eine Aushärtung innerhalb weniger Sekunden erzielt werden.

Die gezielte Erwärmung von Schichtstoff und 3D-Substrat mit Hilfe einer Heizstrahler-Anordnung, die zeitweilig innerhalb der Werkzeugwanne im Zwischenraum zwischen Schichtstoff und 3D-Substrat angeordnet wird, erfolgt bei einem Druckmitteldruck kleiner/gleich 30 kPa; 30 kPa steht für 30.000 Pascal, das sind 225 Torr oder 300 mbar. Die weitgehende Entlüftung des Innenraumes der Werkzeugwanne, bevor der zu verformende Schichtstoff mit dem Druckmitteldruck von 2 bis 18 bar beaufschlagt wird, bringt verschiedene Vorteile:
- Die Verstellung des Schichtstoffes wird nicht durch die anfänglich in diesem Raum befindliche Luft behindert, die typischerweise durch irgendwelche engen Kanäle entweichen müsste.
- Lufteinschlüsse zwischen Schichtstoff und 3D-Substrat werden vermindert oder völlig beseitigt.
- Die Aktivierung des Klebers kann in einer, an Sauerstoff abgereicherten Umgebung erfolgen.
- Irgendwelche, bei der Aktivierung des Klebers auftretende Ausgasungen werden entfernt, bevor der Schichtstoff das 3D-Substrat kontaktiert.
- Die Haftung und Klebefestigkeit des Schichtstoffes an dem 3D-Substrat wird verbessert.
- Die Variationsbreite der herstellbaren kaschierten Produkte wird erweitert, und die Qualität der Kaschierung wird verbessert.

Ein zweiter Gesichtspunkt der vorliegenden Erfindung betrifft eine Vorrichtung nach Anspruch 13.

Mit einer solchen Vorrichtung kann das erfindungsgemäße Verfahren sicher durchgeführt werden. Es werden die vorstehend angegebenen Vorteile erzielt.

### BEVORZUGTE AUSFÜHRUNGSFORMEN

Weitere, mit der vorliegenden Erfindung erzielbare Vorteile und Verbesserungen ergeben sich aus der nachfolgenden detaillierten Beschreibung. Vorteilhafte Ausgestaltungen und Weiterbildungen des erfindungsgemäßen Verfahrens sowie der erfindungsgemäßen Vorrichtung sind Gegenstand der Unteransprüche.

So kann vorzugsweise vorgesehen werden, dass nach Beendigung der erfindungsgemäßen Wärmebehandlung und nach Zurückfahren der Heizstrahler-Anordnung in ihren Rückzugsraum der Tisch bis in seine obere Totstellung angehoben wird, wobei das 3D-Substrat die Schichtstoff-Ebene durchdringt und den erwärmten Schichtstoff zeltartig mit sich führt, während im Druckglocken-Innenraum weiterhin der Druckmitteldruck kleiner/gleich 30 kPa herrscht. Die Umformung des Schichtstoffes und dessen Anlage an die 3D-Substratoberfläche wird im Sinne einer Positivformung graduell und schonend durchgeführt. Die Hubgeschwindigkeit des Tisches kann an die Gegebenheiten angepasst werden. Eine übermäßige Dehnung des Schichtstoffes mit unerwünschter Materialwanderung kann vermieden werden.

Nach einer weiteren vorteilhaften Ausgestaltung dieser Arbeitsweise ist vorgesehen, dass zu einem Zeitpunkt, wo der Tisch seine obere Totstellung erreicht hat und die erste Stufe der Schichtstoffumformung beendet ist, in den Druckglocken-Innenraum ein fluides Druckmittel, insbesondere Druckluft eingeführt wird, um im Druckglocken-Innenraum einen Druckmitteldruck von 2 bis 18 bar einzustellen. Zu diesem Zeitpunkt herrscht an der Anlageseite des 3D-Substrates noch der verminderte Druckmitteldruck kleiner/gleich 30 kPa. Der erhöhte auf den Schichtstoff einwirkende Druckmitteldruck legt den Schichtstoff getreu und schonend auch an feinste Details der 3D-Substratoberfläche an. Hinterschneidungen können sicher beschichtet werden, und Vertiefungen in der 3D-Substratoberfläche können vollständig ausgekleidet werden.

Nach einer weiteren vorteilhaften Ausgestaltung dieser Arbeitsweise kann vorzugsweise vorgesehen werden, dass die Beaufschlagung des Schichtstoffes oder einer, mit dem Schichtstoff-Zuschnitt versehenen Transferfolie mit dem erhöhten Druckmitteldruck unter dem angewandten erhöhten Druckmitteldruck wenigstens noch zwei Sekunden lang unter dem gleichen Druckmitteldruck fortgesetzt wird, nachdem der Schichtstoff oder diese Transferfolie das 3D-Substratl erstmalig kontaktiert hat. Weiter bevorzugt kann diese Beaufschlagung noch fünf Sekunden lang fortgesetzt werden, nachdem der Schichtstoff oder diese Transferfolie das 3D-Substrat erstmalig kontaktiert hat. Beispielsweise kann diese Beaufschlagung des Schichtstoffes oder dieser Transferfolie mit dem erhöhten Druckmitteldruck unter dem angewandten erhöhten Druckmitteldruck zwei bis dreißig Sekunden lang fortgesetzt werden, nachdem der Schichtstoff oder diese Transferfolie das 3D-Substrat erstmalig kontaktiert hat. Der über mehrere Sekunden lang unvermindert fortgesetzte Anpressdruck des fluiden Druckmittels an dem Schichtstoff gewährleistet eine sichere Verklebung zwischen Schichtstoff und 3D-Substratoberfläche. Die Klebefestigkeit dieser Klebeverbindung kann gesteigert werden.

Als 3D-Substrat kommen irgendwelche Gegenstände in Betracht, die eine dreidimensional konfigurierte Hülle oder Schale haben, deren Oberfläche mit einem fest haftenden Schichtstoff beschichtet bzw. kaschiert werden soll. Typischerweise ist diese Hülle oder Schale an einer Stützkonstruktion abgestützt, die später auch für die Anbringung und Befestigung des kaschierten Produktes am Einsatzort sorgt. Derartige Trägerteile können aus einem Metall, vorzugsweise aus einem Leichtmetall, hier beispielsweise aus Al- oder Mg-Werkstoffen bestehen oder aus stabilen und dauerhaften Kunststoffen bestehen, ferner aus Holz und anderen stabilen und dauerhaften Werkstoffen bestehen. Sofern das 3D-Substrat aus einem Kunststoff besteht, kommen hierfür vorzugsweise thermoplastische, im Spritzgussverfahren verarbeitbare Kunststoffe in Betracht, wie etwa
- Polyamide (PA),
- Acrylnitril-Butadien-Styrol-Terpolymere (ABS),
- Acrylester-Butadien-Styrol-Terpolymere (ASA),
- Polymethlenoxid (POM),
- Polyvinylchlorid (PVC) und
- Polyarylensulfon (PSU).

Aus diesen und weiteren, ähnlichen Materialien werden vorab im Spritzgussverfahren einstückige Spritzgussteile erzeugt, die anschließend nach dem erfindungsgemäßen Verfahren mit einem Schichtstoff kaschiert werden.

Ein typischer Schichtstoff wird aus einem Verbund mehrerer Lagen bestehen und wird zusätzlich zu anderen wahlweise vorgesehenen Schichtmaterialien, wie etwa Metallfolien, Holzfurnierschichten, hier insbesondere Edelholzfurniere, Leder, Kunstleder, wie etwa ALCANTARA (ALCANTARA® ist eine geschützte Marke), ferner textilen Stoffen, wie etwa Web-, Strick- oder Wirkwaren sowie Vliesstoffen, je aus Natur- und/oder Kunstfasern, wenigstens eine Kunststofffolie enthalten. Derartige Kunststofffolien können transparent sein oder wenigstens teilweise bedruckt, metallisiert und/oder sonst wie beschichtet sein. Ein Folienverbund kann sowohl klare transparente Folien und durchsichtige gefärbte Folien, wie wenigstens teilweise bedruckte, metallisierte oder sonst wie beschichtete Folien enthalten. Die Metallisierung auf einer Folie kann auch in Form aufgedruckter oder sonst wie aufgebrachter Leiterbahnen vorliegen, vorzugsweise längs mäanderförmiger, leicht verstreckbarer Linien, um Dehnungen der Folie ohne Rissbildung der schmalen Leiterbahnen standzuhalten. Solche Leiterbahnen ermöglichen die Stromversorgung von LEDs, die ebenfalls in den Schichtstoff integriert sein können oder sich am 3D-Substrat befinden können.

Vorzugsweise ist wenigstens eine Kunststofffolie vorgesehen, die aus einem thermoplastischen Kunststoff besteht, der ausgewählt ist aus einer Gruppe, die umfasst:
- Polycarbonate oder Copolycarbonate auf der Basis von Diphenolen,
- Poly- oder Copolyacrylate,
- Poly- oder Copolymethacrylate,
- Polymere oder Copolymere mit Styrol, hier insbesondere Acrylnitril-Butadien-Styrol-Terpolymere,
- thermoplastische Polyurethane,
- Polyolefine,
- Poly- oder Copolykondensate der Terephthalsäure,
- Polyester wie (Alkyl)terephthalate oder (Alkyl)naphthenate,
- ferner Mischungen oder Blends aus diesen Materialien.

Vorzugsweise wird eine Kunststofffolie eingesetzt, die eine Schichtdicke von 20 µm bis 1000 µm hat, besonders bevorzugt eine Schichtdicke von 50 µ bis 500 µm hat. Weiterhin kann vorzugsweise eine solche Kunststofffolie eingesetzt werden, die auf der zum 3D-Substrat abgewandten Sichtseite eine strukturierte Oberfläche hat. Es können besondere, dekorative Effekte erzielt werden.

Beim erfindungsgemäßen Verfahren werden aktivierbare Kleber eingesetzt. In Frage kommen hier thermisch aktivierbare Klebemassen oder UV-härtende Klebemassen oder sowohl thermisch aktivierbare und strahlungshärtende Klebemassen. Thermisch aktivierbare Klebemassen haben vorzugsweise eine Aktivierungsungstemperatur im Bereich von 60 bis 140 °C, noch weiter bevorzugt eine Aktivierungstemperatur im Bereich von 75 bis 130 °C. Geeignete thermisch aktivierbare Klebemassen sind beispielsweise in dem Dokument DE 10 2006 042 816 A1 beschrieben. Die dort beschriebenen thermisch aktivierbaren Klebemassen werden vorzugsweise eingesetzt.

UV-härtende Materialien für Klebemassen sind beispielsweise in dem Dokument DE 103 21 585 A1 beschrieben. Sie enthalten typischerweise Polymere aus (Meth)acrylaten, Urethanacrylaten, Epoxyacrylaten und deren Mischungen. Solche Polymere können einen (oder mehrere) freien Photoinitiator, und/oder einen (oder mehrere) copolymerisierbaren Photoinitiator und/oder einen (oder mehrere) bereits im Oligomer oder Polymer enthaltenen Phototoinitiator enthalten. Die Photohärtung erfolgt durch aktinische Strahlung. Hierbei lösen unter UV-Licht Radikal-bildende Verbindungen eine UV-initiierte Polymerisation aus. Je nach Intensität der UV-Strahlung und Schichtdicke der UV-härtenden Klebemasse kann innerhalb weniger Sekunden eine ausreichende Härtung erzielt werden. UV-härtende Klebemassen für Folien sind bekannt und im Fachhandel erhältlich. Die zur UV-Härtung erforderliche aktinische Strahlung kann vorzugsweise mit Hilfe schnell einschaltbarer und schnell ausschaltbarer UV-LED-Systeme erzeugt und bereitgestellt werden.

Der Schichtstoff hat eine zum 3D-Trägerteil entfernte Sichtseite sowie eine zum 3D-Substrat benachbarte Anlageseite. Die aktivierbare Klebemasse ist lediglich auf der Anlageseite des Schichtstoffes aufgebracht. Auf dem anfänglich ebenen Schichtstoff kann die aktivierbare Klebemasse vorzugsweise mit Hilfe von Siebdruck, Transferdruck, Direktbeschichtung oder dergleichen aufgebracht werden. Menge, Schichtdicke und Verteilung der aufgebrachten Klebemasse können leicht kontrolliert werden und an die Klebebedürfnisse eines bestimmt geformten 3D-Substrates angepasst werden. Mit Hilfe der nach oben abstrahlenden Heizstrahler und gegebenenfalls UV-Strahler an der in den Zwischenraum zwischen und 3D-Substrat eingefahrenen Heizstrahler-Anordnung kann die auf der Anlageseite des Schichtstoffes aufgebrachte, beispielsweise 20 bis 50 µm dicke Klebemassenschicht schnell, gezielt und genau kontrollierbar aufgeheizt und aktiviert werden. Die aktivierte Klebemassenschicht wird an die ebenfalls gezielt und bestimmt erwärmte 3D-Substratoberfläche angelegt. Es kann eine optimale Verklebung mit guter Haftung erzielt werden. Alternativ könnten lösemittelfreie Schmelzklebstoffe auf der Basis thermoplastischer Urethane, die in Form von Schmelzklebefolien oder -vliese erhältlich sind, in dieser Form gezielt auf der Anlageseite des Schichtstoffes aufgebracht werden und thermisch und/oder mit Hilfe aktinischer Strahlung aktiviert werden.

Nach einer weiteren, bevorzugten Ausführungsform des erfindungsgemäßen Verfahrens ist ein auf das 3D-Substrat abgestimmter Zuschnitt aus dem Schichtstoff auf einer Transferfolie abgelegt. Lediglich diese Transferfolie wird in einer, die beiden Werkzeughälften druckdicht voneinander trennenden Weise zwischen den beiden Dichtflächen von Druckglocke und Werkzeugwanne eingespannt. Bei Beaufschlagung mit dem fluiden Druckmittel unter erhöhtem Druckmitteldruck von 2 bis 18 bar trifft das Druckfluid auf die Transferfolie, und der von der Transferfolie gehaltene Schichtstoff-Zuschnitt wird auf das 3D-Substrat abgewickelt.

Solche Zuschnitte können vorzugsweise Lagen aus Metall, aus Holz, hier beispielsweise Edelholzfurnier, aus Leder, aus Kunstleder, aus textilen Stoffen, wie etwa Web-, Strick- oder Wirkwaren sowie Vliesstoffe aus Natur- und/oder Kunstfasern und dergleichen enthalten, neben einer oder mehreren Lage(n) Kunststofffolie(n), die besondere Glanzeffekte verursachen. Der Zuschnitt kann eine auf das 3D-Substrat abgestimmte Größe haben und muss nicht den gesamten Querschnitt des Formwerkzeugs ausfüllen. Die Transferfolie dient als Träger für den Schichtstoff. Die Transferfolie kann aus einem hochelastischen Folienmaterial bestehen, das durch eigene Dehnung die Flächenzunahmen bereitstellt, die für Anformung und Abwicklung des Zuschnitts am 3D-Substrat benötigt werden. Dehnung und sonstige Beanspruchung des Zuschnitts wird vermindert oder weitgehend beseitigt. Transferfolien aus Polyolefin, wie etwa Polyethylen, hier insbesondere LDPE, oder Polypropylen, je mit Schichtdicken von etwa 80 bis 500 µm oder Transferfolien aus thermoplastischen Polyurethanen, PTU (hier beispielsweise die von Bayer MaterialScience vertriebenen DESMOPAN-Folien; DESMOPAN® ist eine geschützte Marke) sind gut geeignet und werden vorzugsweise eingesetzt. Nach Fertigstellung kann eine solche Transferfolie von dem kaschierten Produktes entfernt werden oder bis auf weiteres als zusätzlicher Oberflächenschutz auf der Oberfläche des Schichtstoffes verbleiben. Der Zuschnitt wird an der Transferfolie typischerweise mit Hilfe eines Haftklebers gehalten, der rückstandsfrei von der Sichtseite des Schichtstoffes entfernt werden kann. Geeignete Haftkleber sind bekannt und handelsüblich zugänglich. Eine gute Haftung zwischen Zuschnitt und Transferfolie überträgt die Dehnung der Transferfolie bei der Anlage an das 3D-Substrat wenigstens teilweise auf den Zuschnitt und verhindert so Faltenbildung am Zuschnitt bei der Anformung an das 3D-Substrat.

Die Besonderheit der erfindungsgemäßen Vorrichtung besteht darin, dass an der Werkzeugwanne wenigstens ein Rückzugsraum für wenigstens eine verfahrbar gehaltene Heizstrahler-Anordnung ausgebildet ist, die mit aktivierbaren, nach oben abstrahlenden Heizstrahlern, sowie mit aktivierbaren, nach unten abstrahlenden Heizstrahlern bestückt ist; und
zur Erwärmung des Schichtstoffes diese Heizstrahler-Anordnung
- in der Druckglocken-Schließstellung und nach Einstellung des Druckmitteldruckes kleiner/gleich 30 kPa innerhalb des Werkzeugwannen-Innenraums - aus ihrem Rückzugsraum in den Zwischenraum zwischen Schichtstoff und 3D-Substrat verfahrbar ist; und
mit Hilfe der aktivierten, nach oben abstrahlenden Heizstrahler gezielt der Schichtstoff erwärmt sowie der an der Schichtstoff-Anlageseite befindliche Kleber aktiviert wird; und
mit Hilfe der aktivierten, nach unten abstrahlenden Heizstrahler gezielt die Oberfläche des 3D-Substrates erwärmt wird; und
nach Beendigung dieser Wärmebehandlung diese Heizstrahler-Anordnung wieder in ihren Rückzugsraum zurückfahrbar ist.

Bei einer vorteilhaften Ausgestaltung der erfindungsgemäßen Vorrichtung ist vorzugsweise vorgesehen, dass an zwei gegenüber liegenden Seitenwänden der Werkzeugwanne je ein Kasten angesetzt ist, der je einen, zum Wanneninnenraum hin offenen Rückzugsraum für eine verfahrbar gehaltene "halbe" Heizstrahler-Anordnung begrenzt; und
diese "halben" Heizstrahleranordnungen nach dem Einfahren in den Wanneninnenraum die Heizstrahler-Anordnung bilden.
Eine "halbe" Heizstrahler-Anordnung erfordert einen kleineren Rückzugsraum, der baulich und konstruktiv einfacher zu realisieren ist. Die "halbe" Heizstrahler-Anordnung kann aus dem angepassten Rückzugsraum schneller in den Wanneninnenraum verfahren werden.

Eine Abstrahlung nach oben sowie eine Abstrahlung nach unten erfolgt je in vertikaler Richtung. Folglich ist vorzugsweise vorgesehen, dass sich bei bestimmungsgemäßem Gebrauch die aktivierbaren, nach oben abstrahlenden Heizstrahler, sowie die aktivierbaren, nach unten abstrahlenden Heizstrahler an einer horizontal oder weitgehend horizontal ausgerichteten Heizstrahler-Anordnung befinden, die aus wenigstens einem, an der Werkzeugwanne angebrachten und horizontal oder weitgehend horizontal ausgerichteten Rückzugsraum in den Zwischenraum zwischen Schichtstoff und zu kaschierendem 3D-Substrat verfahrbar ist. Sofern an zwei gegenüber liegenden Seitenwänden der Werkzeugwanne je ein Kasten angesetzt ist, der je einen, zum Wanneninnenraum hin offenen Rückzugsraum für eine verfahrbar gehaltene "halbe" Heizstrahler-Anordnung begrenzt, ist sowohl jeder Kasten und jeder Rückzugsraum sowie jede "halbe" Heizstrahler-Anordnung horizontal oder weitgehend horizontal ausgerichtet. "Weitgehend horizontal ausgerichtet" meint hier eine Ausrichtung, die weniger als 12° von der horizontalen Richtung abweicht.

Nach einer weiteren vorteilhaften Ausgestaltung werden als Heizstrahler vorzugsweise IR-Flächenstrahler eingesetzt werden, deren Heizelement aus mehreren, parallel nebeneinander angeordneten und einen fortlaufenden Leiter bildenden Streifen aus einer temperaturbeständigen Metallfolie besteht, die bei Stromdurchgang zum Glühen bringbar ist und dann eine Temperatur von bis zu etwa 800 °C erreicht, wobei mittelbis langwellige IR-Strahlung im Wellenlängenbereich von 2,6 bis 9,6 µm abgestrahlt wird. Mit Hilfe einer elektronischen Steuerung kann aus diesem gesamten Wellenlängenbereich ein kleinerer Wellenlängenbereich ausgewählt werden und damit am bestrahlten Gut eine Erwärmung auf einen bestimmten ausgewählten Temperaturbereich eingestellt werden. Eine Besonderheit dieser IR-Flächenstrahler mit Heizfolie ist ihre hohe Strahlungsintensität bis zu 50 kW/m² und ihr außerordentlich flinkes Ansprechverhalten; nach dem Einschalten wird bereits innerhalb von 8 bis 10 sec die Nennleistung und eine Betriebstemperatur von angenähert 800 °C erreicht; nach dem Ausschalten fällt die Temperatur innerhalb von 5 sec von 800 °C auf weniger als 200 °C ab. Mini-Infrarot-Strahler dieser Art sind bereits mit Abmessungen von etwa 120 x 120 mm verfügbar, aus denen modulartig die gewünschte Strahlerfläche aufgebaut werden kann. Jeder einzelne Mini-Infrarot-Strahler ist mit einem Pyrometer ausgerüstet, mit dem die Temperatur des bestrahlten Gutes erfasst werde kann, und durch angepasste Ansteuerung des Strahlers die Temperatur im bestrahlten Bereich des Gutes kontrolliert werden kann. Auf diese Weise kann eine regionale Temperaturverteilung am angestrahlten Gut realisiert werden. IR-Flächenstrahler dieser Art werden beispielsweise von KRELUS AG, 5042 Hirschthal, Schweiz vertrieben.

Zur Aktivierung UV-härtender Kleber werden vorzugsweise UV-LED-System eingesetzt, die ein schnelles Ein- und Ausschalten ermöglichen und die bei geringem Platzbedarf eine hohe Bestrahlungsstärke liefern. Geeignete UV-LED-Systeme werden beispielsweise von Heraeus Noblelight GmbH, 63450 Hanau, DE vertrieben. Derartige UV-LED-Systeme können in die erfindungsgemäß vorgesehene Heizstrahler-Anordnung integriert sein.

Ein wichtiges Kriterium der hier betrachteten Formwerkzeuge ist deren Formfläche; diese begrenzt die maximale lineare Abmessung eines 3D-Subtrates, das in einem gegebenen Formwerkzeug kaschiert werden kann. Die Formfläche wird durch die Fläche des absenkbaren Tisches bestimmt. Bevorzugt sind rechteckige Tischflächen mit Abmessungen von etwa 400 mm x 200 mm bis etwa 1000 mm x 500 mm. Damit können Gegenstände kaschiert werden, die eine maximale lineare Abmessung, hier insbesondere Länge von etwa 36 cm bis etwa 96 cm haben. Bei Formflächen kleiner 800 cm² korrespondieren die Kosten für das Formwerkzeug nicht mit dem Wert der zu kaschierenden Güter; bei Formflächen größer 5000 cm² steigen die Kosten für die Hochdruck-taugliche Ausrüstung ganz erheblich an. Noch weiter bevorzugt sind Tischflächen von etwa 540 mm x etwa 360 mm bis etwa 800 mm x 600 mm. In solchen Formwerkzeugen können die in der Praxis häufig anfallenden 3D-Substrate kaschiert werden. Auf einer Tischfläche von 540 mm x 360 mm kann typischerweise stückiger Schichtstoff mit Abmessungen bis zu etwa 580 mm x 380 mm verarbeitet werden.

Nach einer weiteren vorteilhaften Ausgestaltung kann der erfindungsgemäßen Vorrichtung der zur Kaschierung dienende Schichtstoff oder eine Transferfolie mit einem Zuschnitt aus einem solchen Schichtstoff automatisch zugeführt werden. Hierzu ist eine Transporteinrichtung vorgesehen, die nachstehend lediglich für das Zuführen von stückigem Schichtstoff bzw. Schichtstoff-Stücken beschrieben wird.
Diese Transporteinrichtung ist ausgerüstet, mit:
- einem Magazin, das einen Vorrat an Schichtstoff-Stücken bereithält;
- einem, über das Magazin verfahrbaren Transportrahmen, der mit Hilfe von Saugkraft das oberste Schichtstoff-Stück anhebt und festhält;
- dieser, das Schichtstoff-Stück haltende Transportrahmen ist unter die, ihre obere Totstellung einnehmende Druckglocke verfahrbar und dort an die umlaufende Dichtfläche der Druckglocke anlegbar; und
- beim Absenken der Druckglocke hält der an der Druckglocke anliegende Transportrahmen weiterhin das Schichtstoff-Stück fest.

Vorzugsweise kann auch das zu kaschierende 3D-Substrat automatisch zugeführt werden. Hierzu ist eine Transportstrecke für das zu kaschierende 3D-Substrat vorhanden:
- mit einer stationär an der Werkzeugwanne angebrachten und mit einer Lineareinrichtung ausgerüsteten Schiene, längs der wenigstens ein Schlitten ver fahrbar ist, der Transportplatten aus einer Auflegestation zu einer Haltestation transportiert, sowie Transportplatten aus einer Haltestation zu einer Entnahmestation transportiert;
- in der Auflegestation auf die dort befindliche Transportplatte eine Trägerplatte auflegbar ist, die ein zu kaschierendes 3D-Substrat oder mehrere zu kaschierende 3D-Substrate festhält;
- an verfahrbaren Schlitten montierte Hub-und Schwenkarme die in der Haltestation befindliche und ein oder mehrere zu kaschierende(s) 3D-Substrat(e) festhaltende Trägerplatte aus der Haltestation in eine Position unterhalb der angehobenen Druckglocke befördern und
   innerhalb eines Ausschnittes an einem, an der Werkzeugwanne angebrachten Zwischenrahmen auf einer Tischplatte des, seine obere Totstellung einnehmenden, Tisches absetzen; und
- in der Entnahmestation das kaschierte Produkt entnommen wird.

Mit Hilfe einer solchen Transporteinrichtung und/oder mit Hilfe einer solchen Transportstrecke kann die Zyklusdauer zur Kaschierung eines 3D-Substrates erheblich vermindert werden.

Es ist vorteilhaft, wenn die vorstehend erwähnte Trägerplatte
- aus einem stabilen, dauerhaften Kunststoff besteht;
- mit einem Trennmittel, wie beispielsweise TEFLON® beschichtet ist;
- eine eckige, insbesondere rechteckige Fläche hat; und
- in den Eckenbereichen dieser eckigen Fläche magnetisch ansprechendes Material, wie etwa Weicheisen vorhanden ist.

Zum Transport der, ein oder mehrere zu kaschierende(s) 3D-Substrat(e) festhaltenden Trägerplatte aus der Haltestation in eine Position unterhalb der angehobenen Druckglocke sind vorzugsweise Hub-und Schwenkarme vorgesehen, an deren freiem Ende ein aktivierbarer Elektromagnet angebracht ist,
der einen Eckenbereich der Trägerplatte kontaktieren kann; und
durch Aktivierung dieser Elektromagnete die Trägerplatte angehoben wird.
Es wird eine einfache und betriebssichere Einrichtung zur Handhabung und Beförderung der Trägerplatte geschaffen.

Nach einer weiteren vorteilhaften Ausgestaltung der erfindungsgemäßen Vorrichtung ist vorgesehen, dass die ihre untere Totstellung einnehmende Druckglocke mit Hilfe von, an der Druckglocke angebrachten und motorisch verstellbaren Riegelbolzen an, mit der Werkzeugwanne starr verbundenen, aus einer massiven Stahlplatte bestehenden, Rahmen arretierbar ist. Eine solche Arretierung entlastet die Kniehebel-Anordnung, die dann in der Druckglocken-Schließstellung keine Antriebsleistung erbringen muss.

Nach einer weiteren vorteilhaften Ausgestaltung der erfindungsgemäßen Vorrichtung ist zum Anheben der Druckglocke aus ihrer unteren Totstellung in ihre obere Totstellung eine Doppelkniehebel-Anordnung vorgesehen, die zwei, je mit einem separaten Antrieb ausgestattete Kniehebel hat; und
durch Blockierung des einen Kniehebels und Aktivierung des anderen Kniehebels kann die Druckglocke in eine Servicestellung verschwenkt werden, in welcher die umlaufende Dichtfläche der Druckglocke im Wesentlichen vertikal ausgerichtet ist. In dieser Servicestellung ist sowohl der Druckglocken-Innenraum wie der Werkzeugwannen-Innenraum leicht zugänglich, um Reinigungs-, Reparatur- und Servicearbeiten durchzuführen.

### ZEICHNUNGEN

Nachstehend wird die Erfindung mehr im Einzelnen anhand bevorzugter Ausführungsformen mit Bezugnahme auf die Zeichnungen erläutert; die letzteren zeigen:

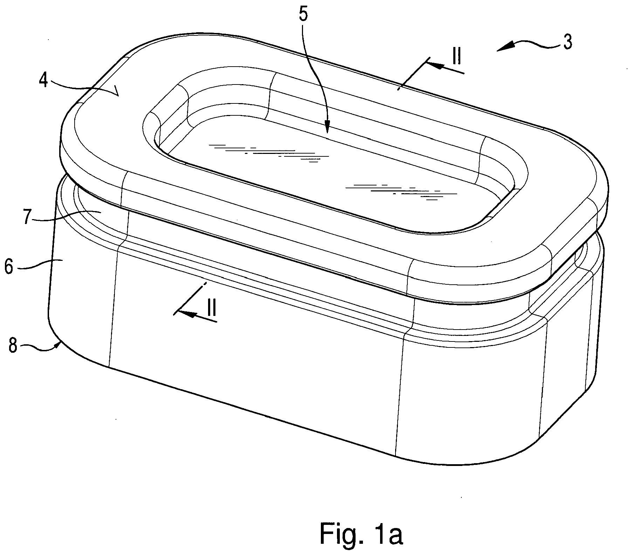

- Fig. 1a: anhand eines Schrägbildes ein als Demonstrationsobjekt dienendes 3D-Substrat;
- Fig.1: b eine Schnittdarstellung längs der Schnittlinie II --- II aus Fig. 1a;
- Fig. 2: anhand eines Schrägbildes in Form einer Übersicht die wesentlichen Bestandteile einer erfindungsgemäßen Anlage zur Kaschierung eines 3D-Substrates mit einem Schichtstoff;
- Fig.3: die Darstellung nach Fig. 2 mit weiteren Bezugszeichen; der Transportrahmen 128 befindet sich über dem Magazin 122;
- Fig. 4: eine abgewandelte Darstellung nach Fig. 2; der Transportrahmen 128 mit anhängendem Schichtstoff-Stück 10 befindet sich unterhalb der Druckglocke 50;
- Fig.5: eine abgewandelte Darstellung nach Fig. 2; das zu kaschierende 3D-Substrat nimmt eine Position unterhalb der angehobenen Druckglocke 50 ein;
- Fig.6: anhand eines Schrägbildes eine virtuelle Schnittdarstellung; eine vordere Seitenwand der Werkzeugwanne 60 ist entfernt, was einen Blick in den Wanneninnenraum 65 ermöglicht; die Druckglocke 50 ist abgesenkt, und ein Schichtstoff-Stück 10 ist zwischen Druckglocke 50 und Werkzeugwanne 60 eingespannt;
- Fig. 7: eine ausschnittsweise, virtuelle Seitenansicht; der Tisch 80 nimmt innerhalb der Werkzeugwanne seine obere Totstellung ein, und auf der Tischplatte 82 befindet sich eine Trägerplatte 168, welche das zu kaschierende 3D-Substrat 3 festhält;
- Fig. 8: eine abgewandelte Darstellung nach Fig. 7; die Absenkung des Tisches 80 hat begonnen;
- Fig. 9: eine abgewandelte Darstellung nach Fig. 7; der Tisch 80 nimmt seine untere Totstellung ein;
- Fig. 10: eine schematische virtuelle Draufsicht auf eine Stirnseite der Vorrichtung; jede "halbe" Heizstrahler-Anordnung 102, 104 befindet sich in ihrem Rückzugsraum 67' bzw. 67";
- Fig. 11: eine abgewandelte Darstellung nach Fig. 10; die beiden "halben" Heizstrahler-Anordnungen 102, 104 sind in den Wanneninnenraum 65 gefahren und bilden dort die Heizstrahler-Anordnung 100 im Zwischenraum 90 zwischen Schichtstoff-Stück 10 und zu kaschierendem 3D-Substrat 3;
- Fig. 12: eine abgewandelte Darstellung nach Fig. 11; an der Oberseite der Heizstrahler-Anordnung 100 befinden sich zusätzliche, aktivierbare, nach oben abstrahlende UV-Strahler 119;
- Fig. 13: eine abgewandelte Darstellung nach Fig. 11; an der Innenseite der Deckenwand 54 der Druckglocke 50 sind zusätzliche Heizstrahler 59 angebracht;
- Fig. 14: eine abgewandelte Darstellung nach Fig. 6; der Tisch 80 nimmt seine obere Totstellung ein, und das Schichtstoff-Stück 10 ist zeltartig über das 3D-Substrat 3 gespannt;
- Fig. 15: eine abgewandelte Darstellung nach Fig. 13; die Druckglocke 50 ist angehoben, und das kaschierte 3D-Substrat 9 sitzt auf seiner Trägerplatte 168, die innerhalb eines Ausschnitts 72 am Zwischenrahmen 70 an der Werkzeugwanne 60 angeordnet ist; eine im Maßstab größere Detaildarstellung zeigt das kaschierte Produkt 9;
- Fig. 16: eine abgewandelte Darstellung nach Fig. 5, welche den Transport des kaschierten Produktes 9 aus dem Formwerkzeug 20 heraus zeigt;
- Fig. 17 bis Fig. 21:: die Abbildungen 17 bis 21 aus dem zum STAND DER TECHNIK zitierten Artikel zum TOM-Prozess;
- Fig. 22 und Fig. 23: abgewandelte Darstellungen nach Fig. 16, die den weiteren Transport des kaschierten 3D-Substrates 9 aus dem Formwerkzeug 20 über die Haltestation 163 bis in die Entnahmestation 165 zeigen;
- Fig. 24 bis Fig. 28: abgewandelte Darstellungen nach Fig. 5, die verschiedene Stelllungen einer Doppelkniehebel-Anordnung 130 und der damit erzeugten Anordnungen der Druckglocke 50 zeigen; und
- Fig. 29: eine abgewandelte Darstellung nach Fig. 28, die einen Blick auf die Druckglocke 50 in ihrer Servicestellung zeigt.

### DETAILLIERTE BESCHREIBUNG DER ERINDUNG

Als 3D-Substrat kommen irgendwelche Gegenstände in Betracht, die eine dreidimensional konfigurierte Hülle oder Schale haben, deren Oberfläche mit einem fest haftenden Schichtstoff beschichtet bzw. kaschiert werden soll. Typischerweise ist diese Hülle oder Schale an einer Stützkonstruktion abgestützt, die später auch für die Anbringung und Befestigung des kaschierten Produktes am Einsatzort sorgt. Derartige Substrate oder Trägerteile können aus einem Metall, beispielsweise einem Leichtmetall wie Aluminium, Magnesium und deren Legierungen, aus Kunststoff, hier etwa aus einem thermoplastischen und im Spritzguss verarbeitbaren Kunststoff wie etwa Polyamid (PA), Acrylnitril-Butadien-Styrol-Terpolymer (ABS), Acrylester-Styrol-Acrylnitril-Terpolymer (ASA), Polyoxymethylen (POM), Polyvinylchlorid (PVC) oder Polyarylensulfon (PSU), ferner aus Holz und anderen stabilen und dauerhaften Werkstoffen bestehen. Für den Einsatz als Innenausstattungsteile in Kraftfahrzeugen werden derartige 3D-Substrate einschließlich ihrer Stützkonstrution vorab typischerweise als einstückige Spritzgussteile im Spritzgussverfahren gefertigt und bestehen dann häufig aus Kunststoffen, wie etwa PA, ABS, ASA, POM, PVC oder PSU.

Der für die Kaschierung ausgewählte Schichtstoff wird vor allem ausgewählt im Hinblick auf die Umformbarkeit mit einem fluiden Druckmittel, insbesondere Druckluft, unter einem Druckmitteldruck von 2 bis 18 bar, auf seine Dauerhaftigkeit, auf seine Schutzfunktion, auf seine Gebrauchstüchtigkeit und insbesondere im Hinblick auf die erzielbaren dekorativen Effekte. Es können einlagige oder mehrlagige Schichtstoffe eingesetzt werden. Die dekorativen Wirkungen können von der Oberfläche des 3D-Substrates ausgehen und durch eine oder mehrere transparente Folienschicht(en) modifiziert werden. Alternativ kann die dekorative Wirkung von einer Lage oder Schicht eines mehrlagigen Schichtstoffes, Laminates oder Verbundstoffes ausgehen, die von einer oder mehreren transparenten Folienschicht(en) modifiziert oder verstärkt wird. Beispielsweise kann die dekorative Wirkung von einer Metallfolie oder einem Edelholzfurnier oder von einer Furniernachbildung aus Kunststoff ausgehen, und diese dekorative Wirkung kann mit Hilfe von transparenten Folien modifiziert und verstärkt werden, auch um bestimmte Glanzeffekte zu erzielen; beispielsweise um eine Klavierlackoptik durch Folieneinsatz zu erzielen, wie in dem Dokument DE 10 2007 054 579 A1 angesprochen. Weiterhin können mehrlagige Schichtstoffe wenigstens teilweise bedruckte, metallisierte und/oder sonst wie beschichtete Folienschichten enthalten, wie das aus dem IMD-Verfahren bekannt ist. Metallisierte Folienschichten sollen auch mit Leiterbahnen versehene Folien einschließen, beispielsweise mit, aus aufgedruckter Silberpaste gebildeten Leiterbahnen oder mit Leiterbahnen aus Metallfolien.

Im Rahmen der vorliegenden Erfindung können die aus dem Dokument DE 199 57 850 A1 bekannten einlagigen oder mehrlagigen Schichtstoffe eingesetzt werden. Sofern solche Schichtstoffe einlagige oder mehrlagige Folienanordnungen enthalten, können die aus dem Dokument EP 0 371 425 B1 bekannten, kalt reckbaren, thermoplastischen oder duroplastischen Folienmaterialien eingesetzt werden; hier werden beispielsweise genannt: Polycarbonate (beispielsweise die von BAYER AG vertriebenen MACROLON-Sorten; MAKROLON® ist eine geschützte Marke), Polyester, hier insbesondere aromatische Polyester (beispielsweise Polyalkylenterephthalate, Polyalkylennaphthenate und dergleichen), ferner Polyamide (hier beispielsweise PA6- oder PA66-Sorten, hochfeste "Aramide-Folien" (Aramide® ist eine geschützte Marke)); ferner Polyimide (beispielsweise die unter der Handelsbezeichnung "CAPTON" [CAPTON® ist eine geschützte Marke] vertriebenen Folien auf der Basis von Poly-(diphenyloxid-pyromellit-imid), sowie Polyarylate, die sich hier gut bewährt haben und vorzugsweise angewandt werden.
Weiterhin können die aus dem Dokument EP 0 691 201 B1 bekannten, 0,02 mm bis 0,8 mm dicken Folien aus thermoplastischem Kunststoff zusammen mit einer 3 µm bis 50 µm dicken Farbschicht eingesetzt werden. Als geeignete Folienmaterialien werden hier unter anderem thermoplastische aromatische Polycarbonate, thermoplastische Polyarylsulfone, thermoplastische Celluloseester, thermoplastische Polyvinylchloride und thermoplastische Styrol-Acrylnitril-Copolymerisate angegeben. Die Farbschicht enthält typischerweise Pigmente, die in einem bestimmten Farbschichtträger auf Basis Polycarbonat dispergiert sind. Alle dort beschriebenen Materialien und Materialkombinationen können auch im Rahmen der vorliegenden Erfindung eingesetzt werden.

Weiterhin kann der Schichtstoff allein aus einer Strukturfolie bestehen, oder es kann ein mehrlagiger Schichtstoff verwendet werden, dessen Sicht- und Deckschicht aus einer Strukturfolie besteht. Strukturfolien haben eine strukturierte Oberfläche, die aus Vorsprüngen und Vertiefungen bezüglich einer ebenen Solloberfläche gebildet sind. Derartige Strukturen können eine natürliche Vorlage nachbilden, beispielsweise die Ledernarbung an natürlichem Leder oder die Holzmaserung an einer Holzoberfläche. Mit Hilfe entsprechender Konturdaten kann die Oberfläche einer Prägewalze oder die Werkzeugoberfläche eines Positiv- oder Negativ-Werkzeugs entsprechend bearbeitet werden. Ferner können synthetische Strukturen nach vorgegebenen CAD-Daten erzeugt werden. Durch Abformen oder Prägen wird die Struktur der Prägewalze oder der Presswerkzeug-Oberfläche auf die Oberfläche einer Kunststofffolie übertragen. Einzelheiten zur Herstellung entsprechend strukturierter Presswerkzeugoberflächen können beispielsweise dem Dokument DE 198 55 962 C5 und der dort zitierten Literatur entnommen werden. Eine beispielhafte Strukturfolie wird von Exel GmbH, 83101 Rohrdorf, DE unter der Handelsbezeichnung PMU 4060 UV vertrieben. Diese Folie besteht aus einem Blend aus thermoplastischem Polyurethan und Poly(meth)acrylat und hat eine Welligkeit von max. 3 mm. Diese Strukturfolie kann transparent oder eingefärbt, beispielsweis auch tief-schwarz gefärbt erhalten und eingesetzt werden.

Weitere brauchbare Schichtstoffe sind in den Dokumenten DE 103 27 435 A1, DE 10 2006 031 315 A1 und DE 199 57 850 A1 angegeben.

Für die erfindungsgemäße Kaschierung sind solche Schichtstoffe gut geeignet die Kunststofffolien mit einer Schichtdicke von 20 bis 1000 µm, insbesondere mit einer Schichtdicke von 50 bis 500 µm aufweisen.

Nach einer weiteren, bevorzugten Ausführungsform des erfindungsgemäßen Verfahrens ist ein auf das 3D-Substrat abgestimmter Zuschnitt aus dem Schichtstoff auf einer Transferfolie abgelegt. Lediglich diese Transferfolie wird in einer, die beiden Werkzeug-Innenräume druckdicht voneinander trennenden Weise zwischen den beiden Dichtflächen von Druckglocke und Werkzeugwanne eingespannt. Bei Beaufschlagung mit dem fluiden Druckmittel unter einem Druckmitteldruck von 2 bis 18 bar trifft das Druckfluid auf die Transferfolie, und der von der Transferfolie gehaltene Schichtstoff-Zuschnitt wird auf das 3D-Substrat abgewickelt. Solche Zuschnitte können vorzugsweise Lagen aus Metall, aus Holz, hier beispielsweise Edelholzfurnier, aus Leder, aus Kunstleder, aus textilen Stoffen, wie etwa Web-, Strick- oder Wirkwaren sowie Vliesstoffe aus Natur- und/oder Kunstfasern und dergleichen enthalten, neben einer oder mehreren Lage(n) Kunststofffolie(n), die besondere dekorative Effekte verursachen. Der Zuschnitt kann eine auf das 3D-Substrat abgestimmte Größe haben und muss nicht den gesamten Querschnitt der Druckglocke ausfüllen. Eine unerwünschte Ablagerung von Schichtstoff auf Werkzeugteilen kann begrenzt werden. Die Transferfolie dient als Träger für den Schichtstoff. Die Transferfolie kann aus einem hochelastischen Folienmaterial bestehen, das durch eigene Dehnung die Flächenzunahmen bereitstellt, die für Anformung und Abwicklung des Zuschnitts am 3D-Substrat benötigt werden. Dehnung und sonstige Beanspruchung des Zuschnitts wird vermindert oder weitgehend beseitigt. Transferfolien aus Polyolefin, wie etwa Polyethylen, hier insbesondere LDPE, oder Polypropylen, je mit Schichtdicken von etwa 80 bis 500 µm oder Transferfolien aus thermoplastischen Polyurethanen, PTU (hier beispielsweise die von Bayer MaterialScience vertriebenen DESMOPAN-Folien; DESMOPAN® ist eine geschützte Marke) sind gut geeignet und werden vorzugsweise eingesetzt. Nach Fertigstellung kann eine solche Transferfolie von dem kaschierten Produkt entfernt werden oder bis auf weiteres als zusätzlicher Oberflächenschutz auf der Oberfläche des Schichtstoffes verbleiben. Der Zuschnitt wird an der Transferfolie typischerweise mit Hilfe eines Haftklebers gehalten, der rückstandsfrei von der Sichtseite des Schichtstoffes entfernt werden kann. Geeignete Haftkleber sind bekannt und handelsüblich zugänglich. Eine gute Haftung des Zuschnitts an der Transferfolie überträgt einen Teil der bei der Transferfolienumformung auftretenden Dehnung der Transferfolie auf den Zuschnitt und verhindert so eine unerwünschte Faltenbildung des Zuschnitts.

Beim erfindungsgemäß hergestellten Erzeugnis ist der Schichtstoff über eine Klebeschicht an das 3D-Substrat gebunden. Eine solche Klebeschicht erlaubt die Verwendung von Schichtstoffen mit hoher Rückstellkraft, Anformung des Schichtstoffes an kleine Krümmungsradien und eine sichere und dauerhafte Befestigung der Schichtstoffränder am 3D-Substrat, insbesondere auch an dessen Hinterschneidungen.

Klebstoffsysteme und Klebemassen zur Erzeugung einer solchen Klebeverbindung sind dem Fachmann grundsätzlich bekannt, der aus einer Vielzahl handelsüblich angebotener, geeigneter Produkte auswählen kann. Bevorzugt ist eine Arbeitsweise, bei welcher eine Ein-Komponenten-Klebemasse vorab lediglich auf der Anlageseite des Schichtstoffes aufgebracht ist. Ferner soll die lediglich auf der Anlageseite des Schichtstoffes befindliche Kleberschicht anfänglich in einem nicht aktiven Zustand vorliegen, was Lagerung und Handhabung erleichtert. Durch eine gezielte Aktivierungsbehandlung soll die anfänglich nicht aktive Kleberschicht in einen aktiven Zustand überführt werden, in dem dann der Klebevorgang eingeleitet wird. Eine bevorzugte Aktivierungsbehandlung ist die Erwärmung der Klebemasse auf ihre Aktivierungstemperatur; in einem solchen Falle werden thermisch aktivierbare Klebemassen bzw. Hotmelt-Kleber eingesetzt. Eine alternative oder zusätzliche Aktivierungsbehandlung ist die Bestrahlung mit actinischer Strahlung hier insbesondere UV-Strahlung; in einem solchen Falle werden UV-härtende Kleber eingesetzt.

Die Aufbringung kann beispielsweise dadurch erfolgen, dass eine Lösung einer aktivierbaren Klebemasse im Siebdruckverfahren auf der Anlageseite des Schichtstoffes aufgebracht wird. Anschließend wird das Lösemittel durch Verdunstung und Trocknung entfernt. Es kann eine dünne gleichmäßige Trockenschicht aus Klebemasse erhalten werden, die häufig nur dort aufgebracht wird, wo Klebekraft benötigt wird. Alternativ kann eine solche aktivierbare Klebemasse direkt als Trockenschicht von einem silikonisierten Trennpapier abgenommen und übertragen werden, beispielsweise indem Schichtstoff und mit einer solchen aktivierbaren Klebemasse versehenes Trennpapier gemeinsam durch einen Kalanderwalzenspalt geführt werden. Ferner können passend ausgewählte pulverförmige Kleber mit Hilfe von Extrusionsbeschichtung, beispielsweise durch Heiß-Extrusion oder Pulver-beschichtung oder durch sonstige Direktbeschichtung aufgebracht werden. Verschiedene thermisch aktivierbare Schmelzkleber sind auch in Form von Schmelzklebefolie oder -vliese erhältlich und können in dieser Form - beispielsweise auch in einem gewünschten Zuschnitt - auf der Anlageseite des Schichtstoffes aufgebracht werden.

Derartige thermisch aktivierbare Klebemassen, Schmelzkleber und Hotmelt-Kleber sind dem Fachmann bekannt, der aus vielen, handelsüblich erhältlichen Produkten auswählen kann. Nachstehend sind lediglich einige beispielhafte Rezepturen genannt:
Eine thermisch aktivierbare Klebemasse kann - als wesentliche Komponenten - bestehen aus einem elastomeren Basispolymer und aus einem Modifikationsharz, wobei das Modifikationsharz ein Klebharz und/oder ein Reaktivharz umfasst. Das elastomere Basispolymer kann ein thermoplastischen Polyurethan sein, oder ein Gemisch aus pulverförmigen, Polyurethan-bildenden Komponenten, wie aromatischen Diisocyanaten und Polyester-polyolen mit einem hohen Gehalt an endständigen Hydroxylgruppen. Thermoplastische Polyurethane mit einem hohen Gehalt an endständigen Hydroxylgruppen liefern eine besonders hohe Klebefestigkeit zu verschiedenen Substraten.

Eine alternative, thermisch aktivierbare Klebemasse kann bestehen aus:
- 50 bis 95 Gew.-% eines verklebbaren Polymers, und aus
- 5 bis 50 Gew.-% eines Epoxidharzes oder einer Mischung aus mehreren Epoxidharzen;
wobei das verklebbare Polymer seinerseits umfasst Acrylsäureverbindungen und/oder Methacrylsäureverbindungen und ein oder mehrere copolymerisierbare Vinylmonomere.

Eine weitere, thermisch aktivierbare Klebemasse kann bestehen aus:
- 40 bis 98 Gew.-% acrylhaltigem Blockpolymer,
- 2 bis 50 Gew.-% eines oder mehrerer klebrig machender Epoxidharze und/oder Novolakharze und/oder Phenolharze; und
- 0 bis 10 Gew.-% Härter zum Vernetzen der Epoxidharze und/oder der Novolakharze und/oder der Phenolharze.

Zur optimalen Vernetzung können diesen Klebemassen zusätzlich geeignete Initiatoren und/oder Vernetzer zugesetzt werden, beispielsweise IR-Strahlung absorbierende Photoinitiatoren und/oder UV-Licht absorbierende Photoinitiatoren. Zusätzlich können Haftvermittler vorgesehen werden, beispielsweise sogenannte "Primer". Als geeignete Primer kommen beispielsweise Heißsiegelkleber auf der Basis von Polymeren wie Ethylvinylacetat oder funktionalisierte Ethylvinylacetate oder auch Reaktivpolymere in Betracht.

Derartige thermisch aktivierbare Klebemassen können so erzeugt und eingestellt werden, dass sie eine Aktivierungstemperatur im Bereich von 60 bis 140 °C, noch weiter bevorzugt eine Aktivierungstemperatur im Bereich vont 75 und 130 °C aufweisen. Derartige Aktivierungstemperaturen können auch durch Erwärmung innerhalb eines Formwerkzeugs leicht und schnell erreicht werden. Nach Abkühlung unter diese Aktivierungstemperatur, wird schnell wenigstens eine ausreichende Anfangsklebefestigkeit zwischen Schichtstoff und 3D-Substrat erhalten, so dass der Anpressdruck schnell beendet und das Produkt aus dem Werkzeug entnommen werden kann. Der erwärmte Schichtstoff wird mit Hilfe von fluidem Druckmittel, insbesondere Druckluft, unter einem Druckmitteldruck von 2 bis 18 bar ausreichend lange an das ebenfalls erwärmte 3D-Substrat angepresst und angeformt, beispielsweise 2 bis 30 sec lang. Wird das fluide Druckmittel anschließend rasch aus der Druckglocke entfernt, so begünstigt die damit einhergehende Absenkung der Temperatur des Werkzeugs und des kaschierten 3D-Substrates eine rasche Abkühlung der Kleberschicht unter deren Aktivierungstemperatur.

Weitere Einzelheiten zu derartigen thermisch aktivierbaren Klebemassen lassen sich dem Dokument DE 10 2006 042 816 A1 entnehmen. Die dort beschriebenen thermisch aktivierbaren Klebemassen werden im Rahmen der vorliegenden Erfindung bevorzugt eingesetzt. Hierbei sind solche thermisch aktivierbaren Klebemassen, Schmelzkleber und Hotmelt-Kleber besonders bevorzugt die innerhalb von Sekunden auf ihre Aktivierungstemperatur bringbar sind und im Verlauf der Abkühlung innerhalb von Sekunden eine ausreichende Anfangsklebefestigket sowohl zu der Anlageseite des Schichtstoffes, wie zur 3D-Substratoberfläche hervorbringen und gewährleisten. Gut geeignet sind hier auch die diversen von Bayer MaterialScience unter der Handelsbezeichnung DESMOMELT (DESMOMELT® ist eine geschützte Marke) vertriebenen Hitze-aktivierbaren Klebemassen bzw. Schmelzklebstoffe. Hierbei handelt es sich um ein Gemisch aus kristallinen Polyester-polyolen und kristallinen Diisocanaten, die nach Hitze-Aktivierung Polyurethane mit endständigen Hydroylgruppen bilden. Es wird eine gute Haftung an diversen Werkstoffen erhalten, wie zum Beispiel an Leder, Textilien, Holzfaserstoffen und zahlreichen Kunststoffen, einschließlich PUR-Elastomeren und Weich-PVC. Die verschiedenen DESMOMELT-Typen können beispielsweise als Lösung in ausgewählten Lösemitteln (etwa Butanon-2, Aceton oder Methylethylketon), als Schmelzklebefolien oder unmittelbar als Pulver durch Direktbeschichtung verarbeitet werden. Die Mindestaktivierungstemperatur beträgt etwa 60 °C. Unter der Beaufschlagung mit dem Hochdruck-Druckfluid wird bereits innerhalb von Sekunden eine ausreichende Anfangsklebefestigkeit erhalten, die sich nach Entnahme des kaschierten Produktes aus dem Formwerkzeug im Verlauf der nächsten Stunden weiter steigert.

Der mit einer teilweisen oder vollflächigen Trockenschicht aus thermisch aktivierbarer Klebemasse bzw. Schmelzklebstoff versehene Schichtstoff muss vor der Umformung soweit erwärmt werden, dass diese Klebemasse bzw. dieser Schmelzklebstoff aktiviert wird. Dies erfolgt durch Erwärmung des Schichtstoffes auf diese Aktivierungstemperatur der thermisch aktivierbaren Klebemasse bzw. des Schmelzklebstoffes oder über diese Aktivierungstemperatur hinaus. Typischerweise ist hier eine Erwärmung auf eine Aktivierungstemeperatur im Bereich 60 bis 140 °C, insbesondere auf eine Aktivierungstemperatur im Bereich von 75 bis 130 °C vorgesehen.

Auch die im ein- oder mehrlagigen Schichtstoff enthaltene(n) Kunststofffolien müssen erwärmt werden, um deren detailgetreue Anformung an das 3D-Substrat zu erleichtern. Hier kann eine maximale Erwärmung auf die vom Thermoformen her geläufigen Umformungstemperaturen in Betracht kommen; vgl. etwa "Thermoformen in der Praxis", von Peter Schwarzmann, 2. Auflage, Carl Hanser Verlag, München 2008, Seite 40. Häufig ist eine Erwärmung auf eine niedrigere Temperatur ausreichend, weil mit dem erfindungsgemäß vorgesehenen Druckmitteldruck des fluiden Druckmittels von bis zu 18 bar ein höherer Druckmitteldruck zur Verfügung steht, als bei der Druckluftformung unter Thermoform-Bedingungen. Im Einzelfall kann eine Erwärmung auf Temperaturen unterhalb der Glasübergangstemperatur T_{g} des jeweiligen Folienmaterials ausreichend sein.

Die vorstehend erläuterte Erwärmung wird erfindungsgemäß im Innenraum der Werkzeugwanne des Formwerkzeugs durchgeführt. In den Zwischenraum zwischen dem, zwischen Druckglocke und Werkzeugwanne eingespannten Schichtstoff und dem auf dem abgesenkten Tisch befindlichen 3D-Substrat wird eine Heizstrahler-Anordnung eingefahren, die aktivierbare, nach oben abstrahlende Heizstrahler und aktivierbare nach unten abstrahlende Heizstrahler hat. Die nach oben abstrahlenden Heizstrahler erwärmen gezielt den Schichtstoff und aktivieren gezielt den an der Anlageseite des Schichtstoffes befindlichen Kleber. Im Falle UV-härtender Kleber können an der Oberseite der Heizstrahler-Anordnung alternativ oder zusätzlich aktivierbare, nach oben abstrahlende UV-Strahler, hier insbesondere UV-LED-Systeme vorgesehene werden. Die nach unten abstrahlenden Heizstrahler erwärmen gezielt die Oberfläche des 3D-Substrates. In jeder Richtung sind nur geringe Abstände kleiner 200 mm, vorzugsweise kleiner 100 mm zu überwinden. Die kurzen Wege liefern eine hohe Strahlungsintensität. Mit Hilfe der optimal angeordneten Heizstrahler kann eine sehr rasche Erwärmung erzielt werden. Ferner begünstigt der Einsatz von Heizstrahlern mit einem flinken Ansprechverhalt, wie die eingangs beschriebenen IR-Flächenstrahler, die als Heizelement eine zum Glühen bringbare Metallfolie aufweisen, eine sehr rasche Erwärmung. Typischerweise ist eine Aktivierung der Heizstrahler für eine Dauer kleiner 60 sec, vorzugsweise kleiner 30 sec völlig ausreichend. Mit Hilfe von UV-Strahlern, hier insbesondere schnell einschaltbaren und schnell ausschaltbaren UV-LED-Systemen kann innerhalb weniger Sekunden eine ausreichende Härtung von UV-härtenden Klebemassen erzielt werden. Damit können kurze Zykluszeiten kleiner 120 sec realisiert werden.

Zum Zeitpunkt dieser Wärmebehandlung ist im Werkzeugwannen-Innenraum und im Druckglocken-Innenraum der anfängliche Luftdruck entsprechend dem umgebenden Atmosphärendruck wenigstens auf einen Wert kleiner 30 kPa abgesenkt. Noch weiter bevorzugt ist eine Evakuierung bis zu einem Druck kleiner/gleich 20 kPa. Sofern die technischen Möglichkeiten gegeben sind, kann der Druck ohne weiteres auch auf einen noch niedrigeren Wert abgesenkt werden. Diese Druckabsenkung muss für jeden einzelnen Kaschierungszyklus innerhalb der Zykluszeit durchgeführt werden. Eine rasche Druckabsenkung kann dadurch erreicht werden, dass je eine Strömungsverbindung von Werkzeugwannen-Innenraum sowie von Druckglocken-Innenraum zu einem vorher evakuierten Vakuumbehälter ausreichender Größe geschaffen wird. Dieser Vakuumbehälter kann dann während derjenigen Phase wieder evakuiert werden, in der in beiden Innenräumen nach einer Belüftung wieder Atmosphärendruck herrscht.

Beim erfindungsgemäßen Verfahren findet die Umformung des erwärmten Schichtstoffes und Anlage an das erwärmte 3D-Substrat im Sinne einer Positivformung graduell und mehrstufig statt. Nach Beendigung der erfindungsgemäßen Wärmebehandlung und nach Zurückfahren der Heizstrahler-Anordnung(en) in ihre(n) jeweilige(n) Rückzugsräume wird der Tisch bis in seine obere Totstellung angehoben, wobei das 3D-Substrat die Schichtstoff-Ebene durchdringt und den Schichtstoff zeltartig mit sich führt. Sowohl im Werkzeugwannen-Innenraum wie im Druckglocken-Innenraum herrscht weiterhin der abgesenkte Druckmitteldruck kleiner/gleich 30 kPa. Nachdem der Tisch seine obere Totstellung erreicht hat, wird in den Druckglocken-Innenraum ein fluides Druckmittel, vorzugsweise Druckluft, unter einem Druckmitteldruck von 2 bis 18 bar, vorzugsweise unter einem Druckmitteldruck von 3 bis 15 bar eingeleitet. Diese Druckmitteldruck-Angaben sind absolute Druckwerte; ein Druckmitteldruck von 2 bar ist folglich um etwa ein bar höher, als der umgebende Atmosphärendruck. Ein Druckmitteldruck kleiner 2 bar schafft keinen ausreichenden Anpressdruck, um den - insbesondere mehrlagigen Schichtstoff - auch an feine Details des 3D-Substrates anzulegen, und solche Details nach der Kaschierung detailgetreu wiederzugeben. Ein Druckmitteldruck größer 18 bar bringt keine wesentlich besseren Ergebnisse, erfordert jedoch einen erheblich gesteigerten konstruktiven Aufwand zur Beherrschung der hohen, auf die Druckglocke einwirkenden Kräfte, insbesondere dann, wenn die Tischfläche Abmessungen von 500 mm x 1000 mm erheblich übersteigen sollte.

Die Beaufschlagung mit dem hohen Druckmitteldruck von 2 bis 18 bar presst den zwischen Druckglocke und Werkzeugwannenrand eingespannten Schichtstoff an das 3D-Substrat an; weitere Schichtstoffreste werden auf der, das 3D-Substrat haltenden Trägerplatte sowie auf einem Zwischenrahmen abgeschieden, welcher den oberen Abschluss der Werkzeugwanne bildet. Deren Flächen sind vorzugsweise mit einem Trennmittel, wie etwa TEFLON® beschichtet, was die spätere Entfernung dieser Schichtstoffreste erleichtert. Diese Beaufschlagung mit dem hohen Druckmitteldruck von 2 bis 18 bar wird mehrere Sekunden lang, beispielsweise 2 bis 30 sec lang fortgesetzt, um eine ausreichende Haftung und Festigkeit der Klebeverbindung zwischen 3D-Substratoberfläche und angeformtem Schichtstoff zu erzielen. Anschließend wird der Werkzeugwannen-Innenraum belüftet, der Druckglocken-Innenraum wird entlüftet, und die Druckglocke wird angehoben. Die das kaschierte 3D-Substrat haltende Trägerplatte liegt auf der Tischplatte des angehobenen Tisches auf, befindet sich jetzt in einem Ausschnitt innerhalb des Zwischenrahmen, und steht dort für den Zugriff einer Fördereinrichtung bereit, welche die Trägerplatte mit dem kaschierten 3D-Substrat aus dem Formwerkzeug heraus befördern wird. Weitere Einzelheiten können der nachfolgenden Beschreibung einer erfindungsgemäßen Vorrichtung entnommen werden.

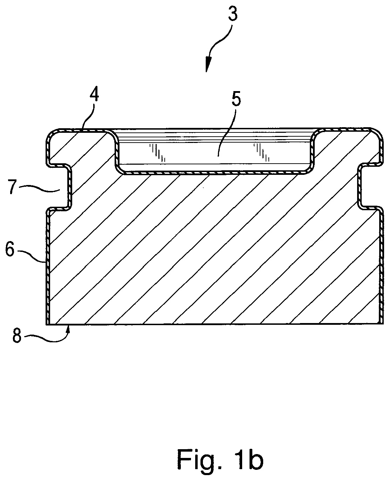

Die Figur 1a zeigt - anhand eines Schrägbildes - ein als Demonstrationsobjekt dienendes und im nachfolgenden Beispiel verwendetes 3D-Substrat 3; Figur 1b zeigt dieses 3D-Substrat 3 in einer Schnittdarstellung längs der Schnittlinie II - II aus Fig. 1a. Bei diesem 3D-Substrat 3 handelt es sich um einen ovalen Körper mit abgerundeten Ecken und Kanten. Der gesamte Körper besteht aus weißem Polyamid und hat eine Länge von 180 mm, eine Breite von 100 mm, eine Höhe von 40 mm und eine Schichtdicke von 5 mm. In der Oberseite 4 ist eine ausgeprägte konkave, etwa 8 mm tiefe Aushöhlung 5 ausgebildet. Diese Oberseite 4 geht in abgerundeter Form in einen umlaufenden Steg 6 über, in dem eine umlaufende Nut 7 ausgespart ist. Es soll auch gezeigt werden, dass die Stirnfläche dieses Steges 6 sicher mit fest haftendem Schichtstoff kaschiert werden kann, und dass auch Hinterschneidungen sicher beschichtet werden, etwa die Nut 7 ausgekleidet wird und die untere Kante 8 des Steges 6 umgriffen wird.

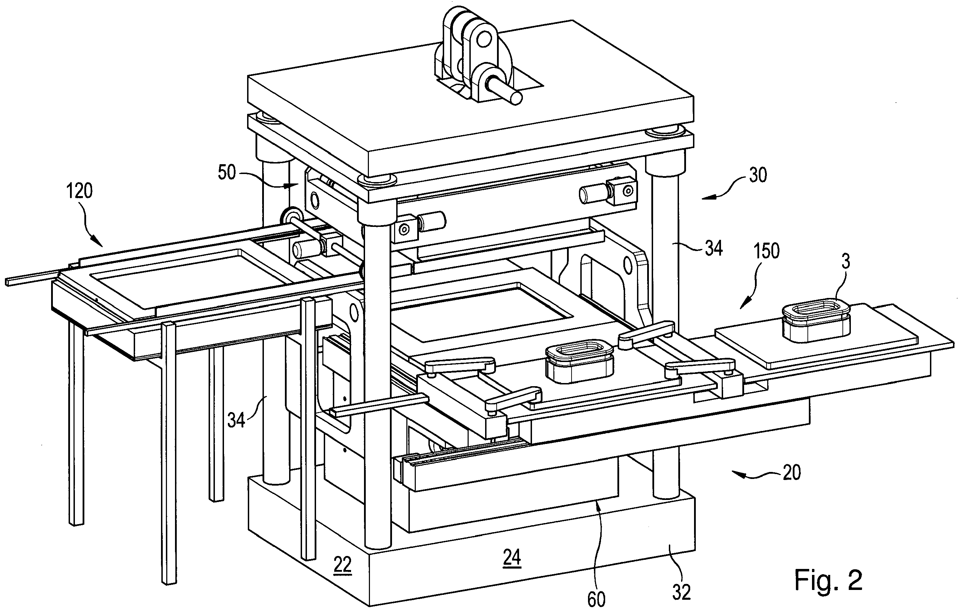

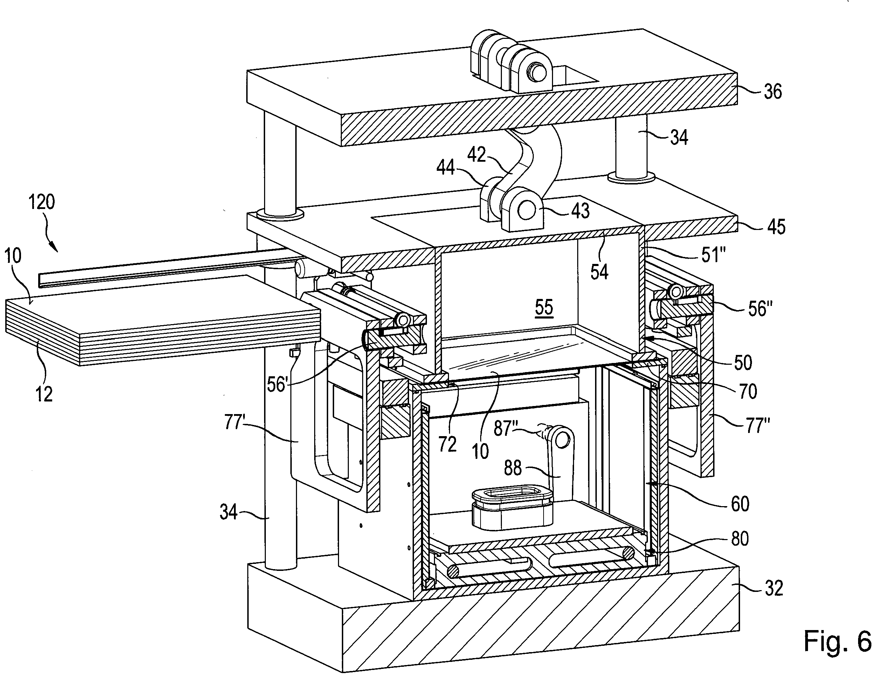

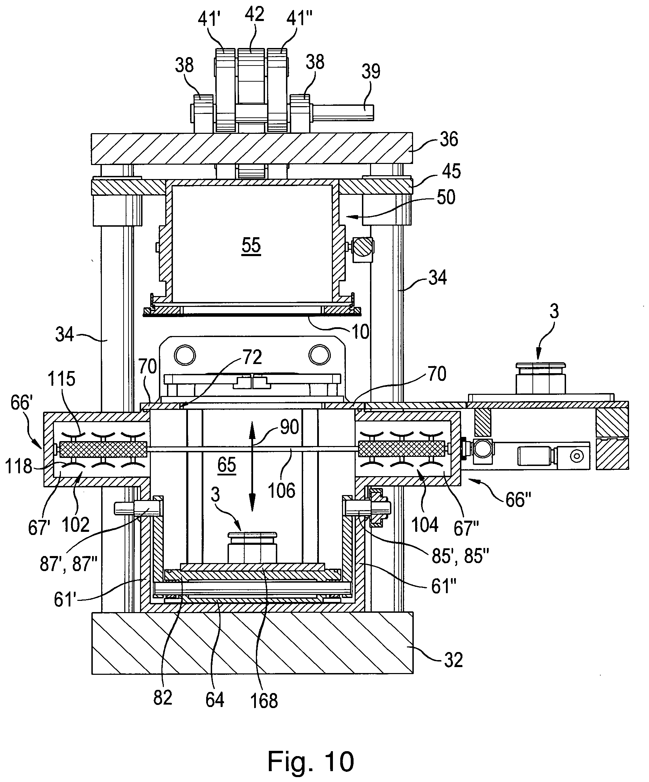

Ein zur Durchführung des erfindungsgemäßen Verfahrens geeignetes Formwerkzeug wird nachstehend mit Bezugnahme auf die Figuren 2 bis 5 beschrieben. Hier zeigt Fig. 2 anhand einer Übersicht das Formwerkzeug mit dessen wesentlichen Komponenten sowie Peripherie-Einrichtungen, nämlich eine Transporteinrichtung zum Einführen von stückigem Schichtstoff in das Formwerkzeug und eine Transportstrecke zum Zuführen des zu kaschierenden 3D-Substrat 3. Die detaillierteren Schrägbilder 3, 4 und 5 zeigen verschiedene Stadien des Verfahrens. Die Fig. 6, 13 und 14 zeigen anhand von Schrägbildern virtuelle Schnittdarstellungen, bei denen eine in der Draufsicht vordere Längsseitenfront entfernt ist, um einen Blick in das Innere des Formwerkzeugs zu ermöglichen, beispielsweise um die Verstellung eines Tisches innerhalb einer Werkzeugwanne zu beschreiben. Die Fig. 10, 11 und 12 zeigen anhand von schematischen Seitenansichten virtuelle Schnittdarstellungen, bei denen eine in der Draufsicht vordere Stirnseitenfront entfernt ist, um Anordnung und Verstellung einer Heizstrahler-Anordnung innerhalb der Werkzeugwanne zu erläutern.

Wie Fig. 2 zeigt, bildet das Formwerkzeug 20 eine im Wesentlichen rechteckige Vorrichtung, mit einem 4-Säulen-Gestell 30, dessen Säulen 34 auf einer rechteckigen Bodenplatte 32 abgestützt sind. Die kürzere Rechtecksseite 22 definiert die Richtung einer Stirnseite oder Stirnwand des Formwerkzeugs 20. Die längere Rechtecksseite 24 definiert die Richtung einer Seitenwand des Formwerkzeugs 20. Längs der Säulen 34 ist eine obere Werkzeughälfte, nämlich eine Druckglocke 50 anhebbar und absenkbar gehalten. Eine untere Werkzeughälfte bildet eine stationär auf der Bodenplatte 32 angeordnete Werkzeugwanne 60, in der sich ein anhebbarer und absenkbarer Tisch befindet. Ferner befindet sich in der Werkzeugwanne 60 eine Heizstrahler-Anordnung. Der zur Kaschierung des 3D-Substrates 3 dienende Schichtstoff 10 wird mit Hilfe einer Transporteinrichtung 120 in das Formwerkzeug 20 eingebracht. Das zu kaschierende 3D-Substrat 3 wird längs einer Transportstrecke 150 herangeführt.

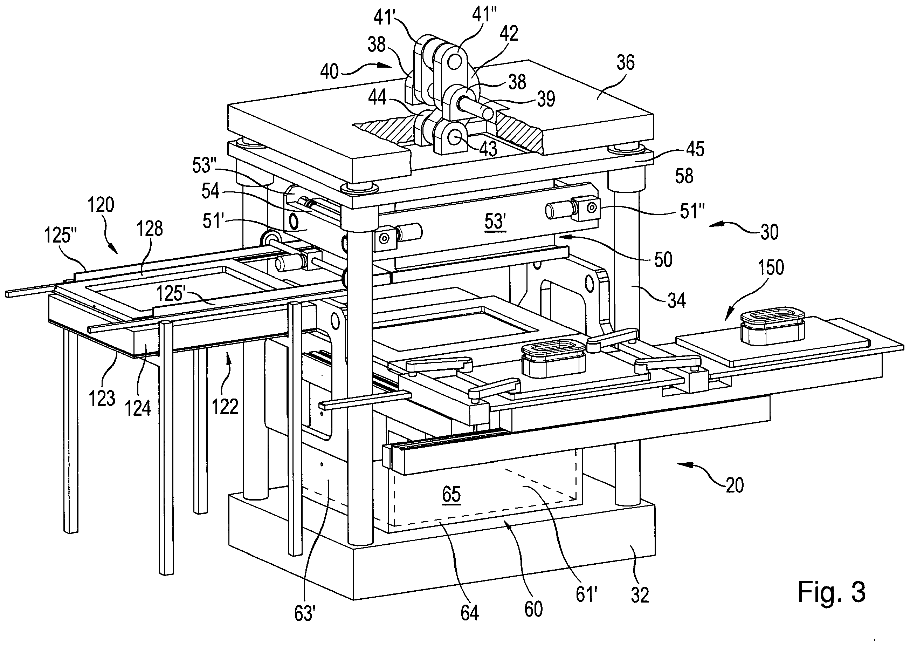

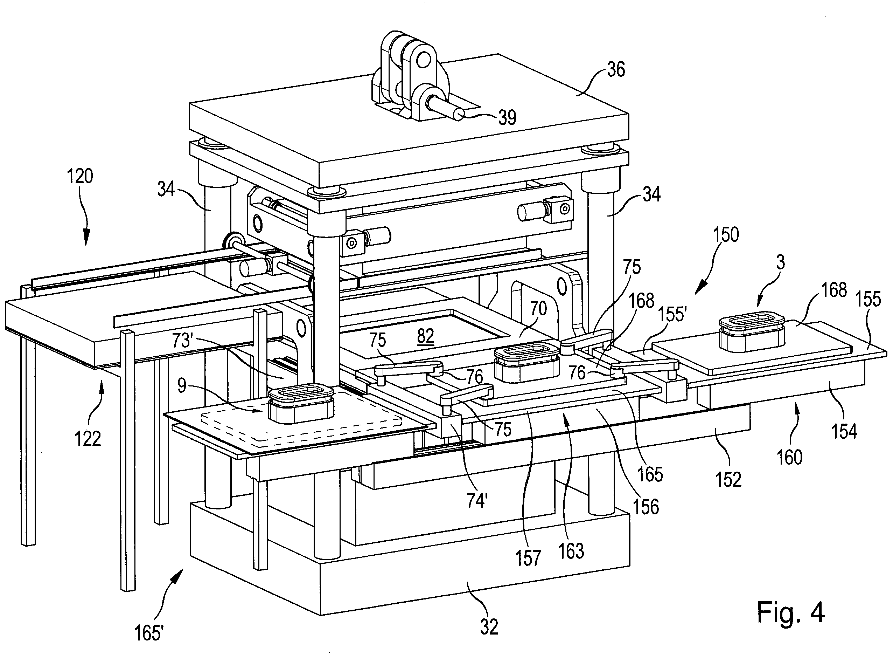

Wie die weiteren Schrägbilder gemäß Fig. 3 und 4 mehr im Einzelnen zeigen, hat das Formwerkzeug 20 ein 4-Säulen-Gestell 30 mit einer Bodenplatte 32, und vier vertikal ausgerichteten Säulen 34, die eine Deckelplatte 36 tragen, auf der die Lager 38 für eine Antriebswelle 39 einer Kniehebel-Anordnung 40 montiert sind. Diese Antriebswelle 39 wird motorisch von einem - nicht dargestellten - Getriebemotor angetrieben. Auf der Antriebswelle 39 sitzen zwei beabstandete Kurbeln 41' und 41", die ein Pleuel 42 treiben, das eine Achse 43 verstellt. Die Achse 43 ist in einem Lagerpaar 44 gelagert, das auf einer, an den Säulen 34 verschieblich geführten Führungsplatte 45 sitzt. An der Unterseite dieser Führungsplatte 45 ist eine obere Werkzeughälfte befestigt, nämlich eine Drucklocke 50. Folglich kann durch Betätigung der Kniehebel-Anordnung 40 die Druckglocke 50 innerhalb des 4-Säulen-Gestells 30 auf und ab bewegt werden. Die Druckglocke 50 bildet im Wesentlichen einen nach unten offenen Kasten, der zwei gegenüber liegende Stirnwände 51' und 51", zwei gegenüber liegende Seitenwände 53' und 53" sowie eine Deckenwand 54 hat, die zusammen einen Druckglocken-Innenraum 55 begrenzen. hat. An der Stirnwand 51' sind zwei beabstandete, motorisch verstellbare und von der Stirnwand 51' weg verschiebbare Riegelbolzen 52' und 52" angebracht. An der Stirnwand 51" sind zwei beabstandete, motorisch verstellbare und von der Stirnwand 51" weg verschiebbare Riegelbolzen 56' und 56" angebracht. Der untere umlaufende Rand der Druckglocke 50 bildet eine umlaufende Dichtfläche 58, die mit einer zusätzlichen umlaufenden Dichtung versehen sein kann

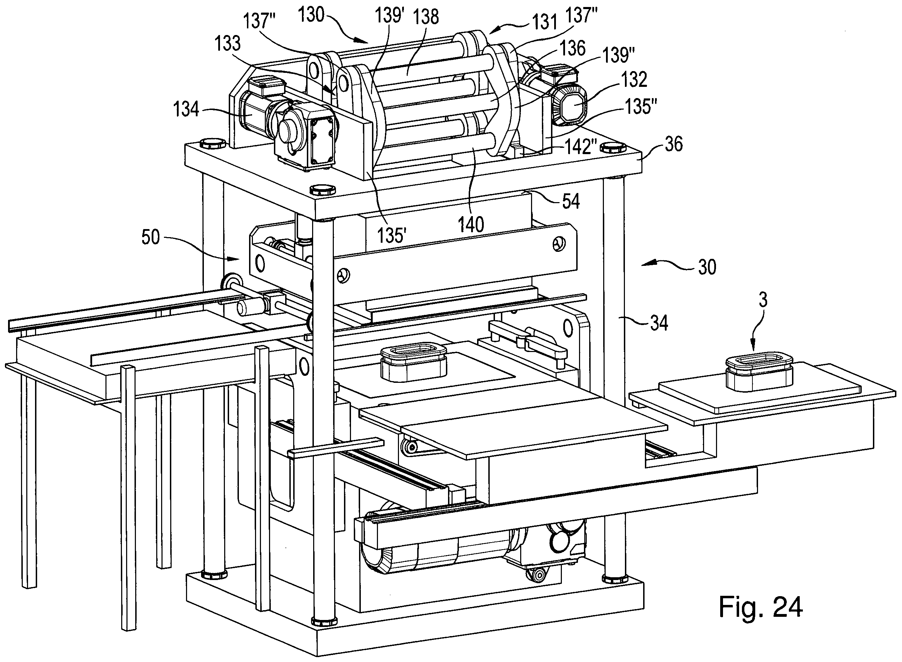

Die Figuren 24 bis 29 zeigen eine alternative Verstelleinrichtung für die Druckglocke 50. Hier wirkt zwischen der Deckelplatte 36 des 4-Säulengestells 30 und der Deckenplatte 54 der Druckglocke 50 eine Doppelkniehebel-Anordnung 130, die zwei gleichartige, einfache, je mit einem separaten Antrieb 132 und 134 ausgerüstete Kniehebel-Anordnungen 131 und 133 hat, von denen nachstehend nur die Kniehebel-Anordnung 133 beschrieben wird. An zwei beabstandeten Lagerböcken 135' und 135" ist eine Hauptwelle 136 gelagert, die von dem Getriebemotor 134 vorwärts oder rückwärts antreibbar ist. Der Vorwärtsantrieb hebt die Druckglocke 50 an, und der Rückwärtsantrieb senkt die Druckglocke 50 ab. Alternativ kann das Absenken der Druckglocke 50 auch durch deren Gewicht bewirkt werden, und der Getriebemotor 134 übt beim Absenken nur eine Bremsfunktion aus; dies fördert die Energie-Effizienz beim Betrieb der Doppelkniehebl-Anordnung 130. Auf der Hauptwelle 136 sitzen zwei beabstandete Kurbeln 137' und 137", die eine obere Achse 138 halten. An dieser oberen Achse 138 sitzen zwei gekröpfte Lenker 139' und 139", die eine untere Achse 140 halten, die drehbar an zwei beabstandeten Lagerböcken 142' und 142" gelagert ist, die ihrerseits ortsfest auf der Deckenplatte 54 der Druckglocke 50 befestigt sind.

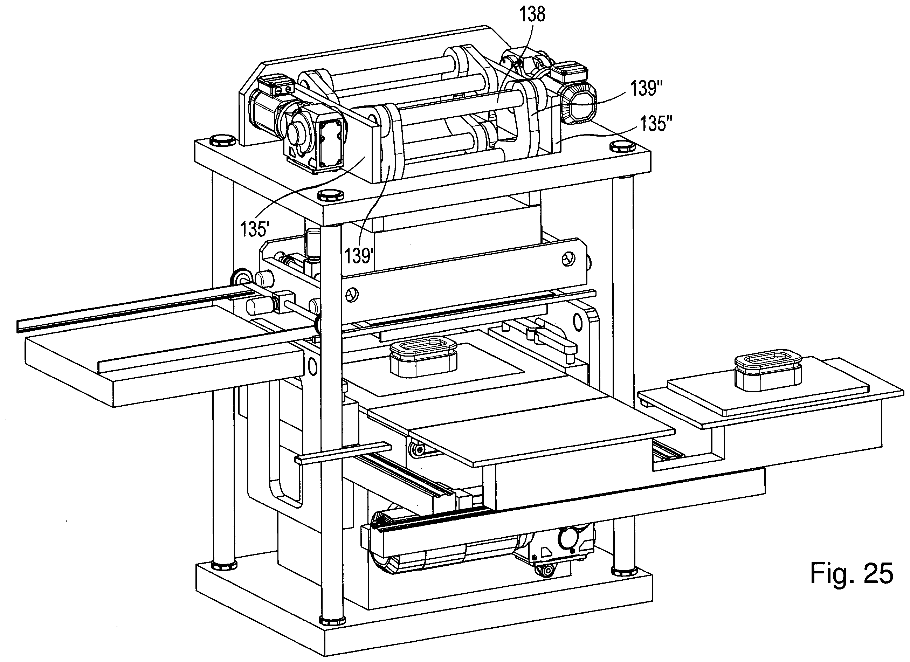

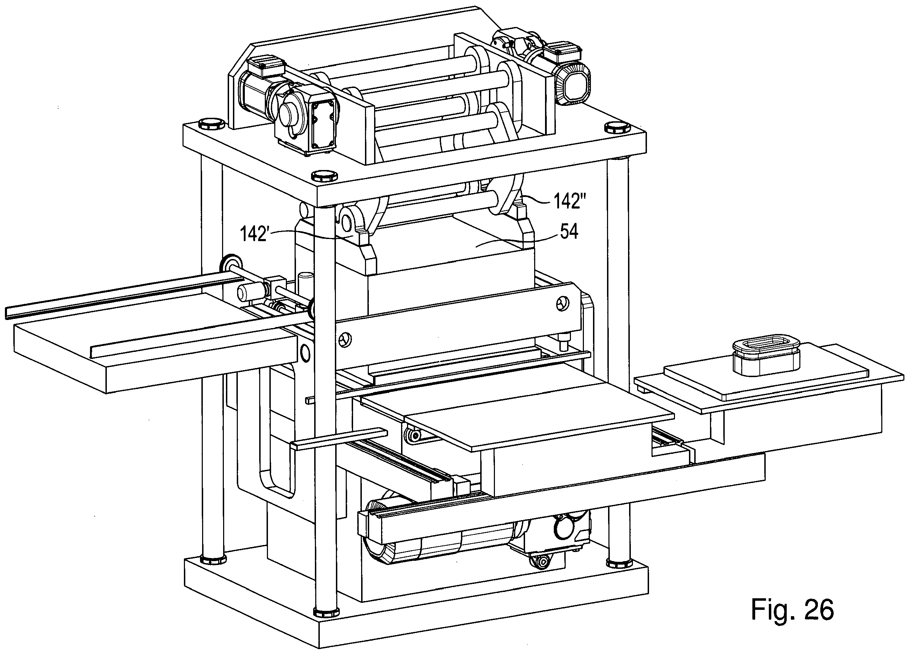

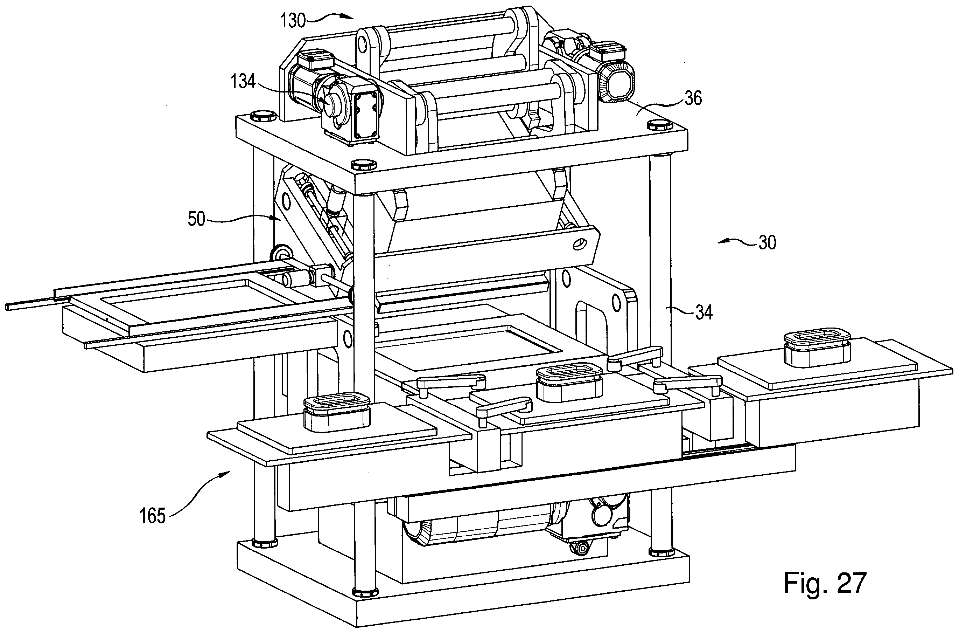

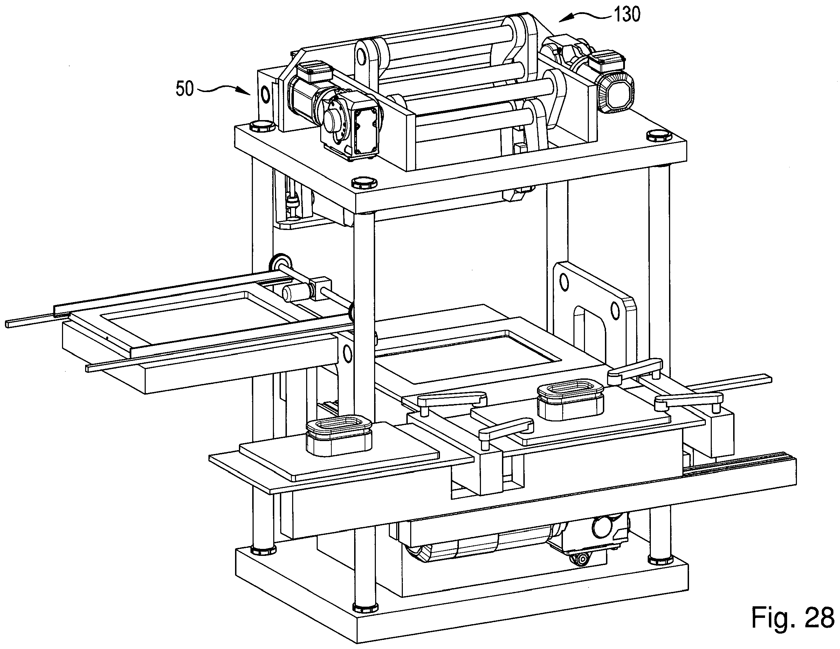

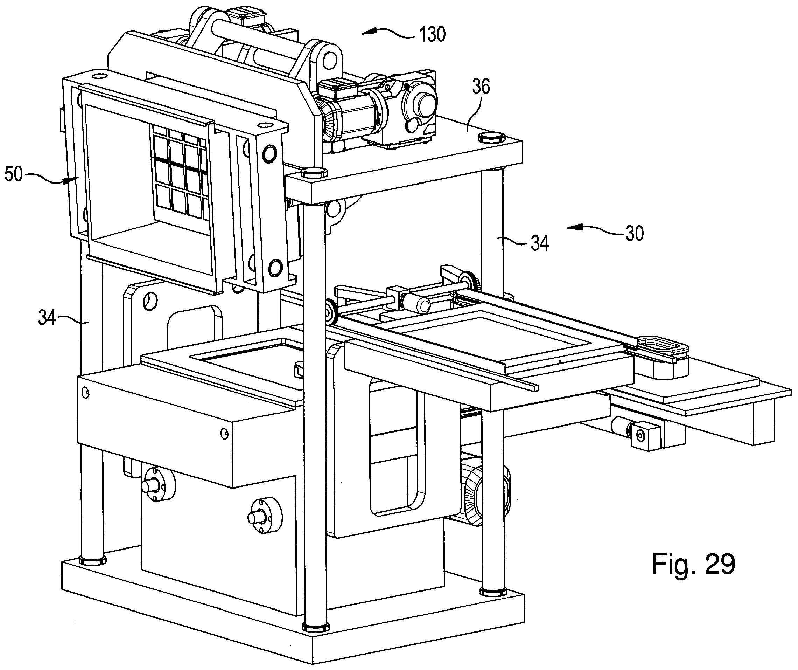

In der Darstellung gemäß Fig. 24 nimmt die Drucklocke 50 ihre obere Totstellung ein, und die beiden Kurbeln 137' und 137' erstrecken sich vertikal nach oben. Es könnte auch eine Anordnung vorgesehen werden, in der die beiden Kurben 137' und 137" die Drucklocke 50 um etwa 5 Grad über diese obere Totstellung hinaus an einen Anschlag verfahren; ohne Einsatz von Motorleistung wird eine Absturzsicherung erhalten. Durch synchrone und symmetrische Aktivierung der beiden Getriebemotoren 132 und 134 werden die beiden Kurbeln 137' und 137" über eine Zwischenstellung - vgl. Fig. 25 - in eine vertikal nach unten gerichtete Ausrichtung verstellt, und die Druckglocke 50 nimmt ihre untere Totstellung ein; vgl. Fig. 26. Ferner ist ein Betriebsmodus möglich, bei dem nur die eine Kniehebel-Anordnung 134 verstellt wird, und die andere Kniehebel-Anordnung 131 arretiert bleibt. Dies verstellt die Druckglocke 50 über eine Zwischenstellung - vgl. Fig. 27 - bis in eine mit Fig. 28 dargestellte Servicestellung, in der Deckenwand 54 und die umlaufende Dichtfläche 58 der Druckglocke 50 im Wesentlichen vertikal ausgerichtet sind. Fig. 29 zeigt einen direkten Blick auf diese Servicestellung. In dieser Stellung sind der Innenraum 55 der Druckglocke 50 und der Innenraum 65 der Werkzeugwanne 60 für Servicearbeiten zugänglich.

Mit der Doppelkniehebel-Anordnung 130 werden nachstehende Vorteile erzielt:
- Das Glockengewicht wird auf mehrere Gleitbuchsen verteilt, die deshalb kleiner ausgeführt werden können;
- es ist keine Führungsplatte am Säulengestell erforderlich; Querkräfte in das Säulengestell und mögliche Verkantungen werden vermieden;
- das Glockengewicht kann zur Absenkbewegung genutzt werde; die beiden Motoren müssen während der Absenkbewegung nur eine Bremsfunktion ausüben;
- sowohl die obere Totstellung wie die untere Totstellung der Druckglocke kann arretiert werden; dank dieser Arretierungen können diese Stellungen ohne Motor leistung aufrecht erhalten werden; und
- schließlich kann die Drucklocke eine Servicestellung einnehmen, in der sowohl der Druckglocken-Innenraum, wie der Werkzeugwannen-Innenraum für Servicearbeiten und dgl. zugänglich ist.

Innerhalb des 4-Säulen-Gestells 30 ist auf dessen Bodenplatte 32 eine untere Werkzeughälfte, nämlich eine Werkzeugwanne 60 stationär angeordnet, die im wesentlichen rechteckigen Querschnitt hat und aus etwa 20 bis 30 mm starken Stahlblechteilen bestehen kann, die zusammengeschweißt sind. Die Werkzeugwanne 60 hat gegenüberliegende Seitenwände 61' und 61", gegenüberliegende Stirnwände 63' und 63" und eine Bodenwand 64, die gemeinsam einen Wanneninnenraum 65 begrenzen. Den oberen Abschluss der Werkzeugwanne bildet ein Zwischenrahmen 70, der wärmeleitend mit der Werkzeugwanne 60 verbunden ist; die Werkzeugwanne 60 bildet eine Wärmesenke für den Zwischenrahmen 70. Der Zwischenrahmen 70 hat eine polierte Auflagefläche für den Rand des Schichtstoffes; bei Bedarf kann diese Auflagefläche mit einem Trennmittel, wie etwa TEFLON® oder dergleichen beschichtet sein. Der Zwischenrahmen 70 umgibt einen geschlossenen Ausschnitt 72.

Wie insbesondere die "geschnittenen" Draufsichten gemäß Fig. 10, 11 und 12 zeigen, sind an den beiden Seitenwänden 61' und 61" je Aussparungen 62' und 62" ausgeschnitten, und angrenzend an diese Aussparungen 62' und 62" ist an jeder Seitenwand 61', 61" je ein Kasten 66' und 66" angesetzt und angeschweißt. Der Kasten 66' begrenzt einen Rückzugsraum 67', und der Kasten 66" begrenzt einen Rückzugsraum 67"; jeder Rückzugsraum 67' und 67" ist zum Wanneninnenraum 65 hin offen. In jedem Rückzugsraum 67' und 67" kann je eine "halbe" Heizstrahler-Anordnung untergebracht werden, wie das nachstehend erläutert wird. Jeder in den Fig. 10, 11 und 12 dargestellte Kasten 66' und 66" ist horizontal ausgerichtet und begrenzt je einen horizontal ausgerichteten Rückzugsraum 67' und 67".

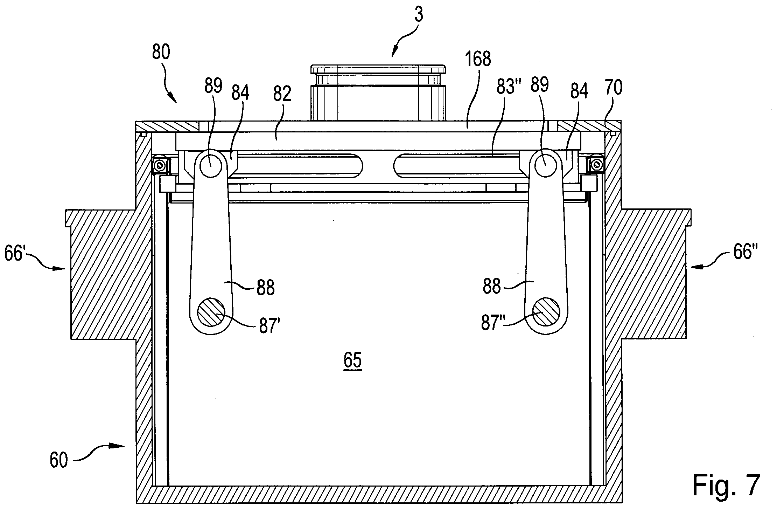

Wie das "geschnittene" Schrägbilder gemäß Fig. 6 und die ausschnittsweisen "geschnittenen" Draufsichten gemäß Fig. 7, 8 und 9 zeigen, befindet sich innerhalb der Werkzeugwanne 60 ein Tisch 80, der eine Tischplatte 82 hat und der mit Hilfe einer Hubeinrichtung abgesenkt und angehoben werden kann. Zu dieser Hubeinrichtung gehören zwei beabstandete und je parallel ausgerichtete und je motorisch angetriebene Wellen 85' und 85", die je abgedichtet durch die vordere Seitenwand 61' der Werkzeugwanne 60 geführt sind, sowie korrespondierend, zwei beabstandete und je parallel ausgerichtete und je motorisch angetriebene Wellen 87' und 87", die je abgedichtet durch die gegenüberliegende hintere Seitenwand 61" der Werkzeugwanne 60 geführt sind. Jede Welle 85', 85", 87' und 87" verschwenkt je einen Kurbelarm 88, an dessen freiem Ende je eine Verbindungswelle 89 drehbar gehalten ist. An der Unterseite der Tischplatte 82 sind - je benachbart zu deren Längsrändern zwei, sich in Längsrichtung erstreckende Führungsschienen 83' und 83" angebracht. In jeder Führungsschiene 83', 83" sind zwei Gleitstücke 84 verschieblich gehalten. In jedes Gleitstück 84 greift drehbar eine Verbindungswelle 89 ein. Eine motorisch bewirkte Verschwenkung der Kurbelarme 88 erzwingt über die Verbindungswellen 89 eine Verschiebung der Gleitstücke 84 innerhalb der Fürungsschienen 83' bzw. 83", und der fest mit diesen Führungsschienen 83', 83" verbundene Tisch 80 wird innerhalb seiner Tischführung angehoben oder abgesenkt.

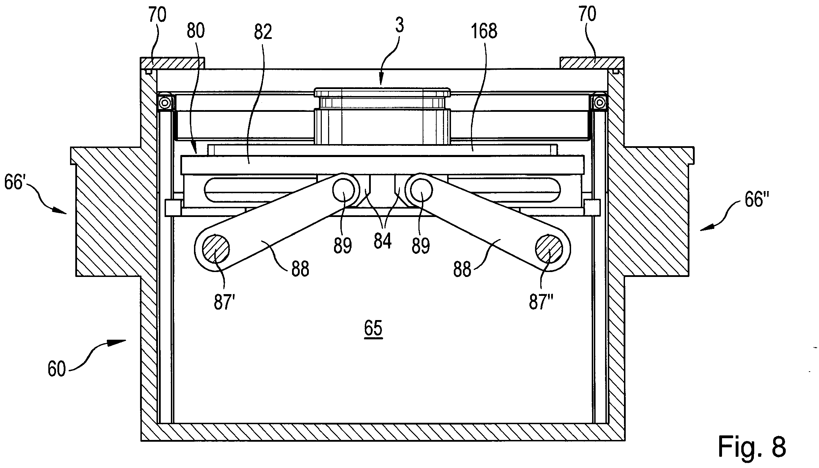

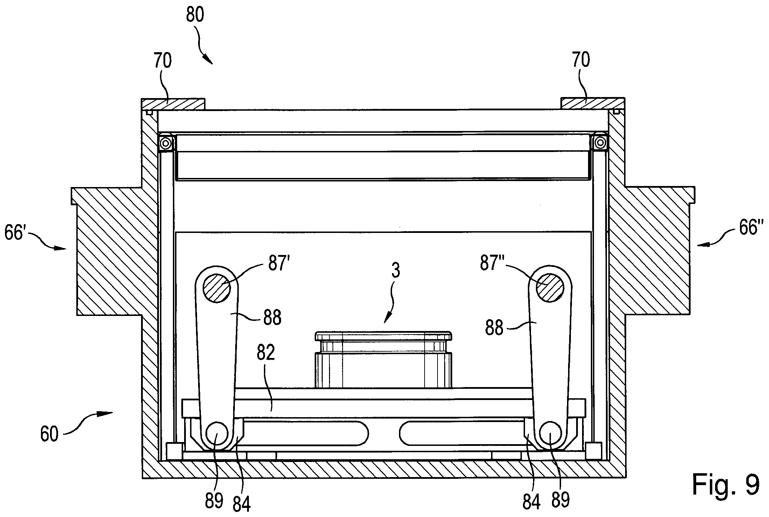

Die schematische ausschnittsweise Draufsicht gemäß Fig. 7 zeigt einen Zustand, in welchem der Tisch 80 seine obere Totstellung einnimmt; alle vier Kurbelarme 88 sind nach oben verschwenkt und nehmen eine vertikale Ausrichtung ein; die auf den Tisch 80 einwirkende Last wird über die vier vertikal ausgerichteten Kurbelarme 88 auf die Wellen 85', 85", 87' und 87" abgetragen. Durch Verschwenkung der Kurbelarme 88 wird der Tisch 80 aus seiner oberen Totstellung abgesenkt; vgl. Fig. 8. Wenn die Kurbelarme 88 eine nach unten verschwenkte vertikale Ausrichtung einnehmen, dann nimmt der Tisch 80 seine untere Totstellung ein; vgl. Fig. 9. Folglich kann der Tisch 80 unabhängig von der Druckglocke 50 innerhalb der stationär angeordneten Werkzeugwanne 60 verstellt werden.

Wie aus den Fig. 3 und 4 ersichtlich, ist benachbart zu einer Stirnwand 63' der Werkzeugwanne 60 eine Transporteinrichtung 120 für stückigen Schichtstoff 10 bzw. für Schichtstoff-Stücke 10 vorgesehen. Zu dieser Transportstation 120 gehört ein - hier lediglich als flacher Trog dargestelltes - Magazin 122, das einen Vorrat an Schichtstoff-Stücken 10 bereithalten kann. Das Magazin 122 hat einen höhenverstellbaren Magazinboden 123, auf dem ein Stapel 12 an, parallel zum Magazinboden 122 ausgerichteter Schichtstoff-Stücke 10 aufliegt. Mit Hilfe seitenverstellbarer Magazinseitenwände 124 kann eine Anpassung an das aktuell verwendete Format der Schichtstoff-Stücke 10 vorgenommen werden. Fig. 3 zeigt einen zwischen zwei beabstandeten, parallel zueinander ausgerichteten Führungsschienen 125' und 125" geführten, hohlen Transportrahmen 128, in dessen Hohlraum ein Unterdruck einstellbar und aufrechterhaltbar ist, der über Saugporen eine Saugwirkung an der Unterseite des Transportrahmens 128 erzeugt. Dieser Transportrahmen 128 ist über das Magazin (bzw. über den flachen Trog) 122 verfahrbar. Mit Hilfe der Saugwirkung wird das oberste, im Magazin 122 befindliche Schichtstoff-Stück 10 angesaugt und an der Unterseite des Transportrahmens 128 angelegt. Das so vereinzelte Schichtstoff-Stück 10 wird mit Hilfe des Transportrahmens 128 unter die, innerhalb des 4-Säulen-Gestells 30 ihre obere Totstellung einnehmende Druckglocke 50 verfahren. Nachdem der Transportrahmen 128 mit dem Umfang der Druckglocke 50 fluchtet, wird die Oberseite des Transportrahmens 128 an der umlaufenden Dichtfläche 58 der Druckglocke 50 angelegt und festgelegt. Bei einer Absenkung der Druckglocke 50 kann das vom Transportrahmen 128 weiterhin festgehaltene Schichtstoff-Stück 10 innerhalb des 4-Säulen-Gestells 30 in Richtung Werkzeugwanne 60 transportiert werden.

Wie Fig. 3, 4 und 24 zeigen, ist längs einer Längsseite 61' des 4-Säulen-Gestells 30 eine Transportstrecke 150 eingerichtet, längs der das zu kaschierende 3D-Substrat 3 transportiert werden kann. Längs dieser Transportstrecke 150 erstreckt sich eine stationär angeordnete und mit einer Lineareinrichtung ausgerüstete Schiene 152, längs der ein erster Schlitten 154 und ein zweiter Schlitten 156 hin und her verschiebbar sind. Der erste Schlitten 152 trägt eine erste Transportplatte 155, und der zweite Schlitten 154 trägt eine zweite Transportplatte 157. Längs dieser Transportstrecke 150 ist eine Auflegestation 160 (in Fig. 4 rechts dargestellt), eine Haltestation 163 (in Fig. 4 mittig dargestellt) und eine Entnahmestation 165 (in Fig. 4 links dargestellt) eingerichtet. In der Auflegestation 160 wird auf der ersten Transportplatten 155 eine Trägerplatte 168 angeordnet, auf der ein zu kaschierendes 3D-Substrat 3 befestigt ist. Soweit es die Größenverhältnisse zu lassen, könnten auf einer Trägerplatte 168 auch mehrere 3D-Substrate 3 angeordnet werden, so dass mit einem einzigen Kaschierungszyklus eine Mehr-Nutzen-Anwendung erzielt wird. Die Trägerplatte168 besteht aus einem stabilen, dauerhaften Kunststoff und enthält in jedem Eckenbereich magnetisch ansprechbares Material. Vorzugsweise besteht die Trägerplatte 168 aus TEFLON® oder ist mit einem Trennmittel, wie beispielsweise TEFLON® beschichtet, was das Ablösen von Schichtstoff-Resten erleichtert, die sich im Verlauf der Kaschierung auf der Trägerplatte 168 abscheiden werden. Mit Hilfe des ersten Schlittens 154 wird die erste Transportplatte 155 aus der Auflegestation 160 in die Haltestation 163 verfahren. In die dann leere Auflegestation 160 kann erneut eine weitere erste Transportplatte 155' eingesetzt werden, auf der eine weitere Trägerplatte 168' abgelegt wird, auf der ein weiteres zu kaschierendes 3D-Substrat 3 befestigt ist. Je nach Entwicklungsstand des Formwerkszeugs kann die Handhabung von Transportplatten 155, 155', 157 und Trägerplatten 168 und 168' händisch oder von einem Automaten vorgenommen werden. Es wird die mit Fig. 4 dargestellte Anordnung erhalten.

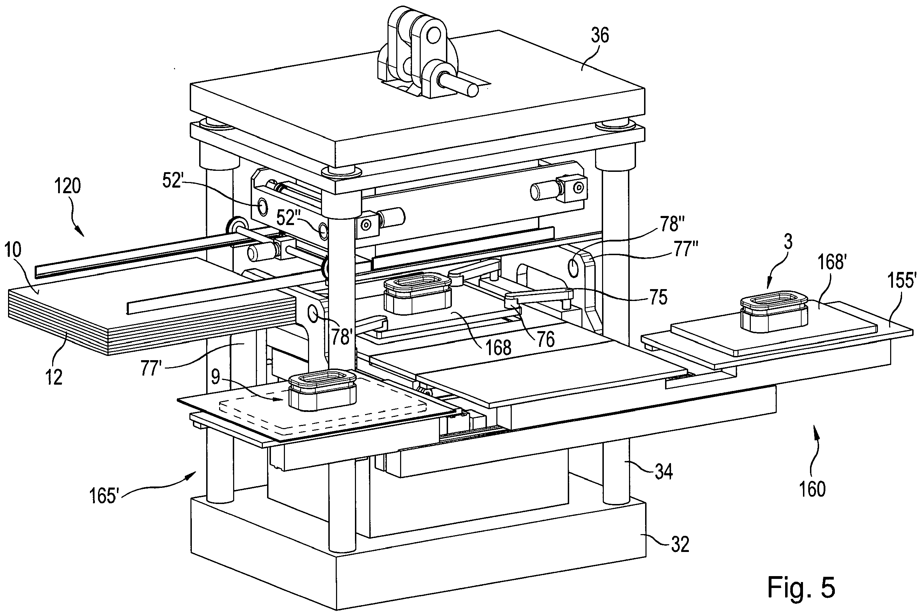

Den oberen Abschluss der Werkzeugwanne 60 bildet der Zwischenrahmen 70, der einen geschlossenen Ausschnitt 72 umgibt, in den mit enger Toleranz die das 3D-Substrat 3 festhaltende Trägerplatte 168 eingesetzt werden kann. Die eingesetzte Trägerplatte 168 liegt dann auf der Tischplatte 82 des Tisches 80 auf, wenn dieser seine obere Totstellung einnimmt. Längs der beiden Stirnwände 61' und 61" der Werkzeugwanne 60 ist je eine Schiene 73' und 73" stationär angeordnet, an der sich je eine Lineareinrichtung befindet, mit der je ein Schlitten 74' bzw. 74" längs der Schiene 73' bzw. 73" hin und her verstellt werden kann. An jedem Schlitten 74', 74" befinden sich je zwei beabstandet angeordnete Hub- und Schwenkarme 75, die gegenüber dem Schlitten 74', 74" anhebbar sind, und die aus einer, sich parallel zum Schlitten 74', 74" erstreckenden Ausrichtung verschwenkbar sind. Am freien Ende jedes Hub- und Schwenkarmes 75 ist je ein aktivierbarer Elektromagnet 76 angebracht. Nachdem diese Schlitten 74', 74" neben eine in der Haltestation 163 befindliche erste Transportplatte 155 verstellt worden sind, kontaktieren diese aktivierten Elektromagnete 76 je einen Eckenbereich der Trägerplatte 168 und heben diese mit Hilfe von Magnetkraft an. Eine Verstellung der beiden Schlitten 74', 74" transportiert die angehobene Trägerplatte 168 über den Zwischenrahmen 70, wo die Trägerplatte 168 abgesenkt und in den Ausschnitt 72 eingesetzt wird. Nach Deaktivierung der Elektromagnete 76 können diese von der Trägerplatte 168 gelöst werden, und die Hub- und Schwenkarme 75 können in eine zum Schlitten 74' bzw. 74" parallele Ausrichtung verschwenkt werden. Die Trägerplatte 168 mit dem zu kaschierenden 3D-Substrat 3 liegt dann auf der Tischplatte 82 des Tisches 80 auf, wie mit Fig. 5 dargestellt. In einem folgenden Schritt wird die Hubeinrichtung betätigt, und der Tisch 80 wird innerhalb der Werkzeugwanne 60 bis in seine untere Totstellung abgesenkt.

Wie mit Fig. 4 und 5 dargestellt, nimmt die Druckglocke 50 ihre obere Totstellung ein, und der ein Schichtstoff-Stück 10 festhaltende Transportrahmen 122 liegt an der Dichtfläche 58 der Druckglocke 50 an. Aus dieser oberen Totstellung wird die Druckglocke 50 durch Aktivierung der Kniehebelanordnung 40 oder durch Aktivierung der Doppelkniebel-Anordnung 130 abgesenkt. Diese Absenkung der Druckglocke 50 wird so lange fortgesetzt, bis das Schichtstoff-Stück 10 auf dem Zwischenrahmen 70 aufliegt. Mit Hilfe der Kniehebelanordnung 40 bzw. mit Hilfe der Doppelkniehebel-Anordnung 130 wird ein gewisser mechanischer Druck auf die Druckglocke 50 ausgeübt. Es wird eine Anordnung geschaffen, in welcher das ebene flexible Schichtstoff-Stück 10 den Druckglocken-Innenraum 55 druckdicht vom Werkzeugwannen-Innenraum 65 trennt.

In dieser Anordnung nimmt die Druckglocke 50 ihre untere Totstellung ein. In dieser unteren Totstellung kann die Druckglocke 50 gegenüber der Werkzeugwanne 60 verriegelt werden. Hierzu ist parallel und beabstandet zur einen Werkzeugwannen-Stirnwand 63' ein erster, aus einer massiven Stahlplatte erzeugter Rahmen 77' an der Werkzeugwanne 60 angebracht. Im oberen Steg dieses ersten Rahmens 77' sind zwei beabstandete Bohrungen 78' ausgespart. In gleicher Weise ist parallel und beabstandet zur anderen gegenüber befindlichen Werkzeugwannen-Stirnwand 63" ein zweiter, aus einer massiven Stahlplatte erzeugter Rahmen 77" an der Werkzeugwanne 60 angebracht. Im oberen Steg dieses zweiten Rahmens 77" sind zwei beabstandete Bohrungen 78" ausgespart. Wenn die Druckglocke 50 ihre untere Totstellung einnimmt, dann können, an der Druckglocke 50 angebrachte und motorisch verstellbare Riegelbolzen 52', 52", 56' und 56" in diese Bohrungen 78' bzw. 78" eingeschoben werden. Damit ist die Druckglocke 50 in ihrer Schließstellung gegenüber der Werkzeugwanne 60 arretiert, und der Antrieb der Kniehebel-Anordnung 40 bzw. der Doppelkniehebel-Anordnung 130 kann entlastet werden.

Zu diesem Zeitpunkt herrscht in dem druckdicht abgeschlossenen Druckglocken-Innenraum 55 und in dem druckdicht abgeschlossenen Werkzeugwannen-Innenraum 65 je der Luftdruck der umgebenden Atmosphäre. In einem nächsten Schritt wird - mit Hilfe nicht dargestellter Mittel, wie etwa Vakuumpumpe, Vakuumbehälter und Steuerorganen - sowohl im Druckglocken-Innenraum 55 wie im Werkzeugwannen-Innenraum 65 ein Druckmitteldruck kleiner/gleich 30 kPa eingestellt. Typischerweise wird hierzu der ursprünglich vorhandene Atmosphärendruck mit Hilfe geeigneter Mittel vermindert; die beiden Innenräume 55 und 65 werden evakuiert. Typischerweise wird in beiden Innenräumen 55, 65 der gleiche absolute Druckmitteldruck eingestellt. Bei Bedarf kann im Werkzeugwannen-Innenraum 65 ein etwas höherer absoluter Luftdruck verbleiben, der einem durch Erwärmung des Schichtstoffes 10 bedingtem Durchhängen des erwärmten Schichtstoffes 10 entgegen wirkt.

Es ist jetzt ein Zustand erreicht, bei dem
- innerhalb der Werkzeugwanne 60 der Tisch 80 bis zu seiner unteren Totstellung abgesenkt ist;
- auf der Tischplatte 82 des so angeordneten Tisches 80 eine Trägerplatte 168 aufliegt, auf der wenigstens ein zu kaschierendes 3D-Substrat 3 befestigt ist; und
- im Druckglocken-Innenraum 55 sowie im Werkzeugwannen-Innenraum 65 ein absoluter Druckmitteldruck kleiner/gleich 30 kPa herrscht.

Zur weiteren Erläuterung wird auf die Fig. 10, 11 und 12 Bezug genommen, die je eine "geschnittene" Draufsicht mit "offener" Werkzeugwanne in diesem Zustand zeigen.

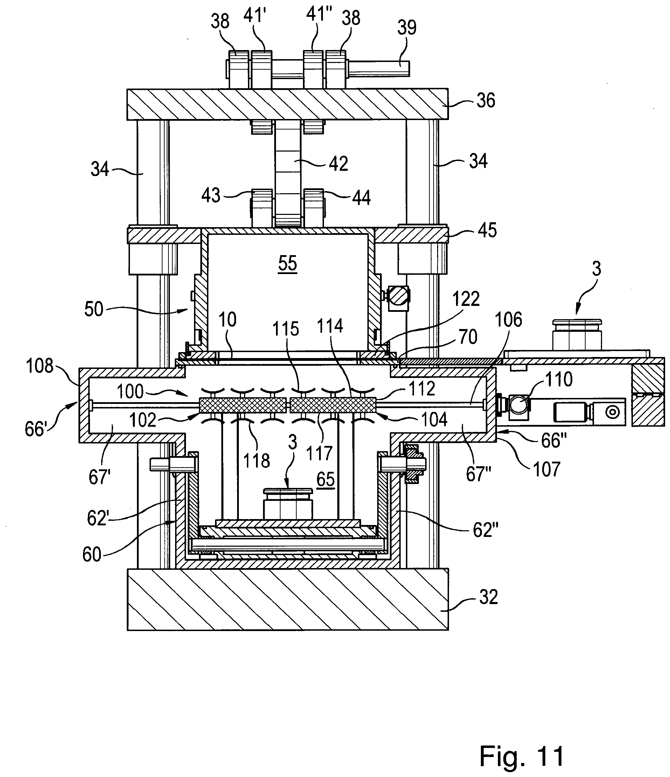

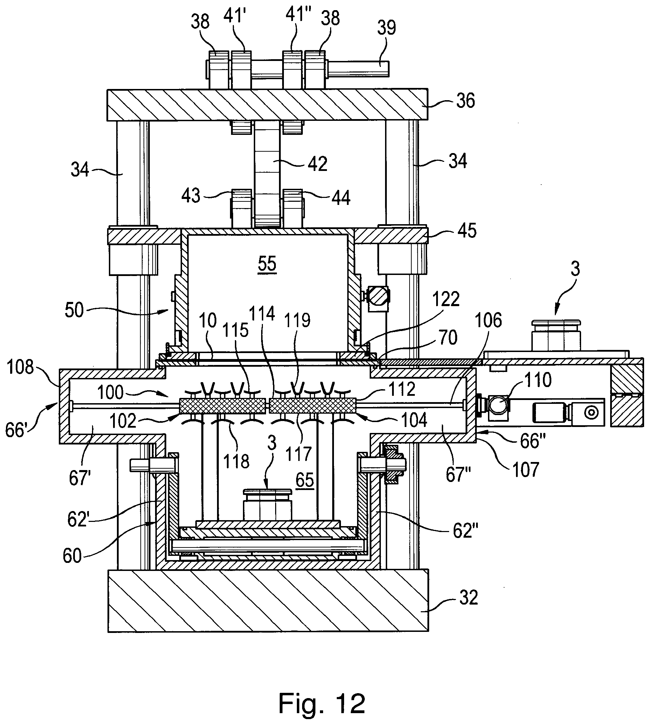

Bei dieser Anordnung besteht ein deutlicher Abstand zwischen dem auf dem abgesenkten Tisch 80 aufliegenden 3D-Substrat 3 und dem auf dem Zwischenrahmen 70 der Werkzeugwanne 60 aufliegenden Schichtstoff-Stück 10. Für einen typischen Tisch 80 mit einer rechteckigen Tischfläche von 540 mm x 360 mm kann dieser Abstand etwa 400 mm betragen. Bei dieser Anordnung ist innerhalb der Werkzeugwanne 60 ein erheblicher freier Zwischenraum 90 geschaffen, dessen Höhe diesem Abstand entspricht. Wie oben ausgeführt und in den Fig. 10 mit 13 dargestellt, ist an jeder Werkzeugwannen-Seitenwand 62', 62" je ein horizontal ausgerichteter Kasten 66' bzw. 66" angesetzt, der je einen horizontal ausgerichteten Rückzugsraum 67' bzw. 67" begrenzt, der zum Wanneninnenraum 65 offen ist. Im Rückzugraum 67' befindet sich eine erste "halbe" verfahrbare und horizontal ausgerichtete Heizstrahler-Anordnung 102, die in den Wanneninnenraum 65 verfahren werden kann. Im anderen Rückzugsraum 67" befindet sich eine zweite "halbe" verfahrbare und horizontal ausgerichtete Heizstrahler-Anordnung 104, die die in den Wanneninnenraum 65 verfahren werden kann. Aus diesen beiden "halben" Heizstrahler-Anordnungen kann im freien Zwischenraum 90 eine horizontal ausgerichtete Heizstrahler-Anordnung 100 geschaffen werden, wie mit den Fig. 11 und 12 dargestellt. Alternativ könnte in einem - nicht dargestellten - größeren Rückzugsraum die gesamte Heizstrahler-Anordnung 100 untergebracht und aus diesem größeren Rückzugsraum in den freien Zwischenraum 90 innerhalb der Werkzeugwanne 60 verfahren werden; diese Alternative hat sich jedoch als konstruktiv aufwendiger und weniger zweckmäßig erwiesen.

An den gegenüber liegenden Innenseiten der Werkzeugwannen-Stirnwände 63' und 63" sowie der angrenzenden Kastenstirnwände ist - außerhalb der Bewegungsbahn des Tisches 80 - je eine Führungsschiene befestigt, in der je ein randständiges Profil der "halben" Heizstrahler-Anordnungen 102 und 104 eingehängt ist. Die beiden "halben" Heizstrahler-Anordnungen 102 und 104 sind längs dieser Führungsschienen verschiebbar. Das Hin- und Herbewegen dieser "halben" Heizstrahler-Anordnungen 102 und 104 bewirkt eine motorisch angetriebene Gewindespindel 106, die abgedichtet durch eine (in Fig. 12 rechts dargestellte) Kastenseitenwand 107 geführt ist und in der gegenüberliegenden Kastenseitenwand 108 gelagert ist. Der Getriebemotor 110 dreht die Gewindespindel 106 in einer Drehrichtung, welche die "halben" Heizstrahler-Anordnungen 102 und 104 aus ihren Rückzugsräumen 67' und 67" in den Wanneninnenraum 65 verfährt, oder in der entgegengesetzten Drehrichtung, welche diese "halben" Heizstrahler-Anordnungen 102 und 104 aus dem Wanneninnenraum 65 wieder in ihre Rückzugsräume 67' und 67" zurückführt. Die in den Wanneninnenraum 65 verfahrenen "halben " Heizstrahler-Anordnungen 102 und 104 bilden zusammen die Heizstrahler-Anordnung 100, die gemäß Darstellung nach Fig. 12 horizontal ausgerichtet ist.

Wie aus Fig. 11 ersichtlich, hat die Heizstrahler-Anordnung 100 einen Träger 112, auf dessen Oberseite 114 die Heizstrahler 115 angebracht sind, und an dessen Unterseite 117 die Heizstrahler 118 angebracht sind. Die Heizstrahler 115 und 118 können unterschiedlich angesteuert werden. Der zum Betrieb der Heizstrahler 115 und 118 erforderliche Strom wird über eine Energiekette zugeführt, die ihrerseits an ein Kabel angeschlossen ist, das druckdicht durch eine Werkzeugwannenwand geführt ist. Mit Hilfe der Heizstrahler 115 kann der auf dem Zwischenrahmen 70 aufliegende Schichtstoff 10 angestrahlt und gezielt erwärmt werden, sowie der an der Unterseite des Schichtstoffes 10 befindliche Kleber aktiviert werden. Mit Hilfe der Heizstrahler 118 kann das auf dem abgesenkten Tisch 80 und auf der Trägerplatte 158 befindliche 3D-Substrat 3 angestrahlt und gezielt erwärmt werden. Die Anordnung der horizontal ausgerichteten Heizstrahler-Anordnung 100 im Zwischenraum 90 zwischen dem auf dem Zwischenrahmen 70 aufliegenden Schichtstoff 10 und dem auf dem abgesenkten Tisch 80 befindlichen 3D-Substrat 3 sowie die unabhängige und gezielte Ansteuerung der oberen Heizstrahler 115 sowie die unabhängige und gezielte Ansteuerung der unteren Heizstrahler 118 schaffen Möglichkeiten zur schnellen und jeweils gezielten Erwärmung von Schichtstoff 10 und 3D-Substrat 3, die mit dem herkömmlichen TOM-Prozess und dessen Vorrichtungen nicht realisierbar waren.

Die Fig. 12 zeigt eine alternative Heizstrahler-Anordnung 100, die einen Träger 112 hat, auf dessen Oberseite 114 zusätzlich zu den Heizstrahlern 115 schematisch angedeutete aktivierbare UV-Strahler 119 angebracht sind. Auch diese UV-Strahler 119 strahlen nach oben ab, und mit deren Aktivierung kann gezielt ein UV-härtender Kleber an der Anlageseite des Schichtstoffes 10 aktiviert werden.

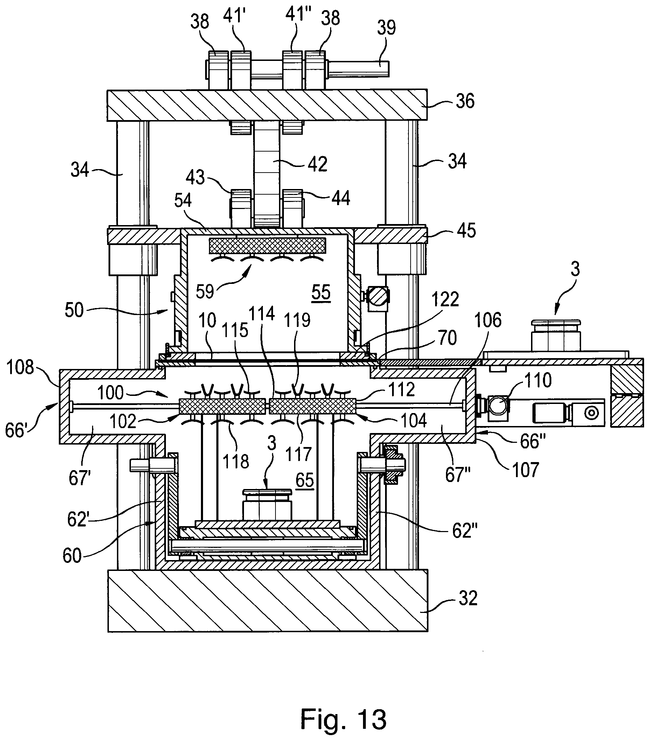

Bei Bedarf können zusätzliche Heizstrahler 59 an der Innenseite der Deckenwand 54 der Druckglocke 50 vorgesehen werden, wie das mit Fig. 13 angedeutet ist.

Als Heizstrahler werden vorzugsweise IR-Flächenstrahler eingesetzt, die als Heizmedium eine breite Metallfolie enthalten, die in ein hoch hitzebeständiges Isolationsmaterial eingebettet ist. Bei Stromdurchgang erhitzt sich diese Metallfolie auf etwa 800 °C und glüht gleichmäßig. Es wird mittel- bis langwellige IR-Strahlung abgestrahlt, bei Wellenlängen von etwa 2,6 bis 9,6 µm. Mit Hilfe einer elektronischen Steuerung kann innerhalb dieses Bereichs jede gewünschte Wellenlänge ausgewählt werden und damit jede gewünschte Temperatur am zu erwärmenden Gut ausgewählt werden. Damit können insbesondere Kunststofffolien auf Temperaturen bis zu 800 °C erwärmt werden. Eine Besonderheit dieser Folien-Flächenstrahler ist ihr außer-ordentlich rasches Ansprechverhalten; nach dem Einschalten kann innerhalb 8 bis 10 sec eine Temperatur von 800 °C erreicht werden; beim Ausschalten fällt die Temperatur innerhalb von 500 sec von 800 °C auf weniger als 200 °C ab. Mini-Infrarot-Strahler dieser Art sind bereits in Flächengrößen ab etwa 120 x 500 mm erhältlich, aus denen modulartig die gewünschte Strahlerfläche aufgebaut werden kann. IR-Flächenstrahler dieser Art werden beispielsweise von KRELUS AG, 5042 Hirschthal, Schweiz vertrieben.

Als UV-Strahler kommen insbesondere mit Luftkühlung arbeitende UV-LED-Systeme in Betracht. Geeignete UV-LED-System werden beispielsweise von Heraeus Noblelight GmbH, 63450 Hanau, DE vertrieben. Mit solchen UV-Strahlern kann ein UV-härtender Kleber innerhalb weniger Sekunden aktiviert und ausgehärtet werden.

Beim erfindungsgemäßen Verfahren werden Zykluszeiten von etwa 60 bis 150 sec, insbesondere von etwa 60 bis 120 sec angestrebt. Es steht eine Aufheizdauer von etwa 15 bis 40 sec zur Verfügung. Diese Aufheizdauer sollen die aktivierten Heizstrahler 115 und 118 sowie gegebenenfalls die aktivierten UV-Strahler 119 innerhalb des Wanneninnenraums 65 verbringen.

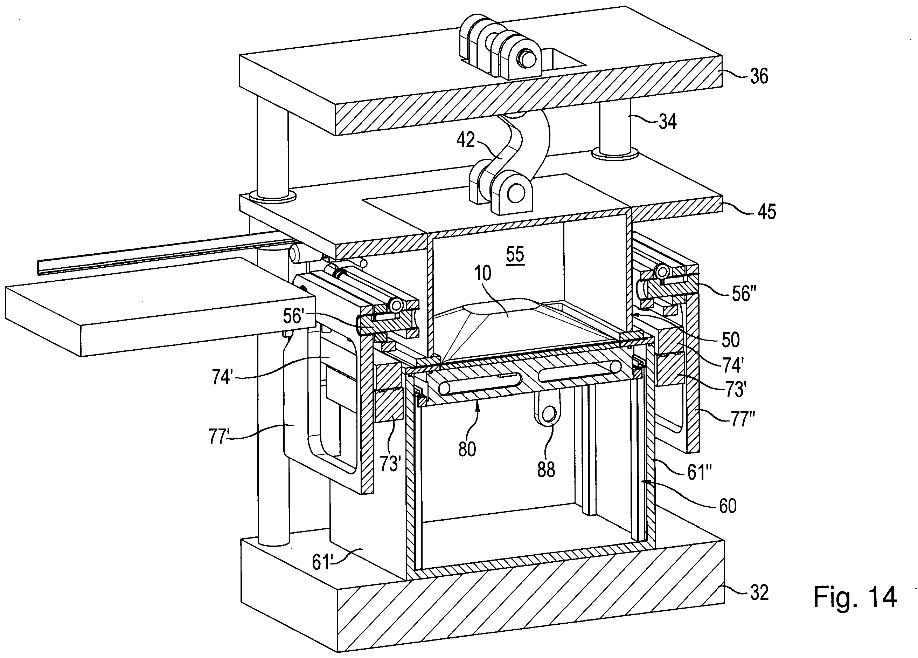

Nachdem durch Aktivierung der Heizstrahler 115 der Schichtstoff 10 auf seine Verformungstemperatur erwärmt worden ist, und gegebenenfalls durch Aktivierung der UV-Strahler 119 ein UV-härtenden Kleber am Schichtstoff 10 aktiviert worden ist, werden die "halben" Heizstrahler-Anordnungen 102 und 104 aus dem Wanneninnenraum 65 wieder in ihre Rückzugsräume 67' und 67" zurückgefahren. Der Tisch 80 mit dem erwärmten 3D-Substrat 3 wird angehoben, bis das erwärmte 3D-Substrat 3 den zwischen Zwischenrahmen 70 und Dichtfläche 58 an der Druckglocke 50 eingespannten, erwärmten Schichtstoff 10 durchdringt. Der erwärmte Schichtstoff 10 wird vom erwärmten 3D-Substrat 3 zeltartig mitgeführt und legt sich an die Kontur des 3D-Substrats 3 an, wie das mit Fig. 14 angedeutet ist. Zu diesem Zeitpunkt herrscht im Wanneninnenraum 65 und im Druckglocken-Innenraum 55 ein abgesenkter Druckmitteldruck kleiner/gleich 30 kPa. Nachdem der Tisch 80 seine obere Totstellung erreicht hat, wird der Druckmitteldruck im Druckglocken-Innenraum 55 angehoben; zuerst wird Luft von Atmosphärendruck in den Druckglocken-Innenraum 55 eingeleitet; anschließend wird ein fluides Druckmittel, vorzugsweise Druckluft eingeführt, um im Druckglocken-Innenraum 55 einen Druckmitteldruck von 2 bis 18 bar einzustellen; diese Druckmitteldruck-Werte sind absolute Werte; ein Druckmitteldruck von 2 bar ist folglich um etwa ein bar höher, als der umgebende Atmosphärendruck. Vorzugsweise wird im Druckglocken-Innenraum 55 ein Druckmitteldruck von 3 bis 15 bar eingestellt. Der Druckmitteldruck im Wanneninnenraum 65 wird weiterhin bei einem Wert kleiner/gleich 30 kPa gehalten.

Die Erhöhung des Druckmitteldruckes im Druckglocken-Innenraum 55 schmiegt den erwärmten Schichtstoff 10 eng und detailgetreu an die Kontur des 3D-Substrates 3 an, wie das schematisch mit Fig. 14 angedeutet ist. Der an der Anlageseite des Schichtstoffes 10 befindliche Kleber ist durch die vorausgegangene gezielte Erwärmung und gegebenenfalls gezielte UV-Strahlung aktiviert, und es kann eine gute Haftung zwischen aktiviertem Kleber und ebenfalls erwärmtem 3D-Substrat 3 erhalten werden. Der erhöhte Druckmitteldruck wird so lange aufrechterhalten, bis die Kaschierung abgeschlossen ist; dies kann mehrere Sekunden dauern, beispielsweise bis zu etwa 30 sec.

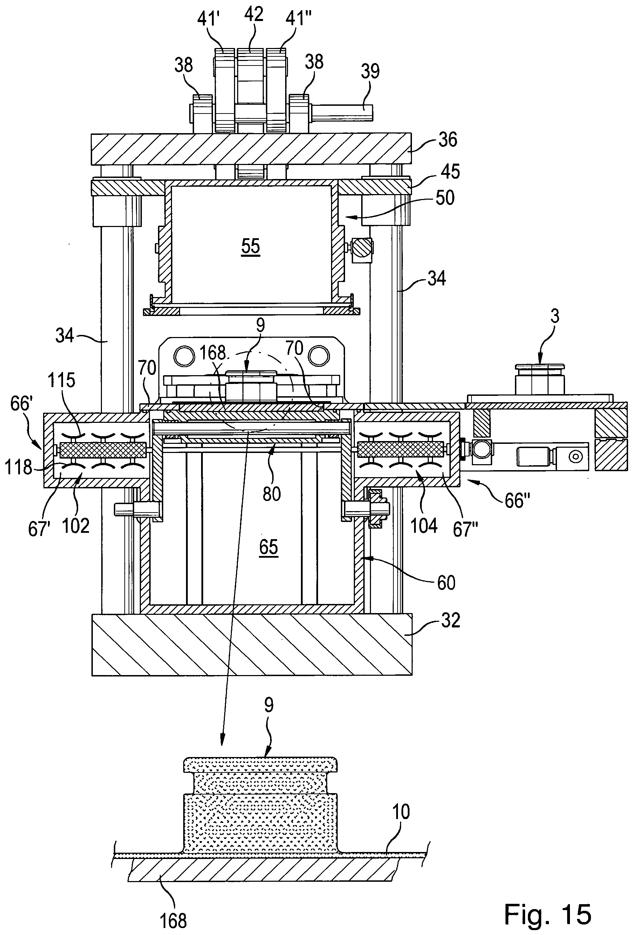

Anschließend wird sowohl im Wanneninnenraum 65 wie im Druckglocken-Innenraum 55 Atmosphärendruck eingestellt. Die Druckglocke 50 wird angehoben; der Transportrahmen 122 liegt weiterhin an der Dichtfläche 58 der Druckglocke 50 an und übt eine Saugkraft auf den Schichtstoffrand aus; beim anfänglichen Anheben des Transportrahmens 122 wird der Schichtstoffrand vom vergleichsweise kalten Zwischenrahmen 70 getrennt; es wird die mit Fig. 15 dargestellte Anordnung erhalten. Der Schichtstoff 10 schmiegt sich eng anliegend und auch feine Details wiedergebend an das kaschierte 3D-Substrat 9 an; überschüssiger Schichtstoff 14 ist an die Oberfläche der Trägerplatte 168 angelegt; eine ausschnittsweise Detaildarstellung in größerem Maßstab zeigt das so erhaltene Produkt.

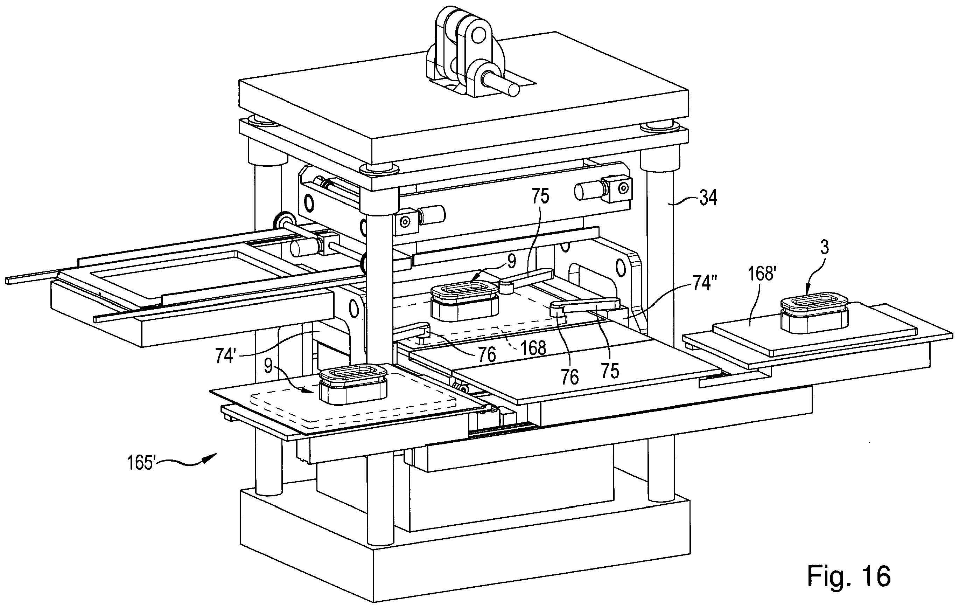

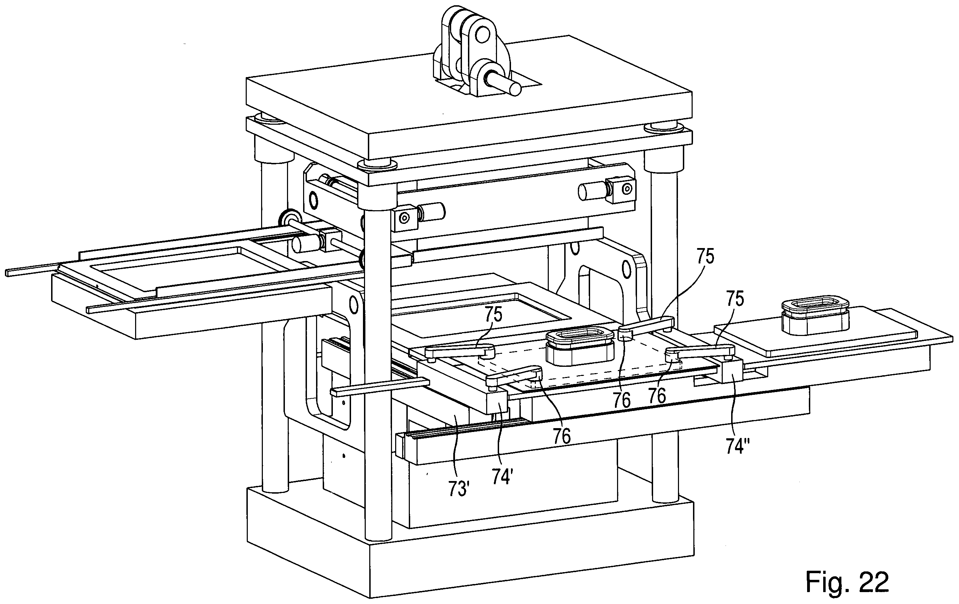

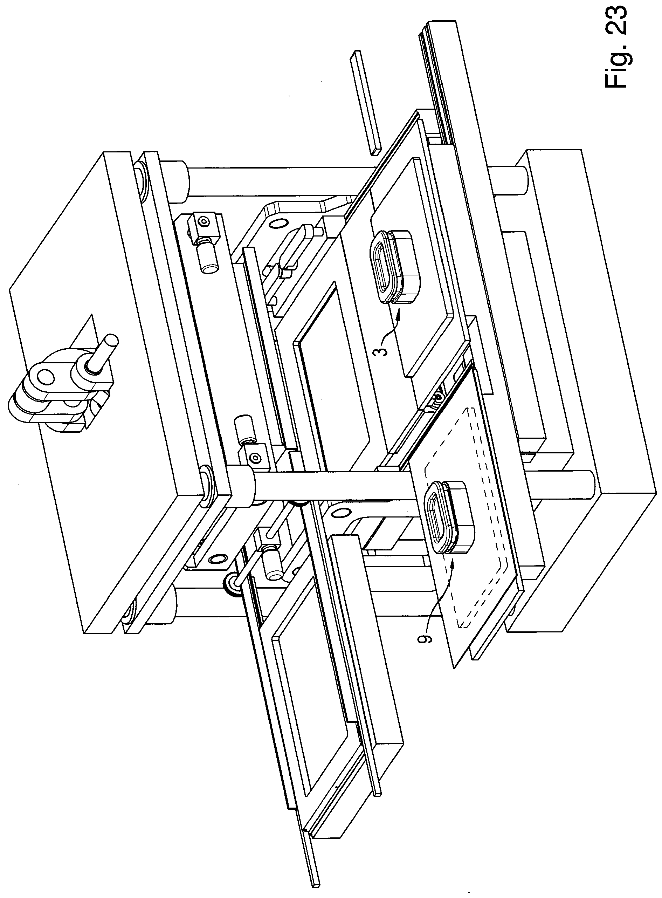

Die oben beschriebenen Hub- und Schwenkarme 75 werden aktiviert; ihre aktivierten Elektromagnete 76 heben die Trägerplatte 168 an; die Schlitten 74', 74" werden aktiviert, und die an den bewegten Schlitten 74', 74" sitzenden, aktivierten Hub-und Schwenkarme 75 transportieren die Trägerplatte 168 mit dem kaschierten Produkt aus dem Formwerkzeug 20 in die Haltestation 163, wie mit Fig. 16, 22 und 23 dargestellt. Eine Aktivierung des zweiten Schlittens 154 der Transportstrecke 150 transportiert die zweite Transportplatte 157 mit der Trägerplatte 168 und dem kaschierten Produkt aus der Haltestation 163 in die Entnahmestation 165. Dort kann das kaschierte Produkt entnommen und nach Bedarf bearbeitet werden. Transportplatte 167 und Trägerplatte 168 können händisch oder von einem Automaten in die Auflegestation 160 gebracht werden, um einen neuen Kaschierungszyklus zu starten.

### BEISPIELE

Die nachfolgenden Beispiele dienen zur weiteren Erläuterung der Erfindung ohne diese einzuschränken.

### Beispiel 1:

Es wird ein Formwerkzeug verwendet, wie in den Figuren 2 mit 5 dargestellt und vorstehend im Einzelnen beschrieben.

Es wird ein 3D-Substrat verwendet, wie in Figuren 1a und 1b dargestellt und vorstehend im Einzelnen beschrieben.

Das 3D-Substrat wird auf einer rechteckigen Trägerplatte stabil befestigt; die Trägerplatte hat Abmessungen von 530 mm x 350 mm und besteht aus Polyamid. Die Trägerplatte ist mit TEFLON® beschichtet.

Als Schichtstoff dient eine 1 mm starke Strukturfolie aus einem Blend aus TPU und PMMA, die tief-schwarz eingefärbt ist, und die an ihrer Sichtseite im Negativdruck mit einer rautenförmigen Struktur versehen ist. Eine solche Strukturfolie wird beispielsweise von EXEL GMBH, 81301 Rohrdorf, DE vertrieben.

Als Kleber dient das von Bayer MaterialScience vertriebene DESMOMELT 530. Hierbei handelt es sich um ein granulatförmiges Produkt, das ab 75 °C thermisch aktivierbar ist. Das Granulat wird in einem Extruder zu einer vorplastifizierten Schmelze verarbeitet, die mit Hilfe einer Schlitzdüse auf der Anlageseite der Strukturfolie in einem begrenzten Flächenabschnitt aufgebracht wird, der an der Oberfläche des zu kaschierenden 3D-Substrates anliegen wird. Anschließend wird abgekühlt und getrocknet. Die an der Strukturfolie befindliche Kleberschicht hat eine Schichtdicke von 60 µm und bleibt auch nach einer Aufbewahrungsdauer von mehr als 3 Monaten einsatzbereit und thermisch aktivierbar. Der so vorbereitete Schichtstoff wird auf Abmessungen von 550 mm x 370 mm zurechtgeschnitten.

Am Formwerkzeug nimmt die Druckglocke ihre obere Totstellung ein. Der innerhalb der Werkzeugwanne befindliche Tisch hat eine rechteckige Tischfläche von 540 mm x 360 mm und ist in seine obere Totstellung gefahren. Hier befindet sich die Tischplatte unmittelbar unter dem Zwischenrahmen, welcher den oberen Abschluss der Werkzeugwanne bildet. Mit Hilfe der Transportstrecke ist die, das 3D-Substrat festhaltende Trägerplatte über den Zwischenrahmen verfahren worden, und dort mit Hilfe der aktivierten Hub- und Schwenkarme in den geschlossenen Ausschnitt innerhalb des Zwischenrahmens abgesenkt worden. Die Trägerplatte liegt auf der Tischplatte auf. Die Trägerplatte passt genau in den Ausschnitt; die Trennfuge ist kleiner als 1 mm.

Das mit dem beschriebenen Kleber versehene und Umgebungstemperatur aufweisende Schichtstoff-Stück wird mit Hilfe von Saugkraft vom Transportrahmen gegriffen und vom Transportrahmen in eine Position unterhalb der, ihre obere Totstellung einnehmenden Druckglocke transportiert. Der, das Schichtstoff-Stück weiterhin festhaltende Transportrahmen wird an einer umlaufenden Dichtfläche am Rand der Druckglocke angelegt und dort festgehalten.

Jede "halbe" Heizstrahler-Anordnung befindet sich in ihrem Rückzugsraum; als Heizstrahler werden die beschriebenen IR-Flächenstrahler verwendet, die als Heizelement eine zum Glühen bringbare Metallfolie enthalten; die Heizstrahler sind nicht aktiviert. Der, die Trägerplatte mit dem festgehaltenen 3D-Substrat tragende Tisch wird in seine untere Totstellung gefahren. Die Druckglocke, mit dem weiterhin das Schichtstoff-Stück haltenden Transportrahmen wird in ihre untere Totstellung gefahren; das Schichtstoff-Stück liegt auf dem Zwischenrahmen auf und nimmt eine horizontale Ausrichtung ein. Es wird eine Anordnung geschaffen, in welcher das Schichtstoff-Stück zwischen Druckglocke und Werkzeugwanne eingespannt ist und den Druckglocken-Innenraum druckdicht vom Wanneninnenraum trennt.

Der Druckglocken-Innenraum ist über einen flexiblen, großvolumigen Vakuumschlauch und Steuerorgane an einen kleineren Vakuumbehälter angeschlossen. Der Wanneninnenraum ist über eine großvolumige Vakuumleitung und Steuerorgane an einen größeren Vakuumbehälter angeschlossen; hier können auch zwei Vakuumbehälter vorgesehen werden. Die Vakuumbehälter sind vorab mit Hilfe einer Vakuumpumpe auf einen Restdruck von etwa 5 kPa, (etwa 40 Torr) evakuiert worden. Durch Verstellung der Steuerorgane werden der Druckglocken-Innenraum und der Wanneninnenraum an den/die je zugeordneten evakuierten Vakuumbehälter angeschlossen. Im Wanneninnenraum wird ein Druckmitteldruck von etwa 10 kPA (etwa 80 Torr) eingestellt. Im Druckglocken-Innenraum wird ein etwas kleinerer Druckmitteldruck eingestellt.

Das auf dem abgesenkten Tisch befindliche 3D-Substrat ist etwa 400 mm von dem eingespannten Schichtstoff entfernt. In den so geschaffenen freien Zwischenraum werden die beiden "halben" Heizstrahler-Anordnungen gefahren und bilden die Heizstrahler-Anordnung, welche den Werkzeugwannen-Querschnitt fast, aber nicht völlig ausfüllt. Die Heizstrahler werden aktiviert; die nach oben abstrahlenden Heizstrahler werden mit nahezu maximaler Leistung betrieben; die nach unten abstrahlenden Heizstrahler werden mit verminderter Leistung betrieben. Nach etwa 25 sec wird mit Hilfe der Heizstrahler-Pyrometer an der Schichtstoff-Oberfläche eine Temperatur von etwa 180 °C beobachtet. Die Kleberschicht ist über ihre Aktivierungstemperatur hinaus erwärmt worden. Die 3D-Substrat-Oberfläche erreicht eine Temperatur von etwa 80 °C. Die Heizstrahler werden desaktiviert, und die "halben" Heizstrahler-Anordnungen werden in ihren jeweiligen Rückzugsraum zurückgefahren.

Unter Aufrechterhaltung des abgesenkten Druckmitteldrucks in beiden Innenräumen wird der Tisch langsam angehoben bis er seine obere Totstellung erreicht. Das 3D-Substrat durchdringt die Ebene des eingespannten Schichtstoffes und führt diesen zeltartig mit sich. Die aktivierte Kleberschicht kontaktiert die warme 3D-Substrat-oberfläche und reagiert und verbindet sich mit dieser. Im Sinne einer Positivformung wird der erwärmte Schichtstoff graduell und schonend an die warme 3D-Substrat-oberfläche angelegt.

Nachdem der Tisch seine obere Totstellung erreicht hat, wird im Wanneninnenraum weiterhin der verminderte Druckmitteldruck aufrechterhalten, und der Druckglocken-Innenraum wird zuerst mit dem umgebenden Atmosphärendruck belüftet und anschließend mit Druckluft unter einem Druckmitteldruck von 12 bar beaufschlagt. Der warme Schichtstoff wird eng und getreu an die Kontur des 3D-Substrates angeformt und angepresst, sowie an die freie Oberfläche der Trägerplatte angelegt. Der hohe Druckmitteldruck wird etwa 12 sec lang aufrechterhalten, um ein gute Haftung der Klebeverbindung zu erzielen. Anschließend wird der Wanneninnenraum belüftet, und der Druckglocken-Innenraum wird entlüftet; in beiden Räumen wird der umgebende Atmosphärendruck eingestellt. Hierbei werden auch der umgeformte Schichtstoff und das 3D-Substrat unter die Aktivierungstemperatur des Klebers abgekühlt. Man lässt wenigstens weitere 10 sec lang abkühlen.

Anschließend werden die Druckglocke und der weiterhin damit verbundene Transportrahmen angehoben. Die vom Transportrahmen ausgehende Saugkraft trennt den Schichtstoffrand rückstandsfrei von der Anlagefläche am Zwischenrahmen. Ein weiteres Anheben der Druckglocke trennt den Transportrahmen vom Schichtstoffrand. Eine Aktivierung der Hub-und Schwenkarme hebt die Trägerplatte über das Niveau des Zwischenrahmens an und befördert schließlich die Trägerplatte mit dem kaschierten Produkt aus dem Formwerkzeug heraus. Seit dem Einführen der Trägerplatte mit dem zu kaschierenden 3D-Substrat in das Formwerkzeug ist eine Zeitspanne von etwa 52 sec vergangen.

Das kaschierte 3D-Substrat mit dem abstehenden Schichtstoff wird von der Trägerplatte getrennt. Das so erhaltene Produkt kann mit Hilfe eines 5-Achs-Fräs-Roboters beschnitten und bearbeitet werden. Alternativ kann der abstehende Schichtstoff mit Hilfe eines wandernden Laserstrahles abgetrennt werden. Am so erhaltenen kaschierten Körper liegt die Strukturfolie glatt und störungsfrei auch an der konkaven Aushöhlung an der Oberseite des Körpers an. Die Strukturfolie umgreift auch den umlaufenden Steg, ist in die umlaufende Nut am Steg eingetreten und kleidet diese aus und liegt fest haftend an der Stirnfläche dieses Steges an. Es kann keine Unterbrechung der Klebefläche an dieser Stirnfläche festgestellt werden. An der Oberseite des kaschierten Körpers und an dessen konkaver Aushöhlung ist keine Verzerrung der Struktur der Strukturfolie feststellbar.

### Beispiel 2:

Im Wesentlichen wird das Verfahren nach Beispiel 1 wiederholt. Abweichend wird ein Zuschnitt aus der vorstehend genannten Strukturfolie verwendet, der an seiner Anlageseite vollflächig mit einer Trockenschicht aus dem gleichen Kleber versehen ist. Dieser Zuschnitt hat eine Größe, die im Wesentlichen der belegbaren Fläche am 3D-Substrat entspricht. Dieser Zuschnitt haftet mit Hilfe von rückstandsfrei entfernbarem Haftkleber an einem Stück Transferfolie. Als Transferfolie dient eine Standard-PP-Folie mit einer Schichtdicke von 300 µm Das Transferfolien-Stück hat solche Abmessungen, dass es zwischen dem Transportrahmen an der Druckglocke und dem Zwischenrahmen an der Werkzeugwanne eingespannt werden kann.

Die Evakuierung, Erwärmung, Beaufschlagung mit Hochdruck-Druckfluid, anschließende Be- und Entlüftung der Räume, Abkühlung des Produktes und Herausführung aus dem Formwerkzeug werden unter den vorstehend angegebenen Bedingungen durchgeführt. Am Produkt weist der kaschierte Körper einen Randstreifen an überschüssiger Strukturfolie in einer Breite von etwa 2 bis 4 mm auf. Dieser Randstreifen kann ohne weiteres entfernt werden. Nach Entfernung der Transferfolie wird ein Produkt erhalten, das dem Produkt nach Beispiel 1 entspricht. Jedoch ist wesentlich weniger Strukturfolie benötigt worden.

## Patentansprüche

1. Verfahren zur Herstellung
eines, mit einem Schichtstoff (10) kaschierten 3D-Substrates (9),
mit nachstehenden Verfahrensschritten:
in einem Formwerkzeug (20),
- das eine untere, ortsfest angeordnete Werkzeughälfte hat,
die eine Werkzeugwanne (60) aufweist,
die einen Werkzeugwannen-Innenraum (65) umgreift,
in dem ein absenkbarer Tisch (80) untergebracht ist, und
- das eine obere Werkzeughälfte hat, die eine, einen Innenraum (55) umgreifende Druckglocke (50) aufweist,
die bezüglich der Werkzeugwanne (60) eine benachbarte Schließstellung, sowie eine davon entfernte, angehobene Freigabestellung einnehmen kann, und
in dieser Druckglocken-Freigabestellung
- ein zu kaschierendes 3D-Substrat (3) in das Formwerkzeug eingebracht und auf dem absenkbaren Tisch (80) in der Werkzeugwanne (60) festgelegt wird, der daraufhin bis zu seiner unteren Totstellung abgesenkt wird, und ferner
- ein einlagiger oder mehrlagiger, anfänglich ebener Schichtstoff (10), der eine Sichtseite und eine gegenüberliegende Anlageseite hat, oder eine, mit einem Zuschnitt aus einem solchen Schichtstoff versehene, flexible Transferfolie
an einem oder benachbart zu einem umlaufenden Rand (58) der Druckglocke (50) angebracht wird, und
in dieser Druckglocken-Schließstellung eine Anordnung geschaffen wird,
- in welcher der Schichtstoff (10) oder die Transferfolie die in den beiden Werkzeughälften befindlichen Innenräume (55, 65) druckdicht voneinander trennt, und
- im Werkzeugwannen-Innenraum (65) ein Druckmitteldruck kleiner/gleich 30 kPa eingestellt wird, und
- im Druckglocken-Innenraum (55) zuerst ein Druckmitteldruck kleiner/gleich 30 kPa eingestellt wird und später durch Einführen von fluidem Druckmittel, insbesondere Druckluft, ein Druckmitteldruck von 2 bis 18 bar eingestellt wird, und
- der Schichtstoff (10) erwärmt wird, während in beiden Formwerkzeug-Innenräumen (55, 65) ein Druckmitteldruck kleiner/gleich 30 kPa herrscht,
- wozu an der Werkzeugwanne (60) wenigstens ein Rückzugsraum (67', 67") für wenigstens eine verfahrbar gehaltene Heizstrahler-Anordnung (100, 102, 104) ausgebildet ist, die mit aktivierbaren, nach oben abstrahlenden Heizstrahlern (115) bestückt ist, und
- zur Erwärmung des Schichtstoffes (10) diese Heizstrahler-Anordnung (100, 102, 104)
- in der Druckglocken-Schließstellung und nach Einstellung des Druckmitteldruckes kleiner/gleich 30 kPa innerhalb des Werkzeugwannen-Innenraums (65) -
aus ihrem Rückzugsraum (67', 67") in den Zwischenraum (90) zwischen Schichtstoff (10) und zu kaschierendem 3D-Substrat (3) verfahren wird, und mit Hilfe der aktivierten, nach oben abstrahlenden Heizstrahler (115) gezielt der Schichtstoff (10) erwärmt wird, und
- der so erwärmte Schichtstoff (10) über eine Kleberschicht an das 3D-Substrat (3) angelegt und ankaschiert wird, und
schließlich in beiden Formwerkzeug-Innenräumen (55, 65) der umgebende Atmosphärendruck eingestellt wird, die beiden Werkzeughälften voneinander getrennt werden, die Druckglocke (50) angehoben wird, und das mit Schichtstoff (10) kaschierte 3D-Substrat (9) aus dem Werkzeugwannen-Innenraum (65) entnommen und nach Bedarf bearbeitet wird,
**dadurch gekennzeichnet, dass**
sich diese, mit aktivierbarem Kleber versehene Kleberschicht an der Anlageseite des Schichtstoffes (10) befindet, und mit Hilfe der aktivierten, nach oben abstrahlenden Heizstrahler (115) auch der an der Schichtstoff-Anlageseite befindliche Kleber aktiviert wird, und
diese verfahrbar gehaltene Heizstrahler-Anordnung (100, 102, 104) zusätzlich mit aktivierbaren, nach unten abstrahlenden Heizstrahlern (118) bestückt ist, und
- nach Einfahren dieser Heizstrahler-Anordnung (100, 102, 104) in den Zwischenraum (90) zwischen Schichtstoff (10) und zu kaschierendem 3D-Substrat (3) -
mit Hilfe der aktivierten, nach unten abstrahlenden Heizstrahler (118) gezielt die Oberfläche des zu kaschierenden 3D-Substrates (3) erwärmt wird, und nach Beendigung dieser Wärmebehandlungen diese Heizstrahler-Anordnung (100, 102, 104) wieder in ihren Rückzugsraum (67' 67") zurückgefahren wird.

2. Verfahren nach Anspruch 1,
**dadurch gekennzeichnet, dass**
sich die aktivierbaren, nach oben abstrahlenden Heizstrahler (115), sowie die aktivierbaren, nach unten abstrahlenden Heizstrahler (118) an wenigstens einer horizontal oder weitgehend horizontal ausgerichteten Heizstrahler-Anordnung (100, 102, 104) befinden, die aus wenigstens einem, an der Werkzeugwanne (60) angebrachten und horizontal oder weitgehend horizontal aus gerichteten Rückzugsraum (67', 67") in den Zwischenraum (90) zwischen Schichtstoff (10) und zu kaschierendem 3D-Substrat (3) verfahren wird.

3. Verfahren nach Anspruch 1,
wobei nach Beendigung dieser Wärmebehandlungen und nach Zurückfahren der Heizstrahler-Anordnung (100, 102, 104) in ihren Rückzugsraum (67', 67") der Tisch (80) bis in seine obere Totstellung angehoben wird,
**dadurch gekennzeichnet, dass**
in dieser oberen Totstellung des Tisches (80) das 3D-Substrat (3) die Schichtstoff-Ebene durchdringt und den erwärmten Schichtstoff (10) zeltartig mit sich führt, während im Druckglocken-Innenraum (55) weiterhin ein Druckmitteldruck kleiner/gleich 30 kPa herrscht.

4. Verfahren nach Anspruch 3,
**dadurch gekennzeichnet, dass**
nachdem der Tisch (80) seine obere Totstellung erreicht hat, in den Druckglocken-Innenraum (55) ein fluides Druckmittel, insbesondere Druckluft, eingeführt wird, um im Druckglocken-Innenraum (55) einen Druckmitteldruck von 2 bis 18 bar einzustellen.

5. Verfahren nach Anspruch 4,
**dadurch gekennzeichnet, dass**
der Druckmitteldruck von 2 bis 18 bar wenigstens 2 Sekunden lang aufrecht erhalten wird, bevor der Druckmitteldruck im Druckglocken-Innenraum (55) auf den umgebenden Atmosphärendruck abgesenkt wird.

6. Verfahren nach einem der Ansprüche 1 bis 5,
**dadurch gekennzeichnet, dass**
ein 3D-Substrat (3) verwendet wird, das besteht aus einem thermoplastischen und im Spritzguß verarbeitbaren Kunststoff, der aus einer Gruppe ausgewählt ist, die umfasst:
- Polyamid (PA),
- Acrylnitril-Butadien-Styrol-Terpolymer (ABS),
- Acrylester-Butadien-Styrol-Terpolymer (ASA),
- Polymethylenoxid (POM),
- Polyvinylchlorid (PVC) und
- Polyarylensulfon (PSU).

7. Verfahren nach einem der Ansprüche 1 bis 6,
**dadurch gekennzeichnet, dass**
ein Schichtstoff (10) verwendet wird der einlagig oder mehrlagig aufgebaut ist und der wenigstens eine Kunststofffolie enthält, die aus einem thermoplastischen Kunststoff besteht, der aus einer Gruppe ausgewählt ist, die umfasst:
- Polycarbonate oder Copolycarbonate auf der Basis von Diphenolen,
- Poly- oder Copolyacrylate,
- Poly- oder Copolymethacrylate, Polymere oder
- Copolymere mit Styrol, hier insbesondere Acrylnitril-Butadien-StyrolPolymere,
- thermoplastische Polyurethane,
- Polyolefine,
- Poly- oder Copolykondensate der Terephthalsäure,
- Polyester, wie (Alkyl)terephthalate oder (Alkyl)naphthenate,
- ferner Mischungen oder Blends aus diesen Materialien.

8. Verfahren nach Anspruch 7,
**dadurch gekennzeichnet, dass**
eine Kunststofffolie verwendet wird, die eine Schichtdicke von 20 bis 1000 µm, insbesondere eine Schichtdicke von 50 bis 500 µm hat.

9. Verfahren nach Anspruch 7 oder 8,
**dadurch gekennzeichnet, dass**
eine Kunststofffolie verwendet wird, die auf der zum 3D-Substrat (3) abgewandten Sichtseite eine strukturierte Oberfläche aufweist.

10. Verfahren nach einem der Ansprüche 1 bis 9,
**dadurch gekennzeichnet, dass**
als aktivierbarer Kleber eine thermisch aktivierbare Klebemasse oder eine strahlungshärtende Klebemasse oder eine thermisch aktivierbare und strahlungshärtende Klebemasse eingesetzt wird.

11. Verfahren nach Anspruch 10,
**dadurch gekennzeichnet, dass**
eine thermisch aktivierbare Klebemasse eingesetzt wird, die eine Aktivierungstemperatur im Bereich von 60 bis 140 °C, insbesondere im Bereich von 75 bis 130 °C hat.

12. Verfahren nach einem der Ansprüche 1 bis 11,
**dadurch gekennzeichnet, dass**
ein auf das 3D-Substrat (3) abgestimmter Zuschnitt aus dem Schichtstoff (10) auf einer Transferfolie abgelegt wird;
lediglich diese, mit dem Schichtstoff-Zuschnitt versehene Transferfolie zwischen Druckglocke (50) und Werkzeugwanne (60) in einer, den Druckglocken-Innenraum (55) druckdicht vom Werkzeugwannen-Innenraum (65) trennenden Weise eingespannt wird; und
bei Beaufschlagung mit dem fluiden Druckmittel unter einem Druckmitteldruck von 2 bis 18 bar dieses Druckfluid auf die Transferfolie trifft und die Transferfolie zusammen mit dem Schichtstoff-Zuschnitt gemeinsam umformt, wobei der an der Transferfolie befindliche Schichtstoff-Zuschnitt auf das 3D- Substrat (3) abgewickelt wird.

13. Vorrichtung zur Herstellung eines mit einem Schichtstoff (10) kaschierten 3D-Substrates (9),
mit einem Formwerkzeug (20), das aufweist:
- eine untere, ortsfest angeordnete Werkzeughälfte,
die eine Werkzeugwanne (60) aufweist,
die einen Werkzeugwannen-Innenraum (65) umgreift,
in dem ein absenkbarer Tisch (80) untergebracht ist, und
- eine obere Werkzeughälfte, die eine, einen Innenraum (55) umgreifende Druckglocke (50) aufweist,
die bezüglich der Werkzeugwanne (60) eine benachbarte Schließstellung, sowie eine davon entfernte, angehobene Freigabestellung einnehmen kann, und
in dieser Druckglocken-Freigabestellung
- ein zu kaschierendes 3D-Substrat (3) in das Formwerkzeug (20) einbringbar ist und auf dem absenkbaren Tisch (80) in der Werkzeugwanne (60) festlegbar ist, der daraufhin bis zu seiner unteren Totstellung absenkbar ist, und ferner
- ein einlagiger oder mehrlagiger, anfänglich ebener flexibler Schichtstoff (10), der eine Sichtseite und eine gegenüberliegende Anlageseite hat oder eine, mit einem Zuschnitt aus einem solchen Schichtstoff (1 versehene, flexible Transferfolie an einer oder benachbart zu einer umlaufenden Dichtfläche (58) der Druckglocke (50) anbringbar ist, und
in dieser Druckglocken-Schließstellung eine Anordnung schaffbar ist,
- in welcher der Schichtstoff (10) oder die Transferfolie die in den beiden Werkzeughälften befindlichen Innenräume (55, 65) druckdicht voneinan der trennt, und
- im Werkzeugwannen-Innenraum (65) ein Druckmitteldruck kleiner/gleich 30 kPa einstellbar ist, und
- im Druckglocken-Innenraum (55) zuerst ein Druckmitteldruck kleiner/gleich 30 kPa einstellbar ist und später durch Einführen von fluidem Druckmittel, insbesondere Druckluft, ein Druckmitteldruck von 2 bis 18 bar einstellbar ist, und
- der Schichtstoff (10) erwärmbar ist, während in beiden Formwerkzeug-Innenräumen (55, 65) ein Druckmitteldruck kleiner/gleich 30 kPA herrscht,
- wozu an der Werkzeugwanne (60) wenigstens ein Rückzugsraum (67', 67") für wenigstens eine verfahrbar gehaltene Heizstrahler-Anordnung (100, 102, 104) ausgebildet ist, die mit aktivierbaren, nach oben abstrahlenden Heizstrahlern (115) bestückt ist, und
- zur Erwärmung des Schichtstoffes (10) diese Heizstrahler-Anordnung (100, 102, 104)
- in der Druckglocken-Schließstellung und nach Einstellung des Druckmitteldruckes kleiner/gleich 30 kPa innerhalb des Werkzeugwannen-Innenraums (65) -
aus ihrem Rückzugsraum (67', 67") in den Zwischenraum (90) zwischen Schichtstoff (10) und zu kaschierendem 3D-Substrat (3) verfahrbar ist, und mit Hilfe der aktivierten, nach oben abstrahlenden Heizstrahler (115) gezielt der Schichtstoff (10) erwärmbar ist, und
- der so erwärmte Schichtstoff (10) über eine Kleberschicht an das 3D-Substrat (3) angelegbar und ankaschierbar ist, und
nachdem in beiden Formwerkzeug-Innenräumen (55, 65) der umgebende Atmosphärendruck eingestellt worden ist, die Druckglocke (50) von der Werkzeugwanne (60) getrennt wird und die Druckglocke (50) angehoben wird, und das mit Schichtstoff (10) kaschierte 3D-Substrat (9) aus dem Werkzeugwannen-Innenraum (65) entnommen und nach Bedarf bearbeitet wird,
**dadurch gekennzeichnet, dass**
sich diese, mit aktivierbarem Kleber versehene Kleberschicht an der Anlageseite des Schichtstoffes (10) befindet, und mit Hilfe der aktivierten, nach oben abstrahlenden Heizstrahler (115)auch der an der Schichtstoff-Anlageseite befindliche Kleber aktivierbar ist, und
diese verfahrbar gehaltene Heizstrahler-Anordnung (100, 102, 104) zusätzlich mit aktivierbaren, nach unten abstrahlenden Heizstrahlern (118) bestückt ist, und
nach Einfahren dieser Heizstrahler-Anordnung (100, 102, 104) in den Zwischenraum (90) zwischen Schichtstoff (10) und 3D-Substrat (3) mit Hilfe der aktivierten, nach unten abstrahlenden Heizstrahler (118) gezielt die Oberfläche des 3D-Substrates (3) erwärmbar ist, und
nach Beendigung dieser Wärmebehandlungen diese Heizstrahler-Anordnung (100, 102, 104) wieder in ihren Rückzugsraum (67', 67") zurückfahrbar ist.

14. Vorrichtung nach Anspruch 13,
**dadurch gekennzeichnet, dass**
an der Werkzeugwanne (60) wenigstens ein horizontal oder weitgehend horizontal ausgerichteter Rückzugsraum (67', 67") für wenigstens eine verfahrbar gehaltene und horizontal oder weitgehend horizontal ausgerichtete Heizstrahler-Anordnung (100, 102, 104) ausgebildet ist, die mit aktivierbaren, nach oben abstrahlenden Heizstrahlern (115), sowie mit aktivierbaren, nach unten abstrahlenden Heizstrahlern (118) bestückt ist.

15. Vorrichtung nach Anspruch 13,
**dadurch gekennzeichnet, dass**
an zwei gegenüberliegenden Seitenwänden (62', 62") der Werkzeugwanne (60) je ein Kasten (66' bzw. 66") angesetzt ist, der je einen Rückzugsraum (67' bzw. 67") für eine verfahrbar gehaltene "halbe" Heizstrahler-Anordnung (102, 104) begrenzt, und
diese "halben" Heizstrahler-Anordnungen (102, 104) nach dem Einfahren in den Wanneninnenraum (65) die Heizstrahler-Anordnung (100) bilden.

16. Vorrichtung nach Anspruch 15,
**dadurch gekennzeichnet, dass**
an zwei gegenüberliegenden Seitenwänden (62', 62") der Werkzeugwanne (60) je ein horizontal oder weitgehend horizontal ausgerichteter Kasten (66' bzw. 66") angesetzt ist, der je einen horizontal oder weitgehend horizontal ausgerichteten Rückzugsraum (67' bzw. 67") für eine verfahrbar gehaltene "halbe" Heizstrahler-Anordnung (102, 104) begrenzt; und
diese "halben" Heizstrahler-Anordnungen (102, 104) nach dem Einfahren in den Wanneninnenraum (65) eine horizontal oder weitgehend horizontal aus gerichtete Heizstrahler-Anordnung (100) bilden.

17. Vorrichtung nach einem der Ansprüche 13 bis 16,
**dadurch gekennzeichnet, dass**
die Heizstrahler-Anordnung (100, 102, 104) einen Träger (112) hat, auf dessen Oberseite (114) aktivierbare, nach oben abstrahlende Heizstrahler (115) und zusätzlich aktivierbare, nach oben abstrahlende UV-Strahler (119) angeordnet sind.

18. Vorrichtung nach einem der Ansprüche 13 bis 17,
**dadurch gekennzeichnet, dass**
als Heizstrahler IR-Flächenstrahler eingesetzt werden, deren Heizelement aus mehreren, parallel nebeneinander angeordneten und einen fortlaufenden Leiter bildenden Streifen aus einer temperaturbeständigen Metallfolie besteht, die bei Stromdurchgang zum Glühen bringbar ist und dann eine Temperatur bis etwa 800 °C erreicht, wobei mittel- bis langwellige IR-Strahlung im Wellenlängenbereich von 2,6 bis 9,6 µm abgestrahlt wird.

19. Vorrichtung nach einem der Ansprüche 13 bis 18,
**dadurch gekennzeichnet, dass**
der absenkbare Tisch (80) eine rechteckige Tischfläche von etwa 400 mm x 200 mm bis etwa 1000 mm x 500 mm hat, insbesondere eine rechteckige Tischfläche mit Abmessungen von etwa 540 mm x etwa 360 mm bis etwa 800 mm x etwa 600 mm hat.

20. Vorrichtung nach einem der Ansprüche 13 bis 19,
**dadurch gekennzeichnet, dass**
eine Transporteinrichtung (120) für zurecht geschnittenen, stückigen Schichstoff (10) bzw. Schichtstoff-Stücke (10) vorhanden ist, mit:
- einem Magazin (122), das einen Vorrat an Schichtstoff-Stücken (10) bereithält;
- einem, über das Magazin (122) verfahrbaren Transportrahmen (128), der mit Hilfe von Saugkraft das oberste Schichtstoff-Stück (10) anhebt und festhält,
- dieser, das Schichtstoff-Stück (10) haltende Transportrahmen (128) unter die, ihre obere Totstellung einnehmende Druckglocke (50) verfahrbar und dort an die umlaufende Dichtfläche (58) an der Druckglocke (50) anlegbar ist; und
- beim Absenken der Druckglocke (50) der an der Druckglocke (50) anliegende Transportrahmen (58) weiterhin das Schichtstoff-Stück (10) festhält.

21. Vorrichtung nach einem der Ansprüche 13 bis 20,
**dadurch gekennzeichnet, dass**
eine Transportstrecke (150) für das zu kaschierende 3D-Substrat (3) vorhanden ist:
- mit einer stationär an der Werkzeugwanne (60) angebrachten und mit einer Lineareinrichtung ausgerüsteten Schiene (152), längs der wenigstens ein Schlitten (154, 156) verfahrbar ist, der Transportplatten (155, 157) aus einer Auflegestation (160) zu einer Haltestation (163) transportiert, sowie Transportplatten (155, 157) aus einer Haltestation (163) zu einer Entnahmestation (165) transportiert,
- in der Auflegestation (160) auf die dort befindliche Transportplatte (155) eine Trägerplatte (168) auflegbar ist, die ein zu kaschierendes 3D-Substrat (3) oder mehrere zu kaschierende 3D-Substrate (3) festhält,
- an verfahrbaren Schlitten (74', 74") montierte Hub-und Schwenkarme (75) die in der Haltestation (163) befindliche und ein oder mehrere, zu kaschierende(s) 3D-Substrat(e) (3) festhaltende Trägerplatte (168) aus der Haltestation (163) in eine Position unterhalb der angehobenen Druckglocke (50) befördern und innerhalb eines Ausschnittes (72) an einem Zwischenrahmen (70) an der Werkzeugwanne (60) auf einer Tischplatte (82) des, seine obere Totstellung einnehmenden Tisches (80) absetzen, und
- in der Entnahmestation (165) das kaschierte Produkt entnommen wird.

22. Vorrichtung nach Anspruch 21,
**dadurch gekennzeichnet, dass**
die Trägerplatte (168)
- aus einem stabilen, dauerhaften Kunststoff besteht,
- mit einem Trennmittel, wie beispielsweise TEFLON® beschichtet ist,
- eine eckige, beispielsweise rechteckige Fläche hat, und
- in den Eckenbereichen dieser eckigen Fläche magnetisch ansprechendes Material, wie etwa Weicheisen vorhanden ist.

23. Vorrichtung nach Anspruch 21 oder 22,
**dadurch gekennzeichnet, dass**
zum Transport der, ein oder mehrere, zu kaschierende(s) 3D-Substrat(e) (3) festhaltenden Trägerplatte (168) aus der Haltestation (163) in eine Position unterhalb der angehobenen Druckglocke (50) Hub-und Schwenkarme (75) dienen, an deren freiem Ende ein aktivierbarer Elektromagnet (76) ange bracht ist, der einen Eckenbereich der Trägerplatte (168) kontaktieren kann, und durch Aktivierung dieser Elektromagnete (76) die Trägerplatte (168) angehoben wird.

24. Vorrichtung nach einem der Ansprüche 13 bis 23,
**dadurch gekennzeichnet, dass**
die ihre untere Totstellung einnehmende Druckglocke (50) mit Hilfe von, an der Druckglocke (50) angebrachten und motorisch verstellbaren Riegelbolzen (52', 52", 56', 56") an, mit der Werkzeugwanne (60) starr verbundenen, aus einer massiven Stahlplatte bestehenden, Rahmen (77', 77") arretierbar ist.

25. Vorrichtung nach einem der Ansprüche 13 bis 24,
**dadurch gekennzeichnet, dass**
zum Anheben der Druckglocke (50) aus ihrer unteren Totstellung in ihre obere Totstellung eine Doppelkniehebel-Anordnung (130) dient, die zwei, je mit einem separaten Antrieb (132, 134) ausgestattete Kniehebel (131, 133) hat, und
durch Blockierung eines Kniehebels (131) und Aktivierung des anderen Kniehebels (133) die Druckglocke (50) in eine Servicestellung verschwenkbar ist, in welcher die umlaufende Dichtfläche (58) am Rand der Druckglocke (50) im Wesentlichen vertikal ausgerichtet ist.

## Claims

1. Method for producing
a 3D substrate (9) laminated with a layer material (10),
having the following method steps:
in a moulding tool (20),
- which has a lower, fixedly arranged tool half,
which has a tool trough (60),
which engages around a tool trough inner chamber (65),
in which a lowerable table (80) is accommodated, and
- said moulding tool (20) having an upper tool half, which has a pressure bell (50) engaging around an inner chamber (55),
said pressure bell (50) being able to occupy an adjacent closing position with respect to the tool trough (60) as well as a raised release position which is remote therefrom,
and
in this pressure bell release position
- a 3D substrate (3) to be laminated is introduced into the moulding tool and set on the lowerable table (80) in the tool trough (60), said table (80) being subsequently lowered to its dead position, and further
- a one-sheet or multi-sheet, initially level layer material (10), which has a visible side and an opposite contact side, or a flexible transfer foil provided with a cut-out from such a layer material
is applied to or adjacently to a peripheral edge (58) of the pressure bell (50), and
in this pressure bell closing position, an arrangement is created
- in which the layer material (10) or the transfer foil separates the inner chambers (55, 65) located in the two tool halves from each other in a pressure-tight manner, and
- a pressure means pressure is set to less than/equal to 30 kPa in the tool trough inner chamber (65), and
- a pressure means pressure is firstly set to less than/equal to 30 kPa in the pressure bell inner chamber (55), and a pressure means pressure is later set to 2 to 18 bar by introducing fluid pressure means, in particular pressurised air, and
- the layer material (10) is heated while there is a pressure means pressure of less than/equal to 30 kPa in the two moulding tool inner chambers (55, 65),
- wherein at least one withdrawal chamber (67', 67") for at least one shiftably held radiant heater arrangement (100, 102, 104) is formed on the tool trough (60), said heater arrangement being equipped with activatable radiant heaters (115) radiating upwardly; and
- for heating the layer material (10), this radiant heater arrangement (100, 102, 104),
- in the pressure bell closing position and after adjusting the pressure means pressure to be less than/equal to 30 kPa within the tool trough inner chamber (65) - is shifted out of its withdrawal chamber (67', 67") into the intermediate chamber (90) between layer material (10) and 3D substrate (3) to be laminated, and with the aid of the activated radiant heater (115) radiating upwardly, the layer material (10) is heated in a targeted manner, and
- the heated layer material (10) is applied to the 3D substrate (3) via the adhesive layer and laminated thereon, and
finally, the surrounding atmospheric pressure is set in the two moulding tool inner chambers (55, 56), the two tool halves are separated from each other, the pressure bell (50) is raised, and the 3D substrate (9) laminated with layer material (10) is removed from the tool trough inner chamber (65) and processed as required,
**characterised in that**
this adhesive layer applied with activatable adhesive is found on the contact side of the layer material (10), and with the aid of the activated radiant heaters (115) radiating upwardly, the activatable adhesive found on the contact side of the layer material is also activated, and
this shiftably held radiant heater arrangement (100, 102, 104) is additionally equipped with activatable radiant heaters (118) radiating downwardly, and
- after the introduction of this radiant heater arrangement (100, 102, 104) into the intermediate chamber (90) between layer material (10) and the 3D substrate (3) to be laminated -
with the aid of the activated radiant heater (118) radiating downwardly, the surface of the 3D substrate (3) to be laminated is heated in a targeted manner, and upon completion of this heat treatments, this radiant heater arrangement (100, 102, 104) is moved back into its withdrawal chamber (67', 67") again.

2. Method according to claim 1,
**characterised in that**
the activatable radiant heater (115) radiating downwardly as well as the activatable radiant heater (118) radiating downwardly are located on at least one radiant heater arrangement (100, 102, 104) which is oriented horizontally or extensively horizontally and which is shifted from at least one withdrawal chamber (67', 67"), which is applied to the tool trough (60) and oriented horizontally or extensively horizontally, into the intermediate chamber (90) between layer material (10) and the 3D substrate (3) to be laminated.

3. Method according to claim 1,
wherein upon completion of this heat treatment and after the radiant heater arrangement (100, 102, 104) is moved back into its withdrawal chamber (67', 67"), the table (80) is raised into its upper dead position,
**characterised in that,**
in this upper dead position of the table (80), the 3D substrate (3) penetrates the layer material plane and guides the heated layer material (10) with it in a tent-like manner, while there is still a pressure means pressure less than/equal to 30 kPa in the pressure bell inner chamber (55).

4. Method according to claim 3,
**characterised in that,**
after the table (80) has achieved its upper dead position, a fluid pressure means, in particular pressurised air, is introduced into the pressure bell inner chamber (55) in order to set a pressure means pressure of 2 to 18 bar in the pressure bell inner chamber (55).

5. Method according to claim 4,
**characterised in that**
the pressure means pressure of 2 to 18 bar is maintained for at least 2 seconds before the pressure means pressure in the pressure bell inner chamber (55) is reduced to the surrounding air pressure.

6. Method according to one of claims 1 to 5,
**characterised in that**
a 3D substrate (3) is used which consists of a thermoplastic synthetic material which can be processed by injection moulding, selected from a group which comprises:
- polyamide (PA),
- acrylonitrile butadiene styrene terpolymer (ABS),
- acrylester butadiene styrene terpolymer (ASA),
- polymethylene oxide (POM),
- polyvinyl chloride (PVC) and
- polyarylene sulphone (PSU).

7. Method according to one of claims 1 to 6,
**characterised in that**
a layer material (10) is used which is constructed to be one-sheet or multi-sheet and which contains at least one synthetic material foil which consists of a thermoplastic synthetic material which is selected from the group which comprises:
- polycarbonates or copolycarbonates based on diphenols,
- poly- or copolyacrylates,
- poly- or copoly(methyl acrylates), polymers or
- copolymers with styrene, in particular acrylonitrile butadiene styrene polymers,
- thermoplastic polyurethanes,
- polyolefins,
- poly- or copolycondensates of terephthalic acids,
- polyesters, such as (alkyl)terephthalate or (alkyl)naphthenate,
- further, mixtures or blends of these materials.

8. Method according to claim 7,
**characterised in that**
a synthetic material foil is used which has a layer thickness of 20 to 1000 µm, in particular a layer thickness of 50 to 500 µm.

9. Method according to claim 7 or 8,
**characterised in that**
a synthetic material foil is used which has a structured surface on the visible side facing away from the 3D substrate (3).

10. Method according to one of claims 1 to 9,
**characterised in that**
a thermally activatable adhesive means or a radiation-curing adhesive means or a thermally activatable and radiation-curing adhesive is used as an activatable adhesive.

11. Method according to claim 10,
**characterised in that**
a thermally activatable adhesive means is used which has an activation temperature ranging from 60 to 140 °C, in particular ranging from 75 to 130 °C.

12. Method according to one of claims 1 to 11,
**characterised in that**
a cut-out from the layer material (10) adapted to the 3D substrate (3) is deposited on a transfer foil;
only this transfer foil provided with the layer material cut-out is clamped between pressure bell (50) and tool trough (60) in a way which separates the pressure bell inner chamber (55) from the tool trough inner chamber (65) in a pressure-tight manner; and
when subjected to the fluid pressure means with a pressure means pressure of 2 to 18 bar, this pressure fluid meets the transfer foil and mutually reshapes the transfer foil together with the layer material cut-out;
wherein the layer material cut-out located on the transfer foil is unfolded onto the 3D substrate (3).

13. Device for producing a 3D substrate (9) laminated with a layer material (10), having a moulding tool (20) which has:
- a lower, fixedly arranged tool half,
which has a tool trough (60),
which engages around a tool trough inner chamber (65)
in which a lowerable table (80) is accommodated, and
- has an upper tool half, which has a pressure bell (50) engaging around an inner chamber (55),
said pressure bell (50) being able to adopt an adjacent closing position with respect to the tool trough (60) as well as a raised release position which is remote therefrom,
and,
in this pressure bell release position,
- a 3D substrate (3) to be laminated can be introduced into the moulding tool (20) and can be set on the lowerable table (80) in the tool trough (60), said table (80) being able to be subsequently lowered to its dead position, and further
- a one-sheet or multi-sheet, initially level flexible layer material (10), which has a visible side and an opposite contact side, or
a flexible transfer foil provided with a cut-out from such a layer material (10), can be applied to or adjacently to a peripheral sealing surface (58) of the pressure bell (50), and
in this pressure bell closing position, an arrangement can be created
- in which the layer material (10) or the transfer foil separates the inner chambers (55, 65) located in the two tool halves from each other in a pressure-tight manner, and
- a pressure means pressure can be set to less than/equal to 30 kPa in the tool trough inner chamber (65), and
- a pressure means pressure can firstly be set to less than/equal to 30 kPa in the pressure bell inner chamber (55), and a pressure means pressure can later be set to 2 to 18 bar by introducing fluid pressure means, in particular pressurised air, and
- the layer material (10) can be heated while there is a pressure means pressure less than/equal to 30 kPa in the two moulding tool inner chambers (55, 65),
- wherein at least one withdrawal chamber (67', 67") for at least one shiftably held radiant heater arrangement (100, 102, 104) is formed on the tool trough (60), said radiant heater arrangement (100, 102, 104) being equipped with activatable radiant heaters (115) radiating upwardly, and
- for heating the layer material (10), this radiant heater arrangement (100, 102, 104),
- in the pressure bell closing position and after adjusting the pressure means pressure to be less than/equal to 30 kPa within the tool trough inner chamber (65) can be shifted out of its withdrawal chamber (67', 67") into the intermediate chamber (90) between layer material (10) and 3D substrate (3), and with the aid of the activated radiant heater (115) radiating upwardly, the layer material (10) can be heated in a targeted manner; and
- the heated layer material (10) can be applied to the 3D substrate (3) via the adhesive layer and laminated thereon, and
after the surrounding atmosphere pressure has been adjusted again in both moulding tool inner chambers (55, 65), the pressure bell (50) is separated from the tool trough (60), and the pressure bell (50) is raised, and the 3D substrate (9) laminated with layer material (10) is removed from the tool trough inner chamber (65) and processed as required,
**characterised in that**
this adhesive layer applied with activatable adhesive is found on the contact side of the layer material (10) and with the aid of the activated radiant heaters (115) radiating upwardly, the activatable adhesive found on the contact side of the layer material can be activated, and
this shiftably held radiant heater arrangement (100, 102, 104) is additionally equipped with activatable radiant heaters (118) radiating downwardly, and
after the introduction of this radiant heater arrangement (100, 102, 104) into the intermediate chamber (90) between layer material (10) and the 3D substrate (3), with the aid of the activated radiant heater (118) radiating downwardly, the surface of the 3D substrate (3) can be heated in a targeted manner; and
upon completion of this heat treatment, this radiant heater arrangement (100, 102, 104) can be moved back into its withdrawal chamber (67', 67") again.

14. Device according to claim 13,
**characterised in that**
at least one withdrawal chamber (67', 67") oriented horizontally or extensively horizontally is formed on the tool trough (60) for at least one shiftably held and horizontally or extensively horizontally oriented radiant heater arrangement (100, 102, 104) which is equipped with activatable radiant heaters (115) radiating upwardly as well as with activatable radiant heaters (118) radiating downwardly.

15. Device according to claim 13,
**characterised in that**
a box (66' or 66") is respectively attached to two opposite side walls (62', 62") of the tool trough (60), said box (66' or 66") respectively limiting a withdrawal chamber (67' or 67") for a shiftably held "half" radiant heater arrangement (102, 104); and these "half' radiant heater arrangements (102, 104) form the radiant heater arrangement (100) after the introduction into the trough inner chamber (65).

16. Device according to claim 15,
**characterised in that**
a box (66' or 66") oriented horizontally or extensively horizontally is respectively attached to two opposite side walls (62', 62") of the tool trough (60), said box (66' or 66") respectively limiting a withdrawal chamber (67' or 67") oriented horizontally or extensively horizontally for a shiftably held "half' radiant heater arrangement (102, 104); and
these "half' radiant heater arrangements (102, 104) form the radiant heater arrangement (100) which is oriented horizontally or substantially horizontally after the introduction into the trough inner chamber (65).

17. Device according to one of claims 13 to 16,
**characterised in that**
the radiant heater arrangement (100, 102, 104) has a carrier (112) on whose upper side (114) activatable radiant heaters (115) radiating upwardly and, additionally, activatable UV radiators (119) radiating upwardly are arranged.

18. Device according to one of claims 13 to 17,
**characterised in that**
infrared area irradiators are used as radiant heaters, whose heating element consists of several strips arranged in parallel next to one another and forming a continuous conductor, said strips being made of a temperature-resistant metal foil which can be made to glow during current passage and then reaches a temperature of up to approx. 800°C, wherein medium-wave to long-wave infrared radiation in the wavelength range of 2.6 to 9.6 µm is radiated.

19. Device according to one of claims 13 to 18,
**characterised in that**
the lowerable table (80) has a rectangular table surface of approx. 400 mm x 200 mm to approx. 1000 mm x 500 mm, in particular a rectangular table surface having dimensions of approx. 540 mm x approx. 360 mm to approx. 800 mm x approx. 600 mm.

20. Device according to one of claims 13 to 19,
**characterised in that**
a transport device (120) for trimmed layer material in pieces (10) or layer material pieces (10) is present, having:
- a magazine (122) which holds a supply of layer material pieces (10) ready;
- a transport frame (128) which can be shifted across the magazine (122) and which raises and holds the uppermost layer material piece (10) with the aid of suction power;
- this transport frame (128) holding the layer material piece (10) can be shifted under the pressure bell (50) occupying its upper dead position and can be applied there to the pressure bell (50) on the surrounding sealing surface (58); and
- when lowering the pressure bell (50), the transport frame (58) abutting on the pressure bell (50) further holds the layer material piece (10).

21. Device according to one of claims 13 to 20,
**characterised in that**
a transport path (150) for the 3D substrate (3) to be laminated is present:
- having a rail (152) applied to the tool trough (60) in a stationary manner and fitted with a linear device, along which rail (152) at least one carriage (154, 156) can be shifted which transports transport plates (155, 157) from a depositing station (160) to a holding station (163) and transports transport plates (155, 157) from a holding station (163) to a removal station (165);
- a carrier plate (168) can be deposited in the depositing station (160) on the transport plate (155) located there, said carrier plate (168) holding a 3D substrate (3) to be laminated or several 3D substrates (3) to be laminated;
- lifting arms and pivot arms (75) mounted on shiftable carriages (74', 74") which convey carrier plates (168) located in the holding station (163) and holding one or more 3D substrate(s) to be laminated from the holding station (163) into a position below the raised pressure bell (50) and drop them within a cut-out (72) on an intermediate frame (70) on the tool trough (60) on a table plate (82) of the table (80) occupying its upper dead position; and
- the laminated product is removed in the removal station (165).

22. Device according to claim 21,
**characterised in that**
the carrier plate (168)
- consists of a stable, durable synthetic material;
- is coated with a separating means, such as TEFLON®, for example;
- has a square, for example rectangular surface; and
- in the corner regions of this square surface, magnetically responsive material, such as soft iron, for example, is present.

23. Device according to claim 21 or 22,
**characterised in that**
lifting and pivot arms (75) serve for transporting the carrier plates (168) holding one or more 3D substrate(s) (3) to be laminated from the holding station (163) into a position below the raised pressure bell (50), an activatable electromagnet (76) which can contact the corner regions of the carrier plate (168) is applied to the free end of said lifting and pivot arms (75); and
the carrier plate (168) is raised by activation of this electromagnet (76).

24. Device according to one of claims 13 to 23,
**characterised in that,**
with the aid of latching bolts (52', 52", 56', 56") which are applied to the pressure bell (50) and are motorically adjustable, the pressure bell (50) occupying its lower dead position can be locked to frames (77', 77") which are rigidly connected to the tool trough (60) and consist of a massive steel plate.

25. Device according to one of claims 13 to 24,
**characterised in that**
a double toggle lever arrangement (130) serves for raising the pressure bell (50) from its lower dead position into its upper dead position, said double toggle lever arrangement (130) having two toggle levers (131, 133) each equipped with a separate drive (132, 134); and
the pressure bell (50) can be pivoted into a service position by blocking a toggle lever (131) and activating the other toggle lever (133), the surrounding sealing surface (58) being substantially vertically oriented on the edge of the pressure bell (50) in said service position.

## Revendications

1. Procédé servant à fabriquer un substrat 3D (9) contrecollé avec un stratifié (10),
avec des étapes de procédé ci-après :
dans un outil de moulage (20),
- qui a une moitié d'outil inférieure disposée de manière stationnaire,
qui présente un bac d'outil (60),
qui entoure un espace intérieur de bac d'outil (65),
dans lequel un plateau (80) pouvant être abaissé est logé, et
- qui a une moitié d'outil supérieure, qui présente une cloche à pression (50) entourant un espace intérieur (55),
qui peut adopter par rapport au bac d'outil (60) une position de fermeture adjacente ainsi qu'une position de déblocage relevée éloignée de la position de fermeture,
et
dans ladite position de déblocage de cloche à pression
- un substrat 3D (3) à contrecoller est introduit dans l'outil de moulage et est fixé sur le plateau (80) pouvant être abaissé dans le bac d'outil (60), qui est par la suite abaissé jusqu'à son point mort inférieur, et en outre
- un stratifié (10) monocouche ou multicouche au début plan,
qui a une face visible et une face d'appui opposée, ou
un film de transfert flexible pourvu d'une découpe issue d'un tel stratifié
est installé au niveau d'un bord ou de manière adjacente à un bord (58) périphérique de la cloche à pression (50), et
dans ladite position de fermeture de cloche à pression un ensemble est créé,
- dans lequel le stratifié (10) ou le film de transfert sépare de manière étanche à la pression les espaces intérieurs (55, 65) se trouvant dans les deux moitiés d'outil l'un de l'autre, et
- une pression de moyen de pression inférieure/égale à 30 kPa est réglée dans l'espace intérieur de bac d'outil (65), et
- dans un premier temps une pression de moyen de pression inférieure/égale à 30 kPa est réglée dans l'espace intérieur de cloche à pression (55) et ultérieurement par l'introduction d'un moyen de pression fluide, en particulier d'air comprimé, une pression de moyen de pression allant de 2 à 18 bar est réglée, et
- le stratifié (10) est réchauffé tandis qu'une pression de moyen de pression inférieure/égale à 30 kPa règne dans les deux espaces intérieurs d'outil de moulage (55, 65),
- au moins un espace de retraite (67', 67") pour au moins un ensemble de dispositifs de chauffage radiant (100, 102, 104) maintenu de manière mobile, qui est équipé de dispositifs de chauffage radiant activables émettant un rayonnement vers le haut (115), étant à cet effet réalisé au niveau du bac d'outil (60), et
- pour chauffer le stratifié (10), ledit ensemble de dispositifs de chauffage radiant (100, 102, 104)
- dans la position de fermeture de cloche à pression et après le réglage de la pression de moyen de pression inférieure/égale à 30 kPa à l'intérieur de l'espace intérieur de bac d'outil (65) -
est déplacé hors de son espace de retraite (67', 67") dans l'espace intermédiaire (90) entre le stratifié (10) et le substrat 3D (3) à contrecoller, et le stratifié (10) est réchauffé de manière ciblée à l'aide des dispositifs de chauffage radiant activés émettant un rayonnement vers le haut (115), et
- le stratifié (10) ainsi réchauffé est apposé et appliqué par contrecollage contre le substrat 3D (3) par-dessus une couche de colle, et
pour finir la pression atmosphérique ambiante est réglée dans les deux espaces intérieurs d'outil de moulage (55, 65), les deux moitiés d'outil sont séparées l'une de l'autre, la cloche à pression (50) est relevée, et le substrat 3D (9) contrecollé avec le stratifié (10) est retiré de l'espace intérieur de bac d'outil (65) et est usiné si besoin,
**caractérisé en ce que**
ladite couche de colle pourvue d'une colle activable se trouve au niveau de la face d'appui du stratifié (10) et la colle se trouvant au niveau de la face d'appui de stratifié est également activée à l'aide des dispositifs de chauffage radiant activés émettant un rayonnement vers le haut (115), et
ledit ensemble de dispositifs de chauffage radiant (100, 102, 104) maintenu de manière mobile est équipé en plus de dispositifs de chauffage radiant activables émettant un rayonnement vers le bas (118), et
- après l'entrée dudit ensemble de dispositifs de chauffage radiant (100, 102, 104) dans l'espace intermédiaire (90) entre le stratifié (10) et le substrat 3D (3) à contrecoller -
la surface du substrat 3D (3) à contrecoller est réchauffée de manière ciblée à l'aide des dispositifs de chauffage radiant activés émettant un rayonnement vers le bas (118), et
à l'issue desdits traitements thermiques, ledit ensemble de dispositifs de chauffage radiant (100, 102, 104) est ramené à nouveau dans son espace de retraite (67', 67").

2. Procédé selon la revendication 1,
**caractérisé en ce que**
les dispositifs de chauffage radiant activables émettant un rayonnement vers le haut (115), ainsi que les dispositifs de chauffage radiant activables émettant un rayonnement vers le bas (118) se trouvent au niveau d'au moins un ensemble de dispositifs de chauffage radiant (100, 102, 104) orienté de manière horizontale ou de manière largement horizontale, qui est déplacé hors d'au moins un espace de retraite (67', 67") installé au niveau du bac d'outil (60) et orienté de manière horizontale ou de manière largement horizontale dans l'espace intermédiaire (90) entre le stratifié (10) et le substrat 3D (3) à contrecoller.

3. Procédé selon la revendication 1,
dans lequel à l'issue desdits traitements thermiques et après le retour de l'ensemble de dispositifs de chauffage radiant (100, 102, 104) dans son espace de retraite (67', 67"), le plateau (80) est relevé jusqu'à son point mort supérieur,
**caractérisé en ce que**
dans ledit point mort supérieur du plateau (80), le substrat 3D (3) traverse le niveau de stratifié et entraîne avec lui à la manière d'une tente le stratifié (10) réchauffé, tandis que par ailleurs une pression de moyen de pression inférieure/égale à 30 kPa règne dans l'espace intérieur de cloche à pression (55).

4. Procédé selon la revendication 3,
**caractérisé en ce que**
après que le plateau (80) a atteint son point mort supérieur, un moyen de pression fluide, en particulier de l'air comprimé, est introduit dans l'espace intérieur de cloche à pression (55) pour régler dans l'espace intérieur de cloche à pression (55) une pression de moyen de pression allant de 2 à 18 bar.

5. Procédé selon la revendication 4,
**caractérisé en ce que**
la pression de moyen de pression allant de 2 à 18 bar est maintenue au moins pendant 2 secondes, avant que la pression de moyen de pression dans l'espace intérieur de cloche à pression (55) soit baissée sur la pression atmosphérique ambiante.

6. Procédé selon l'une quelconque des revendications 1 à 5,
**caractérisé en ce que**
un substrat 3D (3) est utilisé, qui est constitué d'une matière synthétique thermoplastique et pouvant être transformée lors du moulage par injection, choisie parmi un groupe, qui comprend :
- le polyamide (PA),
- le terpolymère-styrène-butadiène-acrylonitrile (ABS),
- le terpolymère styrène-butadiène-acryloester (ASA),
- l'oxyde de polyméthylène (POM),
- le polychlorure de vinyle (PVC), et
- le polysulfone d'arylène (PSU).

7. Procédé selon l'une quelconque des revendications 1 à 6,
**caractérisé en ce que**
un stratifié (10) est utilisé, qui présente une structure monocouche ou multicouche, et qui contient au moins un film en matière synthétique, qui est constitué d'une matière synthétique thermoplastique, qui est choisie parmi un groupe, qui comprend :
- des polycarbonates ou de copolycarbonates à base de diphénols,
- des poly- ou copolyacrylates,
- des poly- ou copolyméthacrylates, des polymères ou
- des copolymères avec du styrène, ici en particulier des polymères de styrène-butadiène-acrylonitrile,
- des polyuréthanes thermoplastiques,
- des polyoléfines,
- des polycondensés ou des copolycondensés de l'acide téréphtalique,
- des polyesters, tels que des téréphtalates (d'alkyle) ou des naphténates (d'alkyle),
- en outre des mélanges ou des compositions composés desdits matériaux.

8. Procédé selon la revendication 7,
**caractérisé en ce que**
est utilisé un film en matière synthétique, qui a une épaisseur de couche allant de 20 à 1000 µm, en particulier une épaisseur de couche allant de 50 à 500 µm.

9. Procédé selon la revendication 7 ou 8,
**caractérisé en ce que**
est utilisé un film en matière synthétique, qui présente, sur la face visible opposée au substrat 3D (3), une surface structurée.

10. Procédé selon l'une quelconque des revendications 1 à 9,
**caractérisé en ce que**
une matière adhésive activable thermiquement ou une matière adhésive durcissant sous l'effet d'un rayonnement ou une matière adhésive activable thermiquement et durcissant sous l'effet d'un rayonnement est utilisée en tant que colle activable.

11. Procédé selon la revendication 10,
**caractérisé en ce que**
est utilisée une matière adhésive activable thermiquement, qui a une température d'activation située dans la plage allant de 60 à 140 °C, en particulier dans la plage allant de 75 à 130 °C.

12. Procédé selon l'une quelconque des revendications 1 à 11,
**caractérisé en ce que**
une découpe adaptée au substrat 3D (3) issue du stratifié (10) est déposée sur un film de transfert ;
seulement ledit film de transfert pourvu de la découpe de stratifié est tendu entre la cloche à pression (50) et le bac d'outil (60) d'une manière séparant l'espace intérieur de cloche à pression (55) de manière étanche à la pression de l'espace intérieur de bac d'outil (65) ; et
lors d'une action exercée par le moyen de pression fluide à une pression de moyen de fluide allant de 2 à 18 bar, ledit fluide de pression rencontre le film de transfert et façonne le film de transfert conjointement avec la découpe de stratifié ;
dans lequel la découpe de stratifié se trouvant au niveau du film de transfert est réalisée sur le substrat 3D (3).

13. Dispositif servant à fabriquer un substrat 3D (9) contrecollé avec un stratifié (10),
avec un outil de moulage (20), qui présente :
- une moitié d'outil inférieure disposée de manière stationnaire,
qui présente un bac d'outil (60),
qui entoure un espace intérieur de bac d'outil (65),
dans lequel un plateau (80) pouvant être abaissé est logé, et
- une moitié d'outil supérieure, qui présente une cloche à pression (50) entourant un espace intérieur (55),
qui peut adopter par rapport au bac d'outil (60) une position de fermeture adjacente ainsi qu'une position de déblocage relevée éloignée de la position de fermeture, et
dans ladite position de déblocage de cloche à pression
- un substrat 3D (3) à contrecoller peut être introduit dans l'outil de moulage (20) et peut être fixé sur le plateau (80) pouvant être abaissé dans le bac d'outil (60), qui peut être par la suite abaissé jusqu'à son point mort inférieur, et en outre
- un stratifié (10) flexible monocouche ou multicouche au début plan, qui a une face visible et une face d'appui opposée, ou un film de transfert flexible pourvu d'une découpe issue d'un tel stratifié (10) peut être appliqué au niveau d'une surface étanche (58) ou de manière adjacente à une surface étanche périphérique de la cloche à pression (50), et
dans ladite position de fermeture de cloche à pression un ensemble peut être créé,
- dans lequel le stratifié (10) ou le film de transfert sépare de manière étanche à la pression les espaces intérieurs (55, 65) se trouvant dans les deux moitiés d'outil l'un de l'autre, et
- une pression de moyen de pression inférieure/égale à 30 kPa peut être réglée dans l'espace intérieur de bac d'outil (65), et
- dans un premier temps une pression de moyen de pression inférieure/égale à 30 kPa peut être réglée dans l'espace intérieur de cloche à pression (55) et ultérieurement par l'introduction d'un moyen de pression fluide, en particulier d'air comprimé, une pression de moyen de pression allant de 2 à 18 bar peut être réglée, et
- le stratifié (10) peut être réchauffé tandis qu'une pression de moyen de pression inférieure/égale à 30 kPa règne dans les deux espaces intérieurs d'outil de moulage (55, 65),
- au moins un espace de retraite (67', 67") pour au moins un ensemble de dispositifs de chauffage radiant (100, 102, 104) maintenu de manière mobile, qui est équipé de dispositifs de chauffage radiant activables émettant un rayonnement vers le haut (115), étant à cet effet réalisé au niveau du bac d'outil (60), et
- pour chauffer le stratifié (10), ledit ensemble de dispositifs de chauffage radiant (100, 102, 104)
- dans la position de fermeture de cloche à pression et après le réglage de la pression de moyen de pression inférieure/égale à 30 kPa à l'intérieur de l'espace intérieur de bac d'outil (65)
- peut ainsi être déplacé hors de son espace de retraite (67', 67") dans l'espace intermédiaire (90) entre le stratifié (10) et le substrat 3D (3), et le stratifié (10) peut être réchauffé de manière ciblée à l'aide des dispositifs de chauffage radiant activés émettant un rayonnement vers le haut (115), et
- le stratifié (10) ainsi réchauffé peut être apposé et appliqué par contrecollage contre le substrat 3D (3) par-dessus une couche de colle, et
après que la pression atmosphérique ambiante a été réglée dans les deux espaces intérieurs d'outil de moulage (55, 65), la cloche à pression (50) est séparée du bac d'outil (60) et la cloche à pression (50) est relevée, et le substrat 3D (9) contrecollé avec le stratifié (10) est retiré de l'espace intérieur de bac d'outil (65) et est usiné si besoin,
**caractérisé en ce que**
ladite couche de colle pourvue d'une colle activable se trouve au niveau de la face d'appui du stratifié (10) et la colle se trouvant au niveau de la face d'appui de stratifié peut également être activée à l'aide des dispositifs de chauffage radiant activés émettant un rayonnement vers le haut (115), et
ledit ensemble de dispositifs de chauffage radiant (100, 102, 104) maintenu de manière mobile est équipé en plus de dispositifs de chauffage radiant activables émettant un rayonnement vers le bas (118), et
après l'entrée dudit ensemble de dispositifs de chauffage radiant (100, 102, 104) dans l'espace intermédiaire (90) entre le stratifié (10) et le substrat 3D (3), la surface du substrat 3D (3) peut être réchauffée de manière ciblée à l'aide des dispositifs de chauffage radiant activés émettant un rayonnement vers le bas (118), et
à l'issue desdits traitements thermiques, ledit ensemble de dispositifs de chauffage radiant (100, 102, 104) peut être ramené à nouveau dans son espace de retraite (67', 67").

14. Dispositif selon la revendication 13,
**caractérisé en ce que**
est réalisé au niveau du bac d'outil (60) au moins un espace de retraite (67', 67") orienté de manière horizontale ou de manière largement horizontale pour au moins un ensemble de dispositifs de chauffage radiant (100, 102, 104) maintenu de manière à pouvoir être déplacé et orienté de manière horizontale ou de manière largement horizontale, qui est équipé de dispositifs de chauffage radiant activables émettant un rayonnement vers le haut (115) et de dispositifs de chauffage radiant activables émettant un rayonnement vers le bas (118) .

15. Dispositif selon la revendication 13,
**caractérisé en ce que**
est placée au niveau de deux parois latérales (62', 62") opposées du bac d'outil (60) respectivement une boîte (66' ou 66"); qui délimite respectivement un espace de retraite (67' ou 67") pour une « moitié » d'ensemble de dispositifs de chauffage radiant (102, 104) maintenue de manière à pouvoir être déplacée ; et
lesdites « moitiés » d'ensembles de dispositifs de chauffage radiant (102, 104) forment l'ensemble de dispositifs de chauffage radiant (100) une fois rentrées dans l'espace intérieur de bac (65).

16. Dispositif selon la revendication 15,
**caractérisé en ce que**
est placé au niveau de deux parois latérales (62', 62") opposées du bac d'outil (60) respectivement une boîte (66' ou 66") orientée de manière horizontale ou de manière largement horizontale, qui délimite respectivement un espace de retraite (67' ou 67") orienté de manière horizontale ou de manière largement horizontale pour une « moitié » d'ensemble de dispositifs de chauffage radiant (102, 104) maintenue de manière à pouvoir être déplacée ; et
lesdites moitiés d'ensembles de dispositifs de chauffage radiant (102, 104) forment, une fois rentrées dans l'espace intérieur de bac (65), un ensemble de dispositifs de chauffage radiant (100) orienté de manière horizontale ou de manière largement horizontale.

17. Dispositif selon l'une quelconque des revendications 13 à 16,
**caractérisé en ce que**
l'ensemble de dispositifs de chauffage radiant (100, 102, 104) a un support (112), sur la face supérieure (114) duquel des dispositifs de chauffage radiant activables émettant un rayonnement vers le haut (115) et en supplément des émetteurs d'UV activables émettant un rayonnement vers le haut (119) sont disposés.

18. Dispositif selon l'une quelconque des revendications 13 à 17,
**caractérisé en ce**
**que** sont utilisés en tant que dispositifs de chauffage radiant des dispositifs de chauffage superficiel à infrarouge, dont l'élément chauffant est constitué de plusieurs bandes, disposées les unes à côté des autres de manière parallèle et formant un conducteur continu, composées d'un film métallique résistant aux températures, qui peut être amené à recuire lors du passage de courant et atteint alors une température allant jusqu'à environ 800 °C, dans lequel un rayonnement infrarouge à ondes moyennes à longues est émis dans la plage de longueurs d'onde allant de 2,6 à 9,6 µm.

19. Dispositif selon l'une quelconque des revendications 13 à 18,
**caractérisé en ce que**
le plateau (80) pouvant être abaissé a une surface de plateau rectangulaire d'environ 400 mm x 200 mm à environ 1000 mm x 500 mm, en particulier une surface de plateau rectangulaire avec des dimensions d'environ 540 mm x environ 360 mm à environ 800 mm x environ 600 mm.

20. Dispositif selon l'une quelconque des revendications 13 à 19,
**caractérisé en ce que**
un système de transport (120) pour un stratifié (10) en pièces découpé ou des pièces de stratifié (10) est présent, avec :
- un magasin (122), qui tient à disposition un stock de pièces de stratifié (10) ;
- un châssis de transport (128) pouvant être déplacé au-dessus du magasin (122), qui soulève et immobilise la pièce de stratifié (10) la plus haute à l'aide de la force d'aspiration ;
- ledit châssis de transport (128) maintenant la pièce de stratifié (10) peut être déplacé sous la cloche à pression (50) adoptant son point mort supérieur et peut y être apposé au niveau de la surface étanche (58) périphérique au niveau de la cloche à pression (50) ; et
- le châssis de transport (58) reposant au niveau de la cloche à pression (50) continue à immobiliser la pièce de stratifié (10) lors de l'abaissement de la cloche à pression (50).

21. Dispositif selon l'une quelconque des revendications 13 à 20,
**caractérisé en ce que**
une ligne de transport (150) pour le substrat 3D (3) à contrecoller est présente :
- avec un rail (152) installé de manière stationnaire au niveau du bac d'outil (60) et équipé d'un système linéaire, le long duquel au moins un chariot (154, 156) peut être déplacé, qui transporte des plaques de transport (155, 157) depuis un poste de chargement (160) vers un poste de maintien (163) et transporte également des plaques de transport (155, 157) depuis un poste de maintien (163) vers un poste de retrait (165) ;
- une plaque de support (168), qui immobilise un substrat 3D (3) à contrecoller ou plusieurs substrats 3D (3) à contrecoller, peut être chargée sur le poste de chargement (160) sur la plaque de transport (155) s'y trouvant ;
- des bras de levage et de pivotement (75) montés au niveau de chariots (74', 74") pouvant être déplacés convoient la plaque de support (168) se trouvant dans le poste de maintien (163) et immobilisant un ou plusieurs substrats 3D (3) à contrecoller depuis le poste de maintien (163) dans une position sous la cloche à pression (50) relevée et les déposent, à l'intérieur d'un tronçon (72), au niveau d'un châssis intermédiaire (70), au niveau du bac d'outil (60), sur une plaque de plateau (82) du plateau (80) adoptant son point mort supérieur ; et
- le produit contrecollé est retiré du poste de retrait (165).

22. Dispositif selon la revendication 21,
**caractérisé en ce que**
la plaque de support (168)
- est constituée d'une matière synthétique stable durable ;
- est revêtue d'un agent de séparation, tel que le TEFLON® ;
- a une surface angulaire, par exemple rectangulaire ; et
- un matériau à attraction magnétique, tel que du fer doux, est présent dans les zones d'angles de ladite surface angulaire.

23. Dispositif selon la revendication 21 ou 22,
**caractérisé en ce que**
des bras de levage et de pivotement (75) servent au transport de la plaque de support (168) immobilisant un ou plusieurs substrats 3D (3) à contrecoller depuis le poste de maintien (163) dans une position sous la cloche à pression (50), au niveau de l'extrémité libre desquels bras de levage et de pivotement un électroaimant (76) activable est installé, qui peut établir un contact avec une zone d'angle de la plaque de support (168) ; et
par l'activation desdits électroaimants (76), la plaque de support (168) est relevée.

24. Dispositif selon l'une quelconque des revendications 13 à 23,
**caractérisé en ce que**
la cloche à pression (50) adoptant son point mort inférieur peut être arrêtée à l'aide de boulons de verrouillage (52', 52", 56', 56") installés au niveau de la cloche à pression (50) et pouvant être ajustés de manière motorisée au niveau de châssis (77', 77") reliés de manière rigide au bac d'outil (60), constitués d'une plaque d'acier massif.

25. Dispositif selon l'une quelconque des revendications 13 à 24,
**caractérisé en ce que**
un ensemble de doubles leviers coudés (130) sert à relever la cloche à pression (50) depuis son point mort inférieur dans son point mort supérieur, lequel ensemble de doubles leviers coudés a deux leviers coudés (131, 133) dotés respectivement d'un entraînement (132, 134) séparé ; et
la cloche à pression (50) peut être pivotée du fait du blocage d'un levier coudé (131) et de l'activation de l'autre levier coudé (133) dans une position de maintenance, dans laquelle la surface étanche (58) périphérique au niveau du bord de la cloche à pression (50) est orientée de manière sensiblement verticale.
